# EUROPÄISCHE PATENTANMELDUNG

(11) **EP 4 800 262 A2**
(43) Veröffentlichungstag der Anmeldung: **02.09.2026**
(21) Anmeldenummer: 26190965.9
(22) Anmeldetag: 06.11.2024
(51) Int. Cl.: F16G 13/06

(54) **SCHALTBARE FAHRRADKETTE MIT EINHEITLICHEN GEKRÖPFTEN KETTENGLIEDERN UND DAMIT KOOPERIERENDE KETTENRADANORDNUNG**

(30) Priorität: 24.11.2023 DE 102023132911; 02.10.2024 DE 102024128669
(62) Dokumentnummer(n) der früheren Anmeldung(en) nach Art. 76 EPÜ: 24211054.2 / 4 571 142
(71) Anmelder: SRAM Deutschland GmbH, 97424 Schweinfurt (DE)
(72) Erfinder: Reinbold, Matthias, 97074 Würzburg (DE); Andres, Sebastian, 91083 Baiersdorf (DE); Nunes dos Santos, Pedro Miguel, 3040-087 Santa Clara Coimbra (PT); Mendes Figueiredo, Luis Miguel, 3040-570 Antanhol (PT); Santos, Joao Carlos Miquelao, 2600-285 Vila Franca de Xira (PT)

(57) **Zusammenfassung**

Eine Fahrradkette (10) mit einer Mehrzahl von Kettengliedern (12), deren Kettenlaschen (24, 26) längs einer Kettenlängsbahn (LB) derart gekröpft ausgebildet und angeordnet sind, dass jedes Kettenglied (12) ein längs der Kettenbreitenachse (BA) breiteres Längsende (14) mit größerer Gliedbreite (aKW) und ein dem breiteren Längsende (14) längs der Kettenlängsbahn (LB) entgegengesetztes schmäleres Längsende (16) mit geringerer Gliedbreite (aKW) aufweist, ist zum Umlegen zwischen zwei längs der Kettenbreitenachse (BA) benachbarten koaxialen Kettenrädern (R11, R12) ausgebildet.

## Beschreibung

Die vorliegende Erfindung betrifft eine Fahrradkette, nachfolgend auch kurz als "Kette" bezeichnet, mit einer Mehrzahl von längs einer virtuellen Kettenlängsbahn aufeinander folgenden Kettengliedern, wobei längs der Kettenlängsbahn unmittelbar aufeinander folgende Kettenglieder um zueinander parallele virtuelle Schwenkachsen relativ zueinander schwenkbar sind, wobei die Schwenkachsen längs einer quer zur Kettenlängsbahn orientierten virtuellen Kettenbreitenachse verlaufen, wobei die beiden längs der Kettenlängsbahn mit Abstand voneinander gelegenen Schwenkachsen eines Kettenglieds eine die Schwenkachsen enthaltende virtuelle Bezugsebene für das Kettenglied definieren, wobei jedes Kettenglied zwei gesondert ausgebildete, einander längs der Kettenbreitenachse gegenüberliegende flächige Kettenlaschen aufweist, wobei die Kettenlaschen ihre größten Abmessungen längs der Kettenlängsbahn und längs einer sowohl quer zur Kettenlängsbahn als auch quer zur Kettenbreitenachse verlaufenden Kettenhöhenachse aufweisen, wobei die Kettenlaschen längs der Kettenlängsbahn derart gekröpft ausgebildet und angeordnet sind, dass jedes Kettenglied ein längs der Kettenbreitenachse breiteres Längsende mit größerer Gliedbreite und ein dem breiteren Längsende längs der Kettenlängsbahn entgegengesetztes schmäleres Längsende mit geringerer Gliedbreite aufweist, wobei zwischen den Kettenlaschen in einem näher bei dem schmäleren Längsende als bei dem breiteren Längsende gelegenen schmäleren Längsendbereich eine Kettenrolle aufgenommen ist, wobei für längs der Kettenlängsbahn aufeinander folgende Kettenglieder gilt, dass jeweils ein schmälerer Längsendbereich eines Kettenglieds in einen näher bei dem breiteren Längsende als bei dem schmäleren Längsende gelegenen breiteren Längsendbereich eines längs der Kettenlängsbahn unmittelbar benachbarten Kettenglieds einragt, sodass die Fahrradkette längs der Kettenlängsbahn aufeinander folgende Kettenrollen aufweist, welche zwischen Kettenlaschen ein und desselben Kettenglieds einmal in dessen schmälerem Längsendbereich und ein weiteres Mal in dessen breiterem Längsendbereich derart angeordnet sind, dass die Kettenlaschen eines Kettenglieds gemeinsam mit den beiden zwischen ihnen angeordneten Kettenrollen einen Zahneingriffsraum zum Eingriff eines Zahns einer Kettenradanordnung einfassen.

Eine derartige Fahrradkette, die im Wesentlichen aus identischen Kettengliedern gebildet ist, ist beispielsweise als schmierungsarme Fahrradkette aus der US 3,332,297 und aus deren Familienmitglied US 3,344,677 bekannt. Zwar nennen diese beiden Druckschriften als ein Entwicklungsziel der dort vorgestellten Fahrradketten deren Tauglichkeit für eine Kooperation mit einem Umwerfermechanismus, jedoch scheint sich diese Tauglichkeit nur auf die Fähigkeit zum Eingriff mit und zum Umlauf um Zahnräder zu beziehen, welche eine für Umwerferrollen typische geringe Zähneanzahl aufweisen. In den beiden Druckschriften ist als kleineres von zwei von der Kette des Standes der Technik umlaufenen Zahnrädern eines mit sieben Zähnen offenbart. Ein mit einer Kette der eingangs beschriebenen Art ausgeführter Schaltvorgang ist in den Druckschriften jedoch nicht offenbart. Es ist auch nicht erkennbar, wie die aus den genannten US-Druckschriften bekannte Fahrradkette bezogen auf die Drehachse eines mit ihr in Eingriff stehenden Zahnrads axial für einen Schaltvorgang verlagert werden könnte, da ein in die Kette eingreifender Zahn sowohl im Bereich seiner vorauseilenden wie auch im Bereich seiner nachlaufenden Zahnflanke jeweils von einer Kettenrolle und von beiderseits der Kettenrolle über die Kettenrolle hinaus radial vorstehenden schmäleren Längsendbereichen der die jeweilige Kettenrolle tragenden Kettenlaschen längs der Kettenbreitenachse nahezu spielfrei eingefasst ist. Die so von Zähnen eines Kettenrads in Eingriff genommene Kette kann nicht axial bezogen auf die Kettenradachse verlagert werden.

Die Kettenlaschen eines Kettengliedes der bekannten Fahrradkette sind in den beiden Längsendbereichen parallel zueinander. Zwischen dem breiteren und dem schmäleren Längsendbereich ist ein Verjüngungsabschnitt ausgebildet, in welchem die längs der Kettenbreitenachse zwischen den aufeinander zu weisenden Innenseiten der Kettenlaschen bzw. Kettenlascheninnenflächen zu messende lichte innere Kettengliedweite von der größeren lichten Kettengliedweite im breiteren Längsendbereich längs der Kettenlängsbahn auf die geringere lichte Kettengliedweite im schmäleren Längsendbereich verringert wird. Der Verjüngungsabschnitt der Kettenlaschen liegt bei Betrachtung des in Kettenglieder der bekannten Kette eingreifenden Zahns etwa in der Längsmitte des Zahns. Der Verjüngungsabschnitt liegt von jeder der beiden endseitigen Zahnflanken längs der Kettenlängsbahn erheblich entfernt. Der Verjüngungsabschnitt der Kettenglieder kann aufgrund dieser Konstruktion dem Zahn keinen axialen Bewegungsspielraum vermitteln.

Eine konstruktiv sehr ähnliche ausgebildete Rollenkette, die allerdings ohne jeglichen Bezug zu einer Nutzung an einem Fahrrad offenbart ist, ist aus der US 9,890,830 B2 bekannt. Auch an dieser Kette ist der oben beschriebene Verjüngungsabschnitt längs der Kettenlängsbahn sehr kurz, sodass auch dieser Verjüngungsabschnitt einem in einen Zahneingriffsraum eingreifenden Zahn keinen axialen Bewegungsspielraum einräumt. Auch an der aus der US 9,890,830 B2 bekannten Kette erstreckt sich der schmälere Längsendbereich eines Kettenglieds längs der Kettenlängsbahn tief in den Zahneingriffsraum hinein und begrenzt so die axiale Beweglichkeit der Kette relativ zum Zahn erheblich.

Aus der US 10,435,112 B2 ist in deren Figur 27 eine modifizierte Fahrradkette singulär gezeigt, welche konstruktiv den vorstehend beschriebenen Fahrradketten im Wesentlichen entspricht.

Eine weitere Fahrradkette mit gekröpften Kettengliedern ist aus der US 2005/0266948 A1 bekannt. Diese Druckschrift, welche die Fahrradketten nur grobschematisch in Handskizzen zeigt, behauptet als einen Vorteil derartiger Fahrradketten deren höhere Festigkeit, wofür die Druckschrift jedoch keine Begründung angibt. Ein weiterer Vorteil derartiger Ketten liege in der besseren Anpassbarkeit der Kettenlänge an den jeweiligen Antriebsstrang, da aufgrund der im Wesentlichen gleichen Ausbildung von längs der Kettenlängsbahn unmittelbar aufeinander folgenden Kettengliedern der Abstand zwischen zwei unmittelbar aufeinanderfolgenden Rollenachsen, also im Grunde die Kettenteilung, das minimale Inkrement der Kettenlänge bildet, während herkömmliche Fahrradketten mit alternierend aufeinander folgenden Innenlaschen und Außenlaschen jeweils nur um den doppelten Abstand, also um die doppelte Kettenteilung, als minimalem Inkrementwert verkürzt oder verlängert werden können.

Schließlich ist eine Fahrradkette mit identischen gekröpften Kettengliedern aus der US 2011/0098146 A1 bekannt. Allerdings unterscheidet sich diese Fahrradkette von den vorstehend genannten und von der eingangs beschriebenen dadurch, dass die Kettenlaschen eines Kettenglieds als Abschnitte eines einstückig zusammenhängenden Biegebauteils ausgebildet sind, was die Beweglichkeit der Kette erheblich einschränkt und ihre unerwünschte Neigung verstärkt, Schmutz aufzunehmen und mitzuführen.

Grundsätzlich sind außerdem herkömmliche Fahrradketten mit längs der Kettenlängsbahn alternierend aufeinander folgenden Innen- und Außenlaschen bekannt. Diese herkömmlichen Fahrradketten zeichnen sich durch ihre hervorragende Schaltbarkeit zwischen koaxialen Kettenrädern aus. Diese Schaltbarkeit rührt im Wesentlichen aus der Konstruktion herkömmlicher Fahrradketten, bei welchen Außenlaschen-Kettenglieder einen Zahneingriffsraum mit größerer lichter innerer Kettengliedweite aufweisen und somit beim Umlegen der Fahrradkette auf ein Ziel-Kettenrad den ersten Eingriff eines Zahns des Ziel-Kettenrads besonders gut gestatten, während Innenlaschen-Kettenglieder einen Zahneingriffsraum mit geringerer lichter innerer Kettengliedweite und vor allen Dingen mit einer geringeren äußeren Kettengliedweite aufweisen, sodass sie beim Umlegen der Fahrradkette auf eine Ziel-Kettenrad aufgrund des Längsabstands zwischen zwei längs der Kettenlängsbahn aufeinander folgenden Außenlaschen eine axiale Annäherung an den Zahnkranz des Ziel-Kettenrads gestatten. Dabei erfolgt zwar kein Eingriff eines Zahns des Ziel-Kettenrads in das Innenlaschen-Kettenglied, jedoch wird ein erster "fangender" Eingriff eines Zahns des Ziel-Kettenrads in das derart axial an den Zahn angenäherte Außenlaschen-Kettenglied erheblich erleichtert.

Da an Fahrradketten der eingangs genannten Art, deren Kettenglieder, gegebenenfalls mit Ausnahme eines als Kettenschloss dienenden Kettenglieds, im Wesentlichen identisch ausgebildet sind, der Zahneingriffsraum von längs der Kettenlängsbahn aufeinander folgenden Kettengliedern ebenfalls im Wesentlichen identisch ausgebildet ist, sind die von herkömmlichen Fahrradketten bekannten schaltfördernden Merkmale, wie sie längs der Kettenlängsbahn alternierend aufeinander folgende Außenlaschen- und Innenlaschen-Kettenglieder bereitstellen, an Fahrradketten der eingangs genannten Art nicht vorhanden und nicht nutzbar.

Der vorliegenden Erfindung liegt die Aufgabe zugrunde, die eingangs genannte Fahrradkette zu verbessern und in einem mit herkömmlichen Fahrradketten vergleichbaren Funktionsumfang nutzbar zu machen.

Ganz grundsätzlich löst die vorliegende Erfindung diese Aufgabe an einer Fahrradkette der eingangs genannten Art dadurch, dass die Fahrradkette zum Umlegen zwischen zwei längs der Kettenbreitenachse benachbarten koaxialen Kettenrädern ausgebildet ist.

Diese Ausbildung wird nachfolgend an verschiedenen Aspekten der vorliegend diskutierten Fahrradkette erläutert.

Grundsätzlich reicht es aus, dass die drei zur Beschreibung der Fahrradkette herangezogenen Koordinaten: Kettenlängsbahn, Kettenbreitenachse und Kettenhöhenachse jeweils paarweise quer zueinander verlaufen. Im Regelfall spannen die genannten Koordinaten ein kartesisches Koordinatensystem auf, in welchem die Kettenlängsbahn, die Kettenbreitenachse und die Kettenhöhenachse lokal paarweise orthogonal zueinander orientiert sind.

Die Fahrradkette kann, für einen Antriebsbetrieb zwar unbrauchbar, jedoch als Fahrradkette ohne weiteres erkennbar, als offene Fahrradkette vorliegen oder als betriebsbereite geschlossen umlaufende Fahrradkette. Im Falle der geschlossen umlaufenden Fahrradkette ist diese in der Regel um eine zur Kettenbreitenachse parallele Krümmungsachse gekrümmt. Dies hat zur Folge, dass die Kettenbreitenachse für alle Kettenglieder die gleiche Richtung im Raum aufweist, dass jedoch die Kettenlängsbahn abhängig vom Ort längs der Fahrradkette aufgrund der lokal unterschiedlichen Kettenkrümmung eine unterschiedliche Orientierung im Raum hat bzw. haben kann. Die Kettenlängsbahn verläuft jedoch stets quer, bevorzugt orthogonal, zur Kettenbreitenachse. Da die Kettenhöhenachse quer, vorzugsweise orthogonal, sowohl zur Kettenbreitenachse als auch zur Kettenlängsbahn orientiert ist, ist auch die absolute Orientierung der Kettenhöhenachse im Raum vom Ort der Betrachtung der Fahrradkette längs der Kettenlängsbahn abhängig.

Bei einer mit einem Kettenrad in Eingriff stehenden Fahrradkette verläuft die Kettenhöhenachse im Eingriffsbereich mit dem Kettenrad in der Regel in radialer Richtung bezüglich der Drehachse des eingreifenden Kettenrads und verläuft die Kettenlängsbahn im Eingriffsbereich mit dem Kettenrad in Umfangsrichtung um dessen Drehachse bzw. tangential zu dieser.

In der vorliegenden Anmeldung wird der Begriff "Kettenrad" als Oberbegriff für ein zum kämmenden Eingriff mit der Fahrradkette ausgebildetes Zahnrad verwendet. In einer Fahrrad-Antriebsanordnung sind üblicherweise als Kettenräder wenigstens ein vorderes, unmittelbar mit Tretkurbeln gekoppeltes Kettenblatt und wenigstens ein hinteres zur Drehmomentübertragung mit dem koaxial angeordneten Hinterrad verbundenes Kettenritzel oder Ritzel vorhanden.

Sofern nichts Abweichendes ausgesagt ist, beziehen sich die Angaben "axial", "radial", "längs einer Umfangsbahn um" in der vorliegenden Anmeldung auf eine Anordnungsachse einer mit der Kette in Eingriff stehenden Kettenradanordnung.

Zur Bereitstellung bzw. zur Verbesserung der Schaltfähigkeit der vorliegend diskutierten Fahrradkette durch Umlegen zwischen zwei koaxialen Kettenrädern kann die Fahrradkette derart ausgebildet sein, dass für eine Mehrzahl der Kettenglieder, vorzugsweise für alle Kettenglieder, gilt, dass jede Kettenlasche eines Kettenglieds einen näher beim breiteren Längsende gelegenen ersten Kröpfungsbereich und einen näher beim schmäleren Längsende gelegenen zweiten Kröpfungsbereich aufweist. Durch diese Kröpfungsbereiche wird ähnlich wie im Stand der Technik bewirkt, dass der schmälere Längsendbereich längs der Kettenlängsbahn in den breiteren Längsendbereich überführt wird und umgekehrt.

Dabei nimmt die längs der Kettenbreitenachse zwischen den Kettenlaschen zu messende lichte innere Kettengliedweite bei Fortschreiten längs der Kettenlängsbahn vom ersten zum zweiten Kröpfungsbereich ab. Bevorzugt ändert sich die lichte innere Kettengliedweite bei Fortschreiten längs der Kettenlängsbahn nur zwischen dem ersten und dem zweiten Kröpfungsbereich, während die aufeinander zu weisenden Innenflächen der beiden Längsendbereiche: schmälerer Längsendbereich und breiterer Längsendbereich, bevorzugt zueinander parallel ausgebildet sind. Der Längenbereich zwischen dem ersten und dem zweiten Kröpfungsbereich bildet somit einen Verjüngungsabschnitt des Kettenglieds.

Sofern sich jedoch die lichte innere Kettengliedweite auch im Bereich des schmäleren Längsendbereichs oder/und des breiteren Längsendbereichs mit Fortschreiten längs der Kettenlängsbahn ändert, ist bevorzugt die auf eine Längeneinheit längs der Kettenlängsbahn bezogene Änderung der lichten inneren Kettengliedweite im Längenbereich zwischen dem ersten und dem zweiten Kröpfungsbereich größer als im schmäleren oder/und im breiteren Längsendbereich. Die auf eine Längeneinheit längs der Kettenlängsbahn bezogene Änderung der lichten inneren Kettengliedweite kann als Längengradient der lichten inneren Kettengliedweite verstanden werden.

Grundsätzlich gilt, dass die lichte innere Kettengliedweite sich längs der Kettenlängsbahn zwischen dem ersten und dem zweiten Kröpfungsbereich bevorzugt stärker ändert als im Längsbereich zwischen dem breiteren Längsende und dem ersten Kröpfungsbereich oder/und zwischen dem schmäleren Längsende und dem zweiten Kröpfungsbereich.

Da es vorliegend um den Längengradienten der lichten inneren Kettengliedweite geht, bleiben mit der Kettengliedweite nicht im Zusammenhang stehende Formationen an der Innenseite von Kettenlaschen, wie beispielsweise ein bevorzugt einstückig an einer Innenseite einer Kettenlasche ausgeformter Kragen als Aufnahme einer Kettenrolle bei der Ermittlung der lichten inneren Kettengliedweite außer Betracht.

Die vorstehend gemachten Aussagen zur Änderung der lichten inneren Kettengliedweite der Mehrzahl der Kettenglieder, vorzugsweise aller Kettenglieder, bei Fortschreiten längs der Kettenlängsbahn gelten im Zweifel längs der Bezugsebene, vorzugsweise auch beiderseits der Bezugsebene, besonders bevorzugt über die gesamte längs der Kettenhöhenachse zu messenden Kettengliedhöhe.

Um der Fahrradkette an einem in sie bzw. in einen Zahneingriffsraum eingreifenden Kettenradzahn eine für einen Schaltvorgang vorteilhaftes Bewegungsspiel zu ermöglichen, unterscheidet sich bevorzugt der Abstand des ersten und des zweiten Kröpfungsbereiches einer Kettenlasche wenigstens in der Kettenlascheninnenfläche voneinander vom Radius der Kettenrollen wenigstens in der virtuellen Bezugsebene um nicht mehr als 15 %, vorzugsweise um nicht mehr als 10 %, besonders bevorzugt um nicht mehr als 7 %, bezogen auf den Radius der Kettenrollen. Dies stellt in der Regel sicher, dass ein in den Zahneingriffsraum eingreifender Kettenradzahn nur mit seiner lasttragenden Flanke an einer Kettenrolle der Kette anliegt, während seine von der lasttragenden Flanke abgewandte, entgegengesetzte Flanke mit Abstand von der ihr nächstgelegenen Kettenrolle angeordnet ist und dieser gegenüberliegt. Die genannte Abmessungsbeziehung gilt bevorzugt für beide Kettenlaschen eines Kettenglieds. Die Abmessungsbeziehung gilt ebenso bevorzugt für eine Mehrzahl der Kettenglieder, vorzugsweise für alle Kettenglieder.

Bevorzugt weisen die Kettenlaschen nur den ersten und den zweiten Kröpfungsbereich auf und keine weiteren Kröpfungsbereiche. Ebenso bevorzugt nimmt die lichte innere Kettengliedweite oder/und die längs der Kettenbreitenachse über die Außenflächen der Kettenlaschen hinweg zu messende äußere Breitenabmessung eines Kettenglieds längs der Kettenlängsbahn vom breiteren Längsende zum ersten Kröpfungsbereich oder/und vom zweiten Kröpfungsbereich zum schmäleren Längsende in wenigstens einem Höhenabschnitt längs der Kettenhöhenachse nicht zu. Vielmehr ist die lichte innere Kettengliedweite oder/und die äußere Breitenabmessung eines Kettenglieds in den genannten Längsabschnitten längs der Kettenlängsbahn in wenigstens dem Höhenabschnitt, vorzugsweise über die gesamte Kettenhöhe, entweder konstant oder sie nimmt ab. Dies gilt insbesondere für die lichte innere Kettengliedweite unter Vernachlässigung der oben genannten Formationen. Dies gilt, wie oben bereits gesagt, für eine Mehrzahl von Kettengliedern, vorzugsweise für alle Kettenglieder.

Die Kröpfungssinne von erstem und zweitem Kröpfungsbereich sind zur Erzielung der gewünschten Gestalt einer Kettenlasche bevorzugt einander entgegengesetzt, d. h. bei Betrachtung einer Außenseite einer Kettenlasche längs der Kettenbreitenachse ist im ersten Kröpfungsbereich eine konvexe Kröpfung ausgebildet und ist im zweiten Kröpfungsbereich eine konkave Kröpfung ausgebildet.

Im Gegensatz zu herkömmlichen Fahrradketten mit längs der Kettenlängsbahn alternierend aufeinander folgenden Außenlaschen-Kettengliedern und Innenlaschen-Kettengliedern ist die Mehrzahl von Kettengliedern, sind bevorzugt alle Kettenglieder, der vorliegend diskutierten Fahrradkette im Wesentlichen identisch ausgebildet, sodass grundsätzlich keine Möglichkeit besteht, große und kleine Zahneingriffsräume bereitzustellen, von welchen die großen Zahneingriffsräume der Außenlaschen-Kettenglieder ein Fangen der Kette durch das Ziel-Kettenrad erleichtern und von welchen die Innenlaschen-Kettenglieder mit ihren kleinen Zahneingriffsräumen zwar einen sicheren kämmenden Eingriff mit einem Kettenrad ermöglichen und ansonsten während eines Schaltvorgangs eine axiale Annäherung an das Ziel-Kettenrad gestatten, um das Fangen der Kette an einem Außenlaschen-Kettenglied vorzubereiten.

Um für die vorliegend diskutierte Fahrradkette relativ zu einem Kettenradzahn eine bezogen auf die Drehachse des den Kettenradzahn tragenden Kettenrads axiale Bewegungsmöglichkeit innerhalb des Zahneingriffsraums zu schaffen, das ist in der Regel eine Relativbewegung eines Kettenglieds relativ zum Kettenradzahn längs der Kettenbreitenachse, ist gemäß einer ersten bevorzugten Weiterbildung der vorliegenden Erfindung vorgesehen, dass der längs der Kettenbreitenachse von den Kettenlaschen eines Kettenglieds und längs der Kettenlängsachse von den zwischen den Kettenlaschen des Kettenglieds angeordneten Kettenrollen eingefasste Zahneingriffsraum in der Bezugsebene als Schnittebene einen trapezförmigen Querschnitt aufweist. Von diesem trapezförmigen Querschnitt bilden die Mantelflächen der Kettenrollen die parallelen Trapezseiten und bilden die längs der Kettenbreitenachse aufeinander zu weisenden Kettenlascheninnenflächen die aufeinander zu geneigten Trapezseiten. Auf der breiteren der beiden parallelen Trapezseiten liegt beiderseits der Kettenrolle je ein Längsende einer Kettenlasche. Die Längsenden der Kettenlaschen liegen, wie unten näher beschrieben ist, längs der Kettenlängsbahn so nahe bei der Mantelfläche der Kettenrolle, dass sie den von der Kettenrollen-Mantelfläche gebildeten Abschnitt der breiteren der beiden parallelen Trapezseiten zu den nächstgelegenen Kettenlascheninnenflächen längs der Kettenbreitenachse gleichsam verlängern. An der schmäleren der beiden parallelen Trapezseiten befindet sich wenigstens in der Bezugsebene, vorzugsweise auch in mit Abstand von der Bezugsebene zur Bezugsebene parallelen weiteren Betrachtungsebenen, auf den aufeinander zu weisenden Innenseiten der Kettenlaschen der Übergang zwischen dem schmäleren Längsendbereich und dem Verjüngungsbereich längs der Kettenlängsbahn bevorzugt am Ort der Mantelfläche der zwischen dem schmäleren Längsendbereich gelegenen Kettenrolle oder zumindest um nicht mehr als 5 %, vorzugsweise nicht mehr als 3 %, des Radius dieser Kettenrolle von der Mantelfläche entfernt. Dadurch nimmt die lichte Weite zwischen den Kettenlaschen möglichst unmittelbar ausgehend von der Mantelfläche der Kettenrolle des Kettenglieds im schmäleren Längsendbereich längs der Kettenlängsbahn zu der zwischen den Kettenlaschen im breiteren Längsendbereich des Kettenglieds aufgenommenen Kettenrolle des folgenden Kettenglieds hin zu.

Aufgrund der gekröpften Gestalt des Kettenglieds mit einem schmäleren und einem breiteren Längsende sind unterschiedliche lokale Bewegungsräume der Fahrradkette bzw. eines Kettenglieds, relativ zu einem in sie eingreifenden Zahn längs der Kettenbreitenachse an den beiden unterschiedlichen Zahnflanken: vorauseilende und nachlaufende Zahnflanke, nahezu unvermeidlich. Durch die trapezförmige Gestalt im Bereich der Bezugsebene kann jedoch das Kettenglied und damit die Fahrradkette im Bereich wenigstens einer der beiden Zahnflanken eines in sie eingreifenden Kettenradzahns längs der Kettenbreitenachse bewegt oder um eine zur Kettenhöhenachse parallele Schwenkachse geschwenkt werden. Die Möglichkeit, die Fahrradkette um eine zur Kettenhöhenachse parallele Schwenkachse zu schwenken, das ist eine zur radialen Erstreckungsrichtung des in die Kette eingreifenden Zahns parallele Schwenkachse, bedeutet eine Möglichkeit, die Fahrradkette relativ zu den jeweiligen Anordnungsebenen von einander benachbarten koaxialen Zahnkränzen zu verschwenken und so die Kette in einer Verbindungsstrecke anzuordnen, welche zwei unterschiedlich große koaxiale Kettenräder einer Kettenradanordnung miteinander verbindet. Dies ist eine sehr vorteilhafte Eigenschaft, welche die Schaltbereitschaft der vorliegend diskutierten Fahrradkette erheblich erhöht.

Gemäß einer zweiten bevorzugten Weiterbildung der vorliegenden Erfindung kann die bezogen auf die Drehachse des den Kettenradzahn tragenden Kettenrads axiale Bewegungsmöglichkeit innerhalb des Zahneingriffsraums dadurch bereitgestellt sein, dass sowohl der erste Kröpfungsbereich als auch der zweite Kröpfungsbereich eines Kettenglieds wenigstens in der Bezugsebene näher beim schmäleren Längsende als beim breiteren Längsende des Kettenglieds gelegen sind. Mit anderen Worten können sowohl der erste Kröpfungsbereich als auch der zweite Kröpfungsbereich eines Kettenglieds wenigstens in der Bezugsebene näher bei einer den schmäleren Längsendbereich durchsetzenden Kettenrollenachse als bei einer den breiteren Längsendbereich durchsetzenden Kettenrollenachse gelegen sein. Auch für diese Ausführungsform gilt bevorzugt, dass wenigstens in der Bezugsebene, vorzugsweise auch in den oben genannten weiteren parallelen Betrachtungsebenen, an den aufeinander zu weisenden Innenseiten der Kettenlaschen sich der Übergang zwischen dem schmäleren Längsendbereich und dem Verjüngungsbereich längs der Kettenlängsbahn bevorzugt am Ort der Mantelfläche der zwischen dem schmäleren Längsendbereich gelegenen Kettenrolle oder zumindest nicht um mehr als 5 %, vorzugsweise nicht mehr als 3 %, des Radius dieser Kettenrolle von der Mantelfläche entfernt befindet.

Der erste Kröpfungsbereich als der Übergang zwischen dem Verjüngungsbereich und dem breiteren Längsendbereich liegt an den aufeinander zu weisenden Innenseiten der Kettenlaschen des Kettenglieds der zweiten Ausführungsform wenigstens in der Bezugsebene, vorzugsweise auch in den oben genannten weiteren zur Bezugsebene parallelen Betrachtungsebenen, näher bei der im schmäleren Längsendbereich gelegenen Kettenrolle des Kettenglieds als bei der im breiteren Längsendbereich aufgenommenen Kettenrolle des längs der Kettenlängsbahn folgenden Kettenrolle. So kann der Verjüngungsbereich kurz gehalten werden, wodurch der Zahneingriffsraum wenigstens in der Bezugsebene über wenigstens 50 %, vorzugsweise über wenigstens 60 %, des längs der Kettenlängsbahn zu messenden Abstands zwischen den Mantelflächen unmittelbar aufeinander folgender Kettenrollen eine längs der Kettenbreitenachse zu messende lichte Weite aufweisen kann, welche der lichten Weite zwischen den Kettenlaschen im breiteren Längsendbereich entspricht.

Die beiden genannten bevorzugten Ausführungsformen der Kettenglieder stellen jeweils einen Zahneingriffsraum mit im Vergleich zum Stand der Technik größerer Querschnittsfläche in der Bezugsebene oder sogar mit größerem Volumen bereit. Die Führungseigenschaften einer aus derartigen Kettengliedern gebildeten Fahrradkette ist gegenüber den aus dem eingangs zitierten Stand der Technik bekannten gekröpften Fahrradketten reduziert, was normalerweise unerwünscht ist, was aber bei der vorliegend diskutierten Fahrradkette mit gekröpften Kettengliedern deren Schaltbarkeit zwischen benachbarten Kettenrädern durch einen Umwerfer schafft.

Eine unerwünschte Beschränkung des Bewegungsraums der Fahrradkette relativ zu einem in den Zahneingriffsraum eines ihrer Kettenglieder eingreifenden Kettenradzahns kann auch dadurch vermieden werden, dass die Kettenlaschen zumindest in der Bezugsebene, insbesondere in einem die Bezugsebene enthaltenden, sich längs der Kettenhöhenachse erstreckenden Höhenabschnitt und zumindest am schmäleren Längsende die dort angeordnete Kettenrolle längs der Kettenlängsbahn um nicht mehr als 5 % des Radius der Kettenrolle überragen. Je weniger die Kettenlaschen die Kettenrolle längs der Kettenlängsbahn überragen, desto weniger ragen die Kettenlaschen in den Zahneingriffsraum hinein und beanspruchen einen Bereich desselben. Bauraum, welcher bereits von Kettenlaschen belegt ist, kann nicht mehr von einem Kettenradzahn belegt werden. Bevorzugt entspricht die Situation am breiteren Längsende eines Kettenglieds hinsichtlich des Überragens der Kettenlaschen über die im breiteren Längsendbereich angeordnete Kettenrolle hinaus der Situation des Überragens am schmäleren Längsende. Da bei der erfindungsgemäßen Fahrradkette jedoch die schmäleren Längsendbereiche eines Kettenglieds längs der Kettenlängsbahn in die breiteren Längsendbereiche des unmittelbar benachbarten Kettenglieds einragen, ist ein Vorstehen der Kettenlaschen längs der Kettenlängsbahn über die Kettenrollen hinaus am schmäleren Längsende von wesentlich größerem Einfluss auf die Gestaltung und die Größe des Zahneingriffsraums als ein Vorstehen der Kettenlaschen über die Kettenrollen hinaus am breiteren Längsende. Bevorzugt überragen die Kettenlaschen einer Mehrzahl von Kettengliedern, vorzugsweise aller Kettenglieder, in einem sich längs der Kettenhöhenachse erstreckenden Höhenabschnitt, insbesondere in einem solchen die Bezugsebene enthaltenden Höhenabschnitt, am schmäleren Längsende die dort aufgenommene Kettenrolle aus den oben genannten Gründen um nicht mehr als 3 %, stärker bevorzugt überhaupt nicht, d. h. die Kettenlaschen schließen bündig mit der Kettenrolle ab.

Am stärksten bevorzugt bleiben die Kettenlaschen wenigstens in der Bezugsebene und wenigstens am schmäleren Längsende wenigstens abschnittsweise hinter der Mantelfläche der im schmäleren Längsendbereich aufgenommenen Kettenrolle zurück. Dies bedeutet, dass dann die Mantelfläche der Kettenrolle wenigstens abschnittsweise einen Rand der Kettenlasche im Bereich des schmäleren Längsendbereichs überragt. Bevorzugt gilt dies wenigstens für den oben genannten die Bezugsebene enthaltenden Höhenabschnitt. Dadurch kann vorteilhaft sichergestellt werden, dass Kraft zwischen einem in den Zahneingriffsraum eines Kettenglieds eingreifenden Kettenradzahn und einem den Zahneingriffsraum begrenzenden schmäleren Längsende eines Kettenglieds nur durch einen Anlageeingriff zwischen dem eingreifenden Zahn und der Kettenrolle übertragen wird, nicht jedoch durch einen Anlageeingriff zwischen dem eingreifenden Zahn und einem Rand der Kettenlasche. Dies gilt besonders bevorzugt für das schmälere Längsende eines Kettenglieds, welches in einen breiteren Längsendbereich eines anderen Kettenglieds einragt. Dieses schmälere Längsende begrenzt den längs der Kettenlängsbahn auf das Kettenglied mit dem schmäleren Längsende folgenden Zahneingriffsbereich, welcher zwischen den Kettenlaschen des Kettenglieds mit dem breiteren Längsendbereich gebildet ist. Um ausreichend Führung für die Drehbewegung der Kettenrolle am schmäleren Längsendbereich um ihre Kettenrollenachse bereitstellen zu können, überragt die Kettenrolle das schmälere Längsende der sie tragenden Kettenlaschen wenigstens in dem genannten Höhenabschnitt bevorzugt um nicht mehr als 5 % des Kettenrollenradius, optional um nicht mehr als 3 %.

Ein Überragen der Kettenlaschen-Längsenden durch die Kettenrolle oder umgekehrt mit einem Überragungsbetrag von nicht mehr als 5 % des Kettenrollenradius wird im Sinne der vorliegenden Anmeldung als so gering angesehen, dass die Längsenden der Kettenlaschen in der Bezugsebene die Mantellinie der Mantelfläche der Kettenrolle zur Bildung eines trapezförmigen Querschnitts des Zahneingriffsbereichs lediglich verlängern.

Für einen Schaltvorgang ist das Herstellen eines Eingriffs eines Kettenradzahns des Ziel-Kettenrads, auf welches die Kette im Schaltvorgang umgelegt werden soll, von herausragender Bedeutung. Dabei ist es hilfreich, wenn der Kettenradzahn des Ziel-Kettenrads bei seiner Bewegung in den Zahneingriffsraum eines Kettenglieds hinein durch die körperliche Ausbildung des Kettenglieds unterstützt wird. Eine solche Unterstützung kann konstruktiv dadurch erreicht werden, dass für die Kettenlaschen wenigstens einer Mehrzahl der Kettenglieder, vorzugsweise aller Kettenglieder, gilt, dass ein längs der Kettenlängsbahn zu messender Längsabstand des ersten und des zweiten Kröpfungsbereiches einer Kettenlasche voneinander wenigstens in der Kettenlascheninnenfläche in wenigstens einer zur Bezugsebene parallelen virtuellen Betrachtungsebene größer ist als in der Bezugsebene. Die Betrachtungsebene liegt dabei aufgrund ihres Abstands von der Bezugsebene, welche durch die Schwenkachsen miteinander gelenkig verbundener Kettenglieder definiert ist, näher an einem längs der Kettenlängsbahn verlaufenden Längsrand des jeweiligen Kettenglieds als die Bezugsebene. Der erste und der zweite Kröpfungsbereich bilden üblicherweise wenigstens auf den Kettenlascheninnenflächen eine auch längs der Kettenhöhenachse verlaufende körperliche Stufe bzw. körperlichen Knick, welche bzw. welcher der Führung einer Relativbewegung des jeweiligen Kettenglieds längs der Kettenhöhenachse relativ zu einem in seinen Zahneingriffsraum eintretenden Zahn dienen kann. Durch Ausgestaltung des ersten und des zweiten Kröpfungsbereiches derart, dass ihr Abstand in der geschilderten Betrachtungsebene größer ist als in der Bezugsebene kann sich der Raum zwischen den durch die Kröpfungsbereiche gebildeten Stufen bzw. Knicken vom Längsrand des Kettengliedes zu seiner Bezugsebene hin verjüngen und gleichsam als Einführhilfe für einen in den Zahneingriffsraum eintretenden Zahn wirken.

Idealerweise sind die virtuellen Schwenkachsen von längs der Kettenlängsbahn unmittelbar aufeinander folgenden Kettengliedern auch die virtuellen Drehachsen der zwischen den Kettenlaschen eines Kettenglieds angeordneten Kettenrollen.

Grundsätzlich reicht es aus, wenn nur ein Kröpfungsbereich wenigstens in einer Kettenlascheninnenfläche einen Verlauf sowohl mit einer Komponente längs der Kettenhöhenachse als auch mit einer Komponente längs der Kettenlängsbahn hat, während der andere Kröpfungsbereich wie im Stand der Technik im Wesentlichen parallel zur Kettenhöhenachse verlaufen kann. Eine stärkere Einführhilfe können die Kettenlaschen jedoch dann bieten, wenn ihre beiden Kröpfungsbereiche wenigstens in der Kettenlascheninnenfläche jeweils eine Komponente längs der Kettenlängsbahn und eine Komponente längs der Kettenhöhenachse aufweisen.

Aufgrund der zu einem schmäleren und einem breiteren Längsende führenden Kröpfungen können die gekröpften Kettenglieder nicht symmetrisch bezüglich einer zur Kettenlängsbahn orthogonalen Symmetrieebene ausgebildet sein. Zur Erzielung einer guten Unterstützung einer Einführbewegung eines Kettenradzahns längs der Kettenhöhenachse in den Zahneingriffsraum kann jedoch wenigstens der in der Kettenlascheninnenfläche einer Kettenlasche gelegene Anteil des ersten und des zweiten Kröpfungsbereichs bei Betrachtung einer Projektion der beiden Kröpfungsbereiche längs der Kettenbreitenachse auf eine zur Kettenbreitenachse orthogonale Projektionsebene bezüglich der genannten zur Kettenlängsbahn orthogonalen Symmetrieebene wenigstens abschnittsweise, vorzugsweise über einen Großteil der Erstreckungslänge der genannten Anteile, besonders bevorzugt vollständig spiegelsymmetrisch ausgebildet sein.

Die Fahrradkette ist bevorzugt bezüglich einer Symmetrieebene, welche orthogonal zur Kettenbreitenachse orientiert ist, spiegelsymmetrisch ausgebildet.

Die Fahrradkette kann außerdem bezüglich der Bezugsebene spiegelsymmetrisch ausgebildet sein. Dies muss jedoch nicht so sein. Dann, wenn die Fahrradkette bzw. ihre Kettenglieder bezüglich der Bezugsebene nicht spiegelsymmetrisch ausgebildet ist und die Fahrradkette ausgehend von ihrem offenen gestreckten Zustand nur in einer einzigen möglichen Schließbewegung zur Bildung einer funktionierenden geschlossen umlaufenden Fahrradkette bestimmt ist, liegt die Betrachtungsebene bevorzugt auf der dem radial inneren Rand der geschlossen umlaufenden Fahrradkette zugewandten Seite der Bezugsebene, da nur an diesem radial inneren Rand der Kettenradzahn in den Zahnzwischenraum eintritt und aus diesem wieder austritt.

Was vorstehend nur für eine einzige Betrachtungsebene dargelegt ist, gilt zur Erzielung der gewünschten Unterstützung der Bewegung eines Kettenradzahns in den Zahneingriffsraum hinein bevorzugt für eine Mehrzahl von sowohl zueinander als auch zur Bezugsebene parallelen Betrachtungsebenen, und zwar bevorzugt derart, dass der Längsabstand des ersten und des zweiten Kröpfungsbereiches voneinander wenigstens in der Kettenlascheninnenfläche einer Kettenlasche, vorzugsweise beider Kettenlaschen, eines Kettengliedes in einer Mehrzahl von zur Bezugsebene parallelen virtuellen Betrachtungsebenen größer ist als in der Bezugsebene, wobei der Längsabstand mit zunehmender Entfernung der Betrachtungsebenen von der Bezugsebene größer wird. Mit zunehmender Entfernung der Betrachtungsebenen von der Bezugsebene nähern sich die Betrachtungsebenen einem längs der Kettenlängsbahn verlaufenden Längsrand der Fahrradkette an, wo der Eingriff des Kettenradzahns mit der Fahrradkette beginnt.

Grundsätzlich kann der zu dem Längsrand der Fahrradkette hin größer werdende Abstand längs der Kettenlängsbahn zwischen dem ersten und dem zweiten Kröpfungsbereich wenigstens auf der Kettenlascheninnenfläche einer Kettenlasche durch einen geradlinigen Kröpfungsbereich aus erstem und zweiten Kröpfungsbereich erzielt werden, welcher lediglich nicht-parallel zur Kettenhöhenachse verläuft. Mit Rücksicht darauf, dass sich zwischen den Kettenlaschen ein und desselben Kettengliedes Kettenrollen befinden, welche ebenfalls die Einführung eines Kettenradzahns in den Zahneingriffsraum durch ihre zylindrischen Mantelflächen unterstützen, ist bevorzugt wenigstens ein Kröpfungsbereich aus erstem und zweitem Kröpfungsbereich wenigstens auf dem auf einer Seite der Bezugsebene gelegenen Kettenlaschenabschnitt wenigstens auf der Kettenlascheninnenfläche, optional auch auf der Kettenlaschenaußenfläche, wenigstens abschnittsweise gekrümmt verlaufend ausgebildet. Eine die Krümmung des wenigstens einen Kröpfungsbereichs bestimmende Krümmungsachse verläuft bevorzugt parallel zur Kettenbreitenachse oder ist bezüglich dieser um nicht mehr als 20°, vorzugsweise um nicht mehr als 10° geneigt.

Für die oben beschriebene zweite Ausführungsform eines gekröpften Kettenglieds ist es ausreichend, wenn nur der näher bei der Kettenrolle im schmäleren Längsendbereich gelegene zweite Kröpfungsbereich wenigstens auf der Kettenlascheninnenfläche, optional auch auf der Kettenlaschenaußenfläche, gemäß obiger Beschreibung gekrümmt verlaufend ausgebildet ist.

Zur Erzielung einer noch größeren Trichterwirkung der Kröpfungsbereiche durch einen mit Abstand von der Bezugsebene noch stärker zunehmenden Abstand zwischen erstem und zweiten Kröpfungsbereich sind besonders bevorzugt beide Kröpfungsbereiche wenigstens auf der Kettenlascheninnenfläche wenigstens abschnittsweise gekrümmt verlaufend ausgebildet. Dabei ist eine Krümmung bevorzugt, welche den jeweiligen Kröpfungsbereich mit zunehmender Entfernung von der Bezugsebene, insbesondere zu dem radial inneren Längsrand der Fahrradkette hin, wenigstens auf der Kettenlascheninnenfläche von einer zur Kettenlängsbahn orthogonalen Mittelebene eines Kettengliedes weg krümmt. Bevorzugt sind die Kettenlaschen zur Ausbildung wenigstens eines gekrümmten Kröpfungsbereichs unter Beteiligung eines Prägevorgangs hergestellt, welcher die Ausbildung gekrümmter Kröpfungsbereiche einfach ermöglicht. Unter Verwendung eines solchen Prägevorgangs kann wenigstens ein Kröpfungsbereich auch auf der Kettenlascheninnenfläche gekrümmt ausgebildet sein.

Grundsätzlich kann für eine Mehrzahl von Kettenlaschen, vorzugsweise für alle Kettenlaschen, der Fahrradkette gelten, dass die Kettenlaschen des Kettenglieds spiegelsymmetrisch bezüglich der Bezugsebene ausgebildet sind. In einem Längsmittenbereich der Kettenlaschen und des Kettenglieds kann die Höhenabmessung der Kettenlaschen längs der Kettenhöhenachse gegenüber Längsabschnitten, welche die Schwenkachsen benachbarter Kettenglieder umfassen, verringert sein, etwa um eine Bewegung der Kettenlasche beim Schalten radial außen über einen Zahnkopf zu erleichtern. Bei einer bezüglich der Bezugsebene spiegelsymmetrischen Ausgestaltung der Kettenglieder, insbesondere der gesamten Fahrradkette, ist eine fehlerhafte Anordnung der Fahrradkette an einem Antriebsstrang mit zwei Kettenrädern oder auch nur an einem Kettenrad nahezu unmöglich.

Zur Erzielung einer höheren Zugfestigkeit bei gleichzeitig konkaver Krümmung eines die Längsmitte einer Kettenlasche umfassenden Längsrandabschnitts zur Erleichterung einer Bewegung der Kettenlasche axial bezogen auf die Drehachse eines Ziel-Kettenrads radial außen an einem Zahnkopf vorbei kann für die Kettenlaschen einer Mehrzahl von Kettengliedern, vorzugsweise aller Kettenglieder, der Fahrradkette gelten, dass nur ein die jeweilige Kettenlasche längs der Kettenhöhenachse begrenzender Kettenlaschen-Längsrand in einem die Längsmitte der Kettenlasche umfassenden Längsabschnitt konkav gekrümmt ausgebildet ist. Der längs der Kettenhöhenachse gegenüberliegende Kettenlaschen-Längsrand derselben Kettenlasche kann dagegen geradlinig oder mit einer geringeren Krümmung ausgebildet sein. Derartige Kettenlaschen sind beispielsweise aus der taiwanischen TW M268483 U oder aus der oben bereits genannten US 9,890,830 B2 bekannt. Die Kette ist dann vorzugsweise derart zusammengebaut, dass die Kettenlaschen-Längsränder mit dem konkav gekrümmten Längsmittenabschnitt auf der Eingriffsseite der Kettenglieder gelegen sind, auf welcher der Eintritt eines Kettenradzahns in den Zahneingriffsraum stattfindet. Das ist bei einer geschlossen umlaufenden Fahrradkette der radial innere Kettenlaschen-Längsrand.

Als alternative oder bevorzugt zusätzliche Einführhilfe zur Unterstützung einer Eingriffsbewegung eines Kettenradzahns in den Zahneingriffsraum kann der Kettenlaschen-Längsrand in seinem Längsmittenabschnitt eine sich längs des Kettenlaschen-Längsrands erstreckende Fase aufweisen. Die Fase ist bevorzugt an beiden Kettenlaschen eines Kettenglieds ausgebildet, und zwar derart, dass der Abstand der sich längs der Kettenbreitenachse gegenüberliegenden Kettenlascheninnenflächen mit zunehmender Annäherung an die Bezugsfläche kleiner wird.

Wie oben bereits dargelegt ist, sind zur Verstärkung der Einführunterstützung eines Kettenradzahns in den Zahneingriffsraum bevorzugt beide Kröpfungsbereiche aus erstem und zweitem Kröpfungsbereich wenigstens auf demselben Kettenlaschenabschnitt zwischen Bezugsebene und einem Längsrand des Kettengliedes wenigstens in der Kettenlascheninnenfläche wenigstens abschnittsweise gekrümmt ausgebildet. Dies gilt für eine Mehrzahl von Kettengliedern, vorzugsweise für alle Kettenglieder der Fahrradkette, und ebenso bevorzugt für beide Kettenlaschen eines Kettenglieds.

Auch der bevorzugte Krümmungssinn des wenigstens einen wenigstens in der Kettenlascheninnenfläche gekrümmt ausgebildeten Kröpfungsbereichs ist oben bereits diskutiert. Mit anderen Worten ist der bevorzugte Krümmungssinn des wenigstens einen wenigstens in der Kettenlascheninnenfläche abschnittsweise gekrümmten Kröpfungsbereichs aus erstem und zweitem Kröpfungsbereich derart, dass dieser von der Kettenrollen-Drehachse der dem abschnittsweise gekrümmten Kröpfungsbereich nähergelegenen Kettenrolle aus betrachtet konkav gekrümmt ist und von der Kettenrollen-Drehachse der dem abschnittsweise gekrümmten Kröpfungsbereich ferner gelegenen Kettenrolle aus betrachtet konvex gekrümmt ist. Dann weitet sich der Zahneingriffsraum zwischen dem ersten und dem zweiten Kröpfungsbereich in Richtung von der Bezugsebene weg zu einem Längsrand des Kettenglieds hin, an welchem eine Zahneingriff erfolgt, vorteilhaft progressiv, d. h. der längs der Längsbahn zu messende Abstand des ersten und des zweiten Kröpfungsbereichs voneinander nimmt mit zunehmendem Abstand von der Bezugsebene überproportional zu.

Gemäß einer bevorzugten Weiterbildung der vorliegenden Erfindung kann wenigstens ein Kröpfungsbereich aus erstem und zweitem Kröpfungsbereich, können bevorzugt beide Kröpfungsbereiche, wenigstens in der Kettenlascheninnenfläche wenigstens abschnittsweise konzentrisch mit der dem jeweiligen Kröpfungsbereich nächstgelegenen Kettenrolle ausgebildet sein. Dann kann der erste oder/und der zweite Kröpfungsbereich wenigstens in der Kettenlascheninnenfläche wenigstens abschnittsweise parallel zur Mantelfläche der ihm nächstgelegenen Kettenrolle verlaufen. Besonders bevorzugt unterscheidet sich der Radius des gekrümmten Abschnitts des ersten oder/und des zweiten Kröpfungsbereichs wenigstens in der Kettenlascheninnenfläche vom Radius der ihm nächstgelegenen Kettenrolle um nicht mehr als 5 %, noch stärker bevorzugt um nicht mehr als 3 %, bezogen auf den Radius der Kettenrolle. So kann ein eine unerwünschte Ansammlung von Schmutz begünstigender Spalt- oder Zwickelraum zwischen einer in Richtung ihrer Kettenrollenachse weisenden Stirnfläche der Kettenrolle und der ihr nächstgelegenen Kettenlascheninnenfläche verringert oder gar vollständig vermieden werden.

Für eine sehr gute Bewegungsführung der Kettenrolle in ihrer Drehbewegung um ihre Kettenrollenachse relativ zu den Kettenlaschen eines Kettenglieds gilt bevorzugt für eine Mehrzahl der Kettenglieder, besonders bevorzugt für alle Kettenglieder, der Fahrradkette, dass jede der Kettenlaschen eines Kettenglieds auf ihrer zur Kettenrolle hinweisenden Seite einen im Erstreckungsbereich der Kettenrolle gelegenen, gegebenenfalls der Kettenrolle benachbarten, ebenen Flächenabschnitt in dem breiteren Längsendbereich oder/und in dem schmäleren Längsendbereich aufweist.

Zwischen ebenen Flächenabschnitten der Kettenlascheninnenfläche verläuft in einer bevorzugten Ausführungsform der betriebsbereiten Fahrradkette ein Stift oder/und eine Hülse als hohler Stift. Nachfolgend ist der Einfachheit halber nur von einem Stift die Rede. Mit dieser Bezeichnung ist eine Hülse als hohler Stift mit umfasst. Für eine Mehrzahl der Kettenglieder, vorzugsweise für alle Kettenglieder, der Fahrradkette gilt, dass der Stift die längs der Kettenbreitenachse einander gegenüberliegenden Kettenlaschen des jeweiligen Kettenglieds im breiteren Längsendbereich des Kettenglieds miteinander verbindet. Überdies kann der Stift eine zwischen den Kettenlaschen aufgenommene Kettenrolle tragen. Wegen der eingangs genannten besonderen Bauart eines Kettenglieds durchsetzt der Stift, welcher sich längs der Kettenbreitenachse, insbesondere parallel zur Kettenbreitenachse, erstreckt, die Kettenlaschen eines Kettenglieds am schmäleren Längsendbereich und ragt im breiteren Längsendbereich des längs der Kettenlängsbahn unmittelbar folgenden Kettenglieds in dessen Kettenlaschen hinein. Denn ein schmälerer Längsendbereich eines Kettenglieds ragt, wie eingangs beschrieben, in den breiteren Längsendbereich des längs der Kettenlängsbahn folgenden Kettenglieds zwischen dessen Kettenlaschen hinein.

Eine Unterstützung der Schaltbereitschaft der vorliegend diskutierten Kette liegt auch darin, dass die die Kettenlaschen eines Kettenglieds miteinander verbindenden Stifte an der Außenseite der Kettenlaschen bevorzugt nicht über diese vorstehen. So kann eine größere lokale Breitenabmessung der Fahrradkette im Bereich der Stifte vermieden werden. Bevorzugt enden die Stifte bündig mit einer Kettenlaschenaußenfläche der Kettenlaschen. So können an der längs der Kettenbreitenachse von den Kettenrollen weg weisenden Außenseite der Kettenglieder Stufen vermieden werden, welche sich nachteilig auswirken können: falls die Stifte die Kettenlaschenaußenflächen überragen, kann eine so gebildete Stufe bewirken, dass die Fahrradkette mit dem auf ihrer Seitenfläche vorstehenden Längsende eines Stifts an einer Kontur aufseiten eines Kettenrads unerwünschterweise hängenbleibt und so eine flüssige Bewegung, insbesondere Schaltbewegung, der vorliegend diskutierten Fahrradkette behindert ist. Falls die Stifte dagegen hinter der Kettenlaschenaußenfläche zurückbleiben, entsteht eine Vertiefung, in welcher sich unerwünschterweise Schmutz ansammeln kann.

Bevorzugt begrenzt der erste Kröpfungsbereich den ebenen Flächenabschnitt im breiteren Längsendbereich wenigstens in der Kettenlascheninnenfläche, optional auch in der Kettenlaschenaußenfläche, wenigstens abschnittsweise, sodass der konstruktive Aufbau einer Kettenlasche einfach gehalten werden kann und keine gesonderte Begrenzung des ebenen Flächenabschnitts benötigt wird. Alternativ oder bevorzugt zusätzlich kann der zweite Kröpfungsbereich aus demselben Grund den ebenen Flächenabschnitt im schmäleren Längsendbereich wenigstens in der Kettenlascheninnenfläche, optional auch in der Kettenlaschenaußenfläche, wenigstens abschnittsweise begrenzen. Besonders bevorzugt begrenzt bzw. begrenzen der erste oder/und der zweite Kröpfungsbereich die ihnen nächst gelegenen ebenen Flächenabschnitte in den ihnen jeweils nächstgelegenen Längsendbereichen der Kettenlaschen nicht nur abschnittsweise, sondern vollständig.

Die vorliegende Erfindung betrifft weiter eine Fahrrad-Antriebsanordnung, umfassend als Kettenradanordnungen eine Kettenblattanordnung und eine mit Abstand davon angeordnete Fahrrad-Ritzelanordnung, wobei die Kettenblattanordnung und die Fahrrad-Ritzelanordnung jeweils um zueinander parallele Anordnungsachsen drehbar sind, und wobei die Fahrrad-Antriebsanordnung eine Fahrradkette umfasst, wie sie oben beschrieben und weitergebildet ist, welche geschlossen um die Anordnungsachsen umläuft und zur Übertragung von Drehmoment von der Kettenblattanordnung zur Fahrrad-Ritzelanordnung sich mit jeder dieser Anordnungen in formschlüssigem Eingriff befindet.

Die vorliegend diskutierte schaltfähige Fahrradkette der eingangs genannten Bauart kann in an sich bekannter Weise mit einem Umwerfer von einem Start-Kettenrad auf ein Ziel-Kettenrad umgelegt werden. Damit überhaupt ein Schaltvorgang möglich ist, muss wenigstens eine Kettenradanordnung aus der Kettenblattanordnung und der Fahrrad-Ritzelanordnung als eine Schalt-Kettenradanordnung wenigstens zwei koaxiale Kettenräder mit unterschiedlichen Kettenrad-Zähnezahlen aufweisen.

Zur Lösung der oben genannten Aufgabe weist die Fahrrad-Antriebsanordnung einen zumindest auch längs der parallelen Anordnungsachsen verlagerbaren Umwerfer auf, welcher von der Fahrradkette durchlaufen wird und welcher dazu ausgebildet ist, durch Verlagerung längs der gemeinsamen Anordnungsachse der wenigstens zwei koaxialen Kettenräder die Fahrradkette von einem der wenigstens zwei koaxialen Kettenräder, mit welchem die Fahrradkette in Eingriff ist, auf wenigstens ein anderes der wenigstens zwei koaxialen Kettenräder umzulegen, um das andere Kettenrad in Eingriff mit der Fahrradkette zu bringen.

Die Fahrrad-Antriebsanordnung ist dabei bevorzugt derart ausgebildet, dass bei einem Eingriff von Kettenradzähnen in Zahneingriffsräume der Kettenglieder der Fahrradkette eine Kraftübertragung zwischen dem jeweiligen Kettenradzahn und dem Kettenglied formschlüssig nur über eine Kettenrolle des jeweiligen Kettenglieds erfolgt, nicht über die Kettenlaschen des Kettenglieds. Etwaige zufällige, durch Kraft- bzw. Reibschluss übertragene Reibungskräfte zwischen einem Kettenradzahn und einer an diesem berührend anliegenden Kettenlasche sollen dabei aufgrund ihres gegenüber der zwischen Zahnflanke und Kettenrolle im Formschluss übertragenen Kraft vernachlässigbaren Betrags außer Betracht bleiben. Bevorzugt sind gemäß den obigen Ausführungen die Kettenrollen und die Kettenlaschen derart bemessen, dass die lasttragende Zahnflanke eines in einen Zahneingriffsraum eingreifenden Kettenradzahns nur mit der Mantelfläche einer Kettenrolle des Kettenglieds in Anlageeingriff gelangt, nicht jedoch mit einem zwischen Kettenlascheninnenfläche und Kettenlaschenaußenfläche gelegenen Kettenlaschenrand. Dies kann durch die oben genannte abschnittsweise Bemessung der Kettenlaschen eines Kettenglieds relativ zu den längs der Kettenbreitenachse zwischen ihnen angeordneten Kettenrollen erreicht werden. Beispielsweise können die Kettenlaschen in Abschnitten, welche im Betrieb der Fahrrad-Antriebsanordnung zu einer Anordnungsachse und zu einem in einen Zahneingriffsraum eines Kettenglieds eingreifenden Zahlen hinweisen, radial bezogen auf die Kettenrollenachse der nächstgelegenen Kettenrolle nicht über die Mantelfläche der Kettenrolle vorstehen oder sogar radial hinter der Mantelfläche der Kettenrolle zurückbleiben, sodass die Mantelfläche der Kettenrolle eine Anlage der Zahnflanke der Kettenradzähne am Rand der Kettenlaschen körperlich verhindert.

Die koaxialen Kettenräder der Schalt-Kettenradanordnung sind in einer nachfolgend als "Folgerichtung" bezeichneten Richtung mit absteigenden Kettenrad-Zähnezahlen angeordnet. An einem Ziel-Kettenrad mit höherer Kettenrad-Zähnezahl ist zur Ausführung eines ersten Schaltvorgangs von einem Start-Kettenrad mit niedrigerer Zähnezahl zu einem entgegen der Folgerichtung benachbarten Ziel-Kettenrad mit höherer Zähnezahl als das Start-Kettenrad an dem Ziel-Kettenrad wenigstens ein Zahn als Fangzahn für den ersten Schaltvorgang ausgebildet. Eine Mehrzahl, insbesondere für Kettenräder mit nur einer Schaltgasse sogar eine Mehrheit, von Standardzähnen des Ziel-Kettenrads, hat eine einheitliche, übereinstimmende Zahngestalt. Diese Standardzähne mit dieser einheitlichen übereinstimmenden Zahngestalt dienen in der Regel nur der Übertragung von Kraft bzw. Drehmoment zwischen der Kette und dem Kettenrad durch körperlichen Eingriff der Standardzähne in die Zahneingriffsräume der Kettenglieder der Fahrradkette. Von dieser Zahngestalt der Standardzähne weicht die Zahngestalt des Fangzahns ab. Die Zahngestalt des Fangzahns erleichtert die körperlich-formschlüssige Ineingriffnahme der unter dem Einfluss des Umwerfers vom Start-Kettenrad abgehenden Fahrradkette. Der Fangzahn ist daher derjenige Zahn des Ziel-Kettenrads, welcher bei dem hier diskutierten ersten Schaltvorgang als erster Zahn in einen Zahneingriffsraum eines Kettenglieds der Fahrradkette eintritt und so die Kette am Ziel-Kettenrad in Eingriff nimmt.

Zur Erleichterung eines Eingriffs in die zum Ziel-Kettenrad hin umgelegte Fahrradkette bzw. in die Zahneingriffsräume ihrer Kettenglieder, weist der Fangzahn auf seiner vom Start-Kettenrad wegweisenden Zahnseite bevorzugt eine Fang-Ausnehmung, besonders bevorzugt eine wenigstens abschnittsweise als Fang-Fase ausgestaltete Fang-Ausnehmung auf. Um durch die Fang-Ausnehmung einen Eintritt des Fangzahns in einen Zahneingriffsraum eines Kettenglieds der vom Umwerfer axial in Richtung zum Ziel-Kettenrad hin verlagerten Fahrradkette zu erleichtern, erstreckt sich die Fang-Ausnehmung bevorzugt vom Kopf des Fangzahns ausgehend radial nach innen in Richtung zur Anordnungsachse hin. So wird durch die Fang-Ausnehmung eine Dickenreduzierung des Zahnkopfes des Fangzahns auf der vom Start-Kettenrad abgewandten Seite des Ziel-Kettenrads bewirkt, deren Folge eine effektive axiale Verlagerung des Zahnkopfes des Fangzahns zum Start-Kettenrad hin ist. Eine Kammfläche oder, bei axialer Ausdehnung der Kammfläche von null, eine Kammlinie als die längs einer Umfangsbahn um die Anordnungsachse verlaufende, den Fangzahn bzw. dessen Zahnkopf radial außen begrenzende Formation des Fangzahns liegt wegen der beschriebenen Fang-Ausnehmung näher bei dem Start-Kettenrad. Außerdem ist der Zahnkopf des Fangzahns durch die Fang-Ausnehmung axial dünner als ein Zahnkopf der Standardzähne, so dass der Fangzahn im Vergleich zu den Standardzähnen erleichtert in einen Zahneingriffsraum eines Kettenglieds der vom Start-Kettenrad zum Fangzahn hin bewegten Fahrradkette einrücken kann.

Die beschriebene Fang-Ausnehmung kann zumindest in dem unmittelbar von der Kammlinie oder Kammfläche des Fangzahns ausgehenden Radialabschnitt des Fangzahns bevorzugt als Fang-Fase am Zahnkopf ausgebildet sein und so als eine Art Einführschräge des Fangzahns in einen Zahneingriffsraum dienen. Die Fang-Fase ist dann bevorzugt derart gebildet, dass die radiale Dicke des Fangzahns mit zunehmendem radialem Abstand von der Kammlinie oder Kammfläche des Fangzahns in Richtung zur Anordnungsachse hin zunimmt. Die Oberfläche der Fang-Fase ist bevorzugt um eine zu einer Umfangsbahn um die Anordnungsachse tangentiale oder bezüglich einer Tangente an eine Umfangsbahn um die Anordnungsachse um nicht mehr als 20°, vorzugsweise um nicht mehr als 10°, geneigte Neigeachse geneigt ausgebildet.

Die Fang-Ausnehmung auf der vom Start-Kettenrad abgewandten Seite des Fangzahns reicht bevorzugt ausgehend von der Kammlinie oder Kammfläche des Zahnkopfes des Fangzahns in Richtung zur Anordnungsachse hin über wenigstens 25 % der radialen Erstreckung des Fangzahns, vorzugsweise über wenigstens 35 %, optional über wenigstens 50 % der radialen Erstreckung des Fangzahns. Die radiale Erstreckung des Fangzahns ist ausgehend von der Radialkoordinate des Fußkreises des Ziel-Kettenrades zu ermitteln. Durch die Ausbildung der Fang-Ausnehmung des Fangzahns ausgehend von der Kammlinie oder Kammfläche bis zur Radialmitte des Fangzahns oder sogar darüber hinaus kann eine während des vorliegend diskutierten ersten Schaltvorgangs funktionell notwendige Verschränkung der Fahrradkette auf ein vorteilhaftes Maß reduziert werden. Für eine ausreichende Führung der Fahrradkette durch den Fangzahn nach erfolgreichem Umlegen der Fahrradkette auf das Ziel-Kettenrad bei gewöhnlichem Zahneingriff reicht die Fang-Ausnehmung radial bevorzugt nicht bis zum Fußkreis des Zahnkranzes des Ziel-Kettenrads. Besonders bevorzugt reicht die Fang-Ausnehmung ausgehend vom Zahnkopf des Fangzahns nicht über mehr als 80 % der radialen Abmessung des Fangzahns. Die Fang-Ausnehmung erstreckt sich ebenso bevorzugt über die gesamte Umfangserstreckung des Fangzahns längs einer Umfangsbahn um die Anordnungsachse.

Ein auf der vom Start-Kettenrad abgewandten Seite des Ziel-Kettenrads radial weiter vom Zahnkopf entfernt gelegener Außenflächenabschnitt des Fangzahns als weiterer Grenzflächenabschnitt der Fang-Ausnehmung kann zur besseren Führung der Kette nach einem tieferen Eindringen des Fangzahns in den Zahneingriffsraum einen stärker radialen und weniger starken axialen Verlauf aufweisen als ein radial weiter außen liegender, unmittelbar von der Kammlinie oder Kammfläche ausgehender Außenflächenabschnitt des Fangzahns, insbesondere als die oben beschriebene Fang-Fase. Die von der Fang-Ausnehmung gebildeten Außenflächenabschnitte des Fangzahns auf der vom Start-Kettenrad abgewandten Seite des Ziel-Kettenrads können wenigstens abschnittsweise polyedrisch unter Ausbildung von Kanten an ihren Grenzbereichen ausgebildet sein oder/und können wenigstens abschnittsweise als gekrümmter gemeinsamer Außenflächenbereich, vorzugsweise mit wenigstens einer überwiegend oder bevorzugt vollständig tangential zu einer Umfangsbahn um die Anordnungsachse oder/und um nicht mehr als 20°, vorzugsweise 10°, bezüglich einer Tangente an eine Umfangsbahn um die Anordnungsachse verlaufenden Krümmungsachse, ausgebildet sein. Weiter bevorzugt kann sich die Krümmung des gekrümmten Außenflächenbereichs zur Bildung der Außenflächenabschnitte von der Kammlinie oder Kammfläche weg in radialer Richtung zur Anordnungsachse hin ändern, wobei dann besonders bevorzugt die Krümmung näher an der Kammlinie oder Kammfläche stärker ist, also einen kürzeren Krümmungsradius aufweist, als radial weiter von der Kammlinie oder Kammfläche entfernt. Eine sich im radialen Verlauf des Fangzahns ändernde Krümmung seiner Außenfläche bedeutet eine Mehrzahl von die jeweils lokale Krümmung der Außenflächenabschnitte bestimmenden Krümmungsachsen.

Sofern der Fangzahn am Zahnkopf, ausgehend von der Kammlinie oder Kammfläche, auch auf der dem Start-Kettenrad zugewandten Seite eine Schrägfläche oder Fase aufweist, ist die Fang-Fase auf der vom Start-Kettenrad abgewandten Seite größer als die am Zahnkopf ausgebildete Fase auf der dem Start-Kettenrad zugewandten Seite.

Der Fangzahn kann für einen erleichterten ersten Eingriff in einen Zahneingriffsraum radial kürzer ausgebildet sein als die Standardzähne oder/und als ihm längs einer Umfangsbahn benachbarte Kettenradzähne.

Das Ziel-Kettenrad des beschriebenen ersten Schaltvorgangs kann im Bereich eines in Vorwärtsfahrt-Drehrichtung der Kettenradanordnung dem Fangzahn unmittelbar vorauseilenden Vorbereitungszahns auf der dem Start-Kettenrad zugewandten Seite eine Vorbereitungs-Ausnehmung aufweisen, um in diesem Bereich während des Umlegens der Fahrradkette eine stärkere axiale Annäherung der Fahrradkette an das Ziel-Kettenrad zu ermöglichen. Die Vorwärtsfahrt-Drehrichtung ist dabei die Drehrichtung, in der die Kettenradanordnung während eines Antriebs eines die Fahrrad-Antriebsanordnung tragenden Fahrrads zur Vorwärtsfahrt dreht.

Die Vorbereitungs-Ausnehmung erstreckt sich vorzugsweise in radialer Richtung über die gesamte radiale Erstreckung des Vorbereitungszahns. Die Vorbereitungs-Ausnehmung kann sich außerdem in den Umfangsbereich des dem Vorbereitungszahn in Vorwärtsfahrt-Drehrichtung unmittelbar vorauseilenden Zahnzwischenraums erstrecken. Für eine möglichst unkomplizierte axiale Annäherung der Fahrradkette an das Ziel-Kettenrad kann die Vorbereitungs-Ausnehmung längs einer Umfangsbahn um die Anordnungsachse bis zu dem dem Vorbereitungszahn in Vorwärtsfahrt-Drehrichtung unmittelbar vorauseilenden Zahn reichen, aber aus Festigkeitsgründen bevorzugt nicht über die Umfangsmitte dieses Zahns hinaus.

Die Vorbereitungs-Ausnehmung kann eine längs einer Umfangsbahn um die Anordnungsachse unterschiedliche radiale Annäherung an die Anordnungsachse der Kettenradanordnung aufweisen, wobei sich bevorzugt die Vorbereitungs-Ausnehmung in Vorwärtsfahrt-Drehrichtung ausgehend vom Fangzahn radial an die Anordnungsachse annähert, um den Verlauf der Fahrradkette vom Start-Kettenrad zum Ziel-Kettenrad in radialer Richtung wenigstens näherungsweise abzubilden.

Der Fangzahn und der Vorbereitungszahn mit der Vorbereitungs-Ausnehmung bilden eine besonders wirksame die Schaltbarkeit der Kette an der Schalt-Kettenradanordnung fördernde Merkmalskombination.

Um eine übermäßige Verschränkung der Fahrradkette während des ersten Schaltvorgangs zu vermeiden, kann der dem Fangzahn bezüglich der Vorwärtsfahrt-Drehrichtung unmittelbar nachlaufende Zahn auf der vom Start-Kettenrad wegweisenden, abgewandten Kettenradseite eine Zusatz-Ausnehmung aufweisen. Bevorzugt weist der nachlaufende Zahn in seiner radial weiter außen gelegenen Hälfte seiner Radialerstreckung eine geringere axiale Dicke auf als ein Standardzahn. Die Zusatz-Ausnehmung kann in Umfangsrichtung vom Fangzahn weg sich der Anordnungsachse annähernd ausgebildet sein. Vorzugsweise reicht die Zusatz-Ausnehmung an beiden entgegengesetzten Umfangsenden des nachlaufenden Zahns ausgehend vom Zahnkopf nicht bis zum Fußkreis des Ziel-Kettenrads. Längs einer Umfangsbahn um die Anordnungsachse erstreckt sich die Zusatz-Ausnehmung bevorzugt über die gesamte Umfangserstreckung des Zahns.

Zur Erleichterung einer Einführung des Fangzahns in einen Zahneingriffsraum von Kettengliedern der Fahrradkette kann der Fangzahn an seiner in Vorwärtsfahrt-Drehrichtung vorauseilenden oder/und lastfreien Flanke auf der vom Start-Kettenrad abgewandten Seite eine einen ersten Schaltvorgang unterstützende Gleit-Fase aufweisen. Die an der Zahnflanke ausgebildete Gleit-Fase ist im Wesentlichen zur sprachlichen Unterscheidung von der oben beschriebenen Fang-Fase so bezeichnet. Tatsächlich kann während eines ersten Schaltvorgangs ein Kettenglied der Fahrradkette mit seiner vom Start-Kettenrad weiter entfernt gelegenen Kettenlasche entlang der Gleit-Fase und in körperlichem Kontakt mit dieser radial am Fangzahn hinab in Richtung zur Anordnungsachse gleiten. Bei dieser Bewegung, mit der der erwähnte Gleitkontakt einher gehen kann, aber nicht einher gehen muss, gelangt der Fangzahn erwünscht tiefer in den Zahneingriffsraum des betroffenen Kettenglieds hinein und nimmt dieses so körperlich in Eingriff. Die Gleit-Fase ist bevorzugt derart geneigt ausgebildet, dass ein Normalenvektor einer durch die Gleit-Fase gebildeten Außenfläche des Fangzahns eine Umfangs-Vektorkomponente in Richtung von der nachlaufenden oder/und Lasttragenden Flanke des Fangzahns weg, eine axiale Vektorkomponente parallel zur gemeinsamen Kettenradanordnungsachse in Richtung vom Start-Kettenrad weg und eine radiale Vektorkomponente in Richtung von der gemeinsamen Kettenradanordnungsachse weg aufweist. Mit dieser Ausgestaltung der Gleit-Fase am Fangzahn kann der Fangzahn auf die Gestalt des Zahneingriffsraums mit seinem Verjüngungsabschnitt angepasst sein. Die Schrägstellung der einen Zahneingriffsraum längs der Kettenbreitenachse begrenzenden Kettenlaschenabschnitte relativ zu einer zur gemeinsamen Anordnungsachse der koaxialen Kettenräder orthogonalen Ebene kann an einem Endbereich längs der Kettenbreitenachse eines Kettenglieds durch eine vom Umwerfer bewirkte Schrägstellung der Kette während des ersten Schaltvorgangs noch verstärkt und am entgegengesetzten Endbereich abgemildert sein. Dadurch ergeben sich völlig andere Orientierungen der einen Zahneingriffsraum begrenzenden Seitenflächen eines Kettenglieds relativ zu einem Fangzahn als bei herkömmlichen Fahrradketten.

Die Gleit-Fase erstreckt sich bevorzugt vom Bereich des Zahnkopfes des Fangzahns radial zum Fuß des Fangzahns und in Umfangsrichtung in den dem Fangzahn in Vorwärtsfahrt-Drehrichtung vorauseilenden Zahnzwischenraum hinein. Die Gleit-Fase kann sich in Umfangsrichtung bis in einen Umfangserstreckungsabschnitt des Zahnzwischenraums zwischen dem Fangzahn und dem dem Fangzahn in Vorwärtsfahrt-Drehrichtung unmittelbar vorauseilenden Zahn erstrecken, welcher die Umfangsmitte des Zahnzwischenraums enthält und sich ausgehend von der Umfangsmitte zu je einem Sechstel, vorzugsweise zu je einem Achtel, der Zahnteilung symmetrisch beiderseits der Umfangsmitte ausdehnt. In der Umfangsmitte befindet sich üblicherweise der dem Anordnungsachse am stärksten angenäherte Punkt des Zahnzwischenraums.

Bevorzugt ist nur an einem Übergang zwischen zwei in Umfangsrichtung um den Fangzahn aufeinander folgenden Zahnseiten des Fangzahns eine Fase, nämlich die Gleit-Fase, ausgebildet. Sofern an mehr als einem Übergang zwischen zwei in Umfangsrichtung um den Fangzahn aufeinander folgenden Zahnseiten Fasen ausgebildet sind, ist die Gleit-Fase die am stärksten ausgebildete Fase, insbesondere die flächengrößte Fase, an zwei in Umfangsrichtung um den Fangzahn aufeinander folgenden Zahnseiten des Fangzahns.

An dem dem Fangzahn bezüglich der Vorwärtsfahrt-Drehrichtung unmittelbar nacheilenden Zahn, welcher die Zusatz-Ausnehmung aufweisen kann, kann eine weitere Gleit-Fase ausgebildet sein, welche hinsichtlich Gestalt, Abmessung und Ausbildungsort der Gleit-Fase des Fangzahns im Wesentlichen entspricht. Das oben zur Gleit-Fase des Fangzahns Gesagte gilt daher mutatis mutandis auch für eine weitere Gleit-Fase an dem unmittelbar nacheilenden Zahn. Die weitere Gleit-Fase verhält sich zur Zusatz-Ausnehmung im Wesentlichen wie sich die Gleit-Fase zur Fang-Ausnehmung verhält.

Ein erwünschtes sanftes Umlegen der Fahrradkette vom Start-Kettenrad mit niedriger Kettenrad-Zähnezahl auf das benachbarte Ziel-Kettenrad mit höherer Kettenrad-Zähnezahl kann nur längs einer ersten Schaltgasse erfolgen. Eine erste Schaltgasse ist dort gebildet, wo der Abstand zwischen einem ersten Kettengliedeingriff auf dem Ziel-Kettenrad und einem letzten Kettengliedeingriff auf dem Start-Kettenrad zwischen 90 % und 110 %, vorzugsweise zwischen 95 % und 105 %, eines ganzzahligen Vielfachen der Kettenteilung beträgt.

An der vorliegend beschriebenen Fahrrad-Antriebsanordnung kann die Anzahl an ersten Schaltgassen am Ziel-Kettenrad in vorteilhafter Weise kleiner oder vorzugsweise gleich der Zähnezahldifferenz zwischen dem Start-Kettenrad und dem Ziel-Kettenrad gewählt werden. Bevorzugt sind die ersten Schaltgassen in Umfangsrichtung äquidistant über den Umfang des Ziel-Kettenrads verteilt. Da Schaltgassen nur diskret an Umfangsorten mit einem Fangzahn ausgebildet sein können, bedeutet "äquidistant" in diesem Fall, dass der Umfangsabstand zwischen k Schaltgassen eines Ziel-Kettenrads mit n Zähnen, ausgedrückt in Winkelgrad, jeweils 360°/k ± 0,5 x 360°/n entspricht, wobei k und n jeweils ganze Zahlen sind und n > k gilt.

Es hat sich für die mechanische Festigkeit des Ziel-Kettenrads und folglich für dessen Lebensdauer als vorteilhaft herausgestellt, dass Kettenräder als Ziel-Kettenräder nur genau einen Fangzahn pro Schaltgasse am Ziel-Kettenrad aufweisen müssen, um einen zuverlässigen und wiederholbaren Schaltvorgang zu ermöglichen. Anders als bei herkömmlichen Fahrradketten mit Innenlaschen- und Außenlaschen-Kettengliedern kommt bei der vorliegend diskutierten Fahrradkette stets ein Kettenglied mit einheitlicher bekannter Gestalt am Zahnkranz des Ziel-Kettenrads zur Ineingriffnahme durch das Ziel-Kettenrad an. Eine Ausgestaltung mit nur einem Fangzahn pro erster Schaltgasse ist daher bevorzugt.

Zur Erleichterung einer Ausführung eines im Vergleich zum oben diskutierten ersten Schaltvorgang entgegengesetzten zweiten Schaltvorgangs von einem Start-Kettenrad mit höherer Zähnezahl zu einem in der Folgerichtung benachbarten Ziel-Kettenrad mit niedrigerer Zähnezahl kann an dem Start-Kettenrad wenigstens ein Zahn als Weichenzahn mit einer von der übereinstimmenden Zahngestalt der Standardzähne abweichenden Zahngestalt ausgebildet sein. Hinsichtlich der Standardzähne gilt das oben bereits Gesagte. Ein Weichenzahn ist dabei jener besonders ausgestaltete erste Zahn am Zahnkranz des Start-Kettenrads, an welchem die vom Start-Kettenrad durch Umwerferbetätigung abgehende Fahrradkette während des zweiten Schaltvorgangs axial bezogen auf die Anordnungsachse auf der zum Ziel-Kettenrad weisenden Seite des Weichenzahns vorbeigeht. Der Weichenzahn ist daher der erste Zahn des Start-Kettenrads, welcher während des nun diskutierten zweiten Schaltvorgangs nicht mehr in einen Zahneingriffsraum eines Kettenglieds der Fahrradkette eingreift. Der Weichenzahn läuft beim zweiten Schaltvorgang in der Regel bezüglich der Vorwärtsfahrt-Drehrichtung des Start-Kettenrads einer Reihe von aufeinander folgenden Zähnen nach, welche jeweils in Zahneingriffsräume von Kettengliedern der Fahrradkette eingreifen.

Bevorzugt weist der Weichenzahn auf seiner zum kleineren Ziel-Kettenrad weisenden Seite eine Weichen-Ausnehmung auf, welche sich ausgehend vom Zahnkopf des Weichenzahns in radialer Richtung zur Anordnungsachse hin über den Fußkreis des Start-Kettenrads hinaus erstreckt. Besonders bevorzugt erstreckt sich die Weichen-Ausnehmung auf der zum Ziel-Kettenrad hinweisenden Zahnseite des Weichenzahns über die gesamte Umfangsbreite und ebenfalls besonders bevorzugt über die gesamte radiale Erstreckung des Weichenzahns.

Die Weichen-Ausnehmung, durch welche der Weichenzahn axial dünner ausgebildet ist als die Standardzähne des Start-Kettenrads, bewirkt eine im Vergleich zu den Standardzähnen effektiv axial vom Ziel-Kettenrad weg versetzte Anordnung des Weichenzahns am Start-Kettenrad, was die Erfüllung seiner Funktion erleichtert. Die Weichen-Ausnehmung kann sich in Umfangsrichtung vom Weichenzahn weg bis in den Umfangsbereich des bezüglich der Vorwärtsfahrt-Drehrichtung dem Weichenzahn unmittelbar nachlaufenden Zahnzwischenraum hinein, besonders bevorzugt bis zu dem bezüglich der Vorwärtsfahrt-Drehrichtung dem Weichenzahn unmittelbar nachlaufenden Zahn, erstrecken. Bevorzugt erstreckt sich die Weichen-Ausnehmung in Umfangsrichtung nicht über die Umfangsmitte des unmittelbar nachlaufenden Zahns, besonders bevorzugt nicht weiter als 20 % von dessen Umfangsabmessung. An der jeweiligen Radialkoordinate in diesen hinein.

Die Weichen-Ausnehmung kann eine längs der Umfangsbahn um die Anordnungsachse der Kettenradanordnung unterschiedliche radiale Annäherung an die Anordnungsachse aufweisen, wobei die Weichen-Ausnehmung bevorzugt entgegen der Vorwärtsfahrt-Drehrichtung vom Weichenzahn weg sich radial an die Anordnungsachse annähernd ausgebildet ist, um den Verlauf der Fahrradkette vom Start-Kettenrad zum Ziel-Kettenrad in radialer Richtung wenigstens näherungsweise abzubilden.

Der Weichenzahn kann auf seiner dem Ziel-Kettenrad zugewandten Seite als Abweisungshilfe eine unmittelbar von seiner Kammfläche oder Kammlinie ausgehende Schrägfläche oder Fase aufweisen als die Weichen-Ausnehmung wenigstens teilweise begrenzende Außenflächenabschnitte des Weichenzahns aufweisen. Die Schrägfläche oder Fase weist vorteilhaft in axialer Richtung zum Ziel-Kettenrad und in radialer Richtung von der Anordnungsachse weg. Durch die Schrägfläche bzw. Fase kann die Kammlinie oder Kammfläche des Weichenzahns axial weiter vom Ziel-Kettenrad entfernt liegen als die Kammlinie oder Kammfläche von Standardzähnen des Start-Kettenrads.

Die Weichen-Ausnehmung begrenzende Außenflächenabschnitte des Weichenzahns auf der dem Ziel-Kettenrad zugewandten Seite des Start-Kettenrads können wenigstens abschnittsweise polyedrisch unter Ausbildung von Kanten an ihren Grenzbereichen ausgebildet sein oder/und können wenigstens abschnittsweise als gekrümmter gemeinsamer Außenflächenbereich, vorzugsweise mit wenigstens einer um eine zu einer Umfangsbahn um die Anordnungsachse tangentialen oder bezüglich einer Tangente an eine Umfangsbahn um die Anordnungsachse um nicht mehr als 20°, vorzugsweise um nicht mehr als 10°, geneigten Krümmungsachse ausgebildet sein. Weiter bevorzugt kann sich die Krümmung des gekrümmten Außenflächenbereichs zur Bildung der Außenflächenabschnitte von der Kammlinie oder Kammfläche weg in radialer Richtung zur Anordnungsachse hin ändern, wobei dann besonders bevorzugt die Krümmung näher an der Kammlinie oder Kammfläche stärker ist, also einen kürzeren Krümmungsradius aufweist, als radial weiter von der Kammlinie oder Kammfläche entfernt. Eine sich im radialen Verlauf des Weichenzahns ändernde Krümmung seiner Außenfläche bedeutet eine Mehrzahl von die jeweils lokale Krümmung der Außenflächenabschnitte bestimmenden Krümmungsachsen.

Ein dem Weichenzahn in Vorwärtsfahrt-Drehrichtung unmittelbar vorauseilender Zahn weist als Unterstützungszahn auf der vom Ziel-Kettenrad wegweisenden Zahnseite eine Unterstützungs-Ausnehmung auf, um die beim Schaltvorgang unvermeidliche Verschränkung der Fahrradkette zu reduzieren und der Fahrradkette eine axiale Annäherung an das Ziel-Kettenrad zu ermöglichen. Der vorauseilende Unterstützungszahn weist aufgrund der Unterstützungs-Ausnehmung in seiner radial weiter außen gelegenen Hälfte seiner Radialerstreckung eine geringere axiale Dicke auf als ein Standardzahn. Die Unterstützungs-Ausnehmung, welche sich bevorzugt über die gesamte Umfangsbreite des Unterstützungszahns erstreckt, reicht ebenso bevorzugt an beiden entgegengesetzten Umfangsenden des vorauseilenden Zahns ausgehend vom Zahnkopf nicht bis zum Fußkreis des Start-Kettenrads.

Der Weichenzahn mit der Weichen-Ausnehmung und der Unterstützungszahn bilden eine besonders wirksame die Schaltbarkeit der Kette an der Schalt-Kettenradanordnung fördernde Merkmalskombination.

Auch für den vorliegend diskutierten zweiten Schaltvorgang gilt, dass ein sanftes Umlegen der Fahrradkette vom Start-Kettenrad mit höherer Kettenrad-Zähnezahl auf das benachbarte Ziel-Kettenrad mit niedrigerer Kettenrad-Zähnezahl nur längs einer am Start-Kettenrad ausgebildeten zweiten Schaltgasse erfolgen kann. Für die wenigstens eine zweite Schaltgasse gilt das oben zur ersten Schaltgasse Gesagte entsprechend. Die Anzahl an zweiten Schaltgassen am Start-Kettenrad ist kleiner oder bevorzugt gleich der Zähnezahldifferenz zwischen Start-Kettenrad und Ziel-Kettenrad. Weiter bevorzugt sind die zweiten Schaltgassen in Umfangsrichtung in dem oben definierten Sinn äquidistant über den Umfang des Start-Kettenrads verteilt angeordnet.

Zur Erzielung einer vorteilhaft hohen mechanischen Festigkeit und einer hohen Lebensdauer des Start-Kettenrads weist jede zweite Schaltgasse bevorzugt genau einen Weichenzahn auf.

Die vorliegend diskutierten ersten und zweiten Schaltgassen mit ihren besonders gestalteten Zähnen: Fangzahn und Weichenzahn, sowie mit ihren Ausnehmungen: Fang-Ausnehmung und Weichen-Ausnehmung, gegebenenfalls auch mit der Vorbereitungs-Ausnehmung oder/und der Unterstützungs-Ausnehmung oder/und der Zusatz-Ausnehmung, sind jeweils stets an dem größeren der beiden Kettenräder aus Start-Kettenrad und Ziel-Kettenrad ausgebildet.

Bei einer betrachteten Kettenradanordnung mit einem größeren und einem kleineren Kettenrad ist dasjenige Kettenrad, welches im ersten Schaltvorgang Ziel-Kettenrad ist, im zweiten Schaltvorgang Start-Kettenrad. Die Kettenradanordnung kann selbstverständlich mehr als nur zwei Kettenräder aufweisen. In einer Kettenradanordnung mit mehr als zwei Kettenrädern kann jedes Kettenrad außer dem kleinsten Kettenrad sowohl Ziel-Kettenrad in einem ersten Schaltvorgang als auch Start-Kettenrad in einem zweiten Schaltvorgang sein.

Verwendete Ordinalzahlen als Attribut eines technischen Merkmals kennzeichnen nur eine Reihenfolge der Nennung. Das Vorhandensein eines Merkmals mit niedrigerer Ordinalzahl ist keine Voraussetzung für das Vorhandensein eines Merkmals gleicher Benennung, jedoch mit höherer Ordinalzahl. Es kann also theoretisch ein zweiter Schaltvorgang ohne ersten Schaltvorgang existieren oder diskutiert werden.

Die vorliegende Anmeldung betrifft auch ein Kettenrad in Alleinstellung, welches gemäß dem im ersten Schaltvorgang beschriebenen Ziel-Kettenrad ausgebildet ist oder/und welches gemäß dem im zweiten Schaltvorgang beschriebenen Start-Kettenrad ausgebildet ist. Ebenso betrifft die vorliegende Anmeldung eine Kettenradanordnung in Alleinstellung, umfassend das vorgenannte Kettenrad und ein unmittelbar benachbartes kleineres Kettenrad. Gegebenenfalls kann die Kettenradanordnung wenigstens ein weiteres Kettenrad abweichender Größe, also abweichender Zähnezahl, aufweisen.

Gemäß einer bevorzugten Ausführungsform der Fahrrad-Antriebsanordnung ist vorgesehen, dass bei Bewegung der Fahrradkette in einem zur Vorwärtsfahrt antreibenden Umlaufsinn das schmälere Längsende eines Kettenglieds vorauseilt und das breitere Längsende nachläuft. Die Kettenblattanordnung dieser Ausführungsform weist bevorzugt nur ein Kettenblatt, die Fahrrad-Ritzelanordnung dagegen mehrere koaxiale Ritzel unterschiedlicher Zähnezahlen auf, sodass an dieser bevorzugten Ausführungsform ein Schaltvorgang nur an der Ritzelanordnung des Hinterrads ausgeführt wird. Für diesen Schaltvorgang an der Ritzelanordnung ist die angegebene Orientierung mit bei Vorwärtsfahrt vorauseilenden schmäleren Längsenden besonders vorteilhaft.

Die vorliegende Erfindung wird nachfolgend anhand der beiliegenden Zeichnungen näher erläutert werden. Es stellt dar:
- Fig. 1: eine perspektivische grobschematische Ansicht einer erfindungsgemäßen Ausführungsform einer Fahrradkette auf die Seite mit dem geradlinigen Rand der Kettenlaschen,
- Fig. 2: eine Seitenansicht der Fahrradkette von Fig. 1, bei Betrachtung längs der Kettenbreitenachse entlang des Pfeils II in Fig. 3,
- Fig. 3: eine Draufsicht der Fahrradkette der Fig. 1 und 2, bei Betrachtung längs der Kettenhöhenachse entlang des Pfeils III in Fig. 2,
- Fig. 4: eine Längsschnittansicht der Fahrradkette mit der Bezugsebene als Schnittebene, bei Betrachtung längs der Pfeile IV in Fig. 2,
- Fig. 5: eine Seitenansicht der Kettenlaschenaußenfläche einer Kettenlasche 24 der Fahrradkette der Figuren 1 bis 3, bei Betrachtung längs der Kettenbreitenachse entlang des Pfeils II in Fig. 3 bzw. entlang des Pfeils V in Fig. 6,
- Fig. 6: eine Draufsicht auf den von der Eingriffsseite entfernt gelegenen Längsrand der Kettenlasche 24 von Fig. 5, bei Betrachtung längs der Kettenhöhenachse entlang des Pfeils III in Fig. 2 bzw. entlang des Pfeils VI in den Figuren 5 und 7,
- Fig. 6A: eine Fig. 6 entsprechende Draufsicht auf den von der Eingriffsseite entfernt gelegenen Längsrand einer Kettenlasche 26 einer in Fig. 6 angedeuteten zweiten Ausführungsform,
- Fig. 7: eine Seitenansicht der Kettenlascheninnenfläche der Kettenlasche 24 der Figuren 5 und 6, bei Betrachtung längs der Kettenbreitenachse entlang des Pfeils VII in Fig. 6,
- Fig. 7A: eine perspektivische Ansicht der Kettenlaschenaußenfläche einer vierten Ausführungsform einer Kettenlasche 26,
- Fig. 7B: eine Seitenansicht der Kettenlaschenaußenfläche der Kettenlasche 1026 von Fig. 7A, bei Betrachtung längs der Kettenbreitenachse,
- Fig. 7C: eine perspektivische Ansicht der Kettenlascheninnenfläche einer fünften Ausführungsform einer Kettenlasche 26,
- Fig. 7D: eine perspektivische Ansicht mit Querschnittsansicht einer weiteren erfindungsgemäßen Ausführungsform einer Fahrradkette mit einer sechsten Ausführungsform von Kettenlaschen,
- Fig. 8: eine axiale Frontansicht einer Ritzelanordnung für ein Hinterrad eines mit der Fahrradkette der Figuren 1 bis 7 angetriebenen Fahrrads gemäß Figur 15 mit entlang der Anordnungsachse der Ritzelanordnung verlaufender Blickrichtung längs des Pfeils VIII in Fig. 9,
- Fig. 9: eine Seitenansicht der Ritzelanordnung von Fig. 8 mit Blickrichtung orthogonal zur Anordnungsachse längs des Pfeils IX in Fig. 8,
- Fig. 10: eine axiale Frontansicht nur des zweitgrößten und des größten Ritzels der Ritzelanordnung der Fig. 8 und 9 mit entlang der Anordnungsachse der Ritzelanordnung verlaufenden Blickrichtung längs des Pfeils VIII in Fig. 9, wobei der Verlauf der Fahrradkette sowohl beim Umlegen vom größeren auf das kleinere Ritzel als auch vom kleineren auf das größere Ritzel schematisch gezeigt ist,
- Fig. 11: eine perspektivische Detailansicht auf einen Umfangsabschnitt des größeren der beiden Ritzel von Fig. 10 mit zwei unterschiedlichen Schaltgassen, wobei die dem kleineren Ritzel in Fig. 10 zugewandte Seite des größeren der beiden Ritzel von Fig. 10 betrachtet wird,
- Fig. 12: eine axiale Rückansicht der beiden Ritzel von Fig. 10 mit Blickrichtung entlang der Anordnungsachse der Ritzelanordnung längs des Pfeils XII in Fig. 9,
- Fig. 13: eine schematische Ansicht des Umfangs des größten Ritzels mit Blickrichtung orthogonal zur Anordnungsachse der Ritzelanordnung längs des Pfeils XIII in Fig. 8
- Fig. 14: eine grobschematische Darstellung eines ersten Schaltvorgangs der Fahrradkette der Figuren 1 bis 4 an einer Fahrrad-Ritzelanordnung eines Fahrrad-Hinterrads, und
- Fig. 15: eine schematische perspektivische Darstellung eines Fahrrads mit einer erfindungsgemäßen Antriebsanordnung.

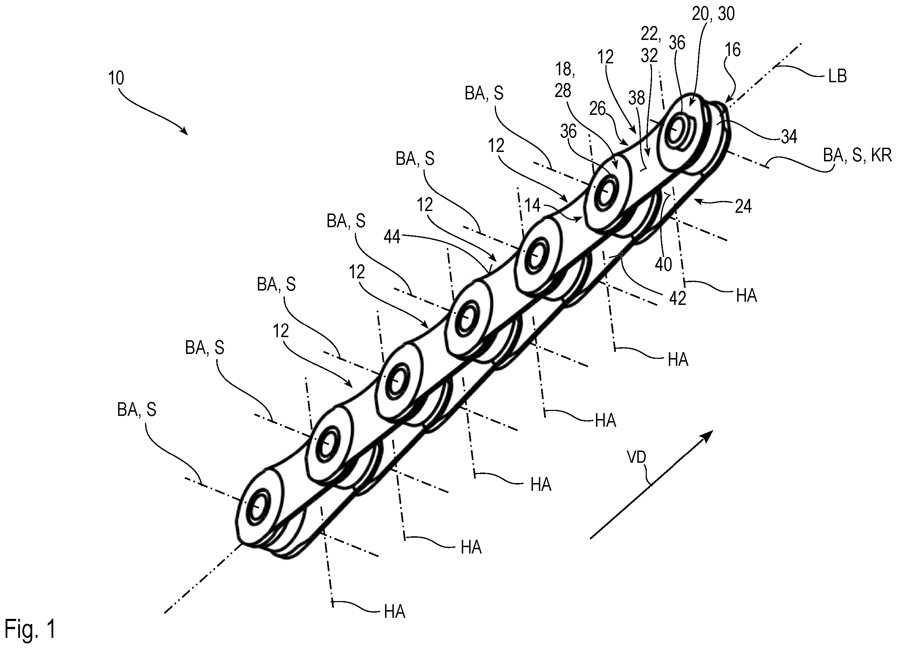

Die Figuren sind nicht maßstabsgetreu. Der besseren Übersichtlichkeit wegen sind in den Figuren 1 bis 15 nicht alle gleich gestalteten Baugruppen und Bauteile jeweils mit Bezugszeichen versehen.

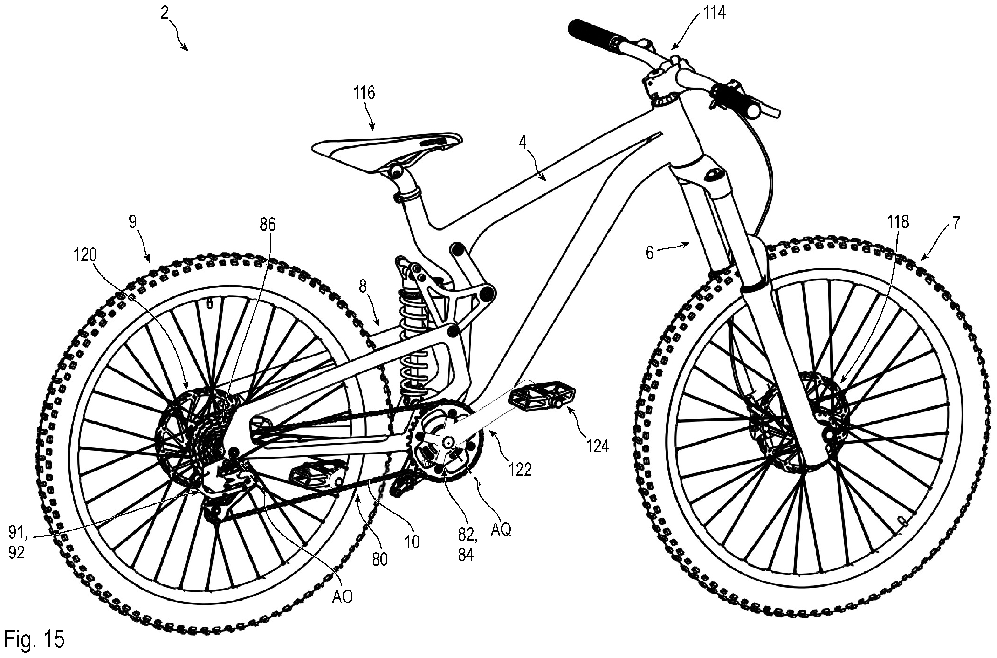

In Figur 15 ist ein Fahrrad 2 beispielhaft perspektivisch abgebildet. Das Fahrrad 2 weist einen Rahmen 4 auf, an welchem eine gefederte Vorderradgabel 6 mit einem daran drehbar aufgenommenen Vorderrad 7 lenkbar befestigt ist und an welchem eine gefederte Hinterradgabel 8 mit einem daran drehbar aufgenommen Hinterrad 9 befestigt ist.

Das Vorderrad 7 ist über einen Lenker 114 in an sich bekannter Weise lenkbar. Ein Sattel 116 bietet dem Fahrradfahrer während des Fahrens eine Sitzgelegenheit.

Das Vorderrad 7 und das Hinterrad 9 sind jeweils über Bremsscheiben 118 bzw. 120 durch entsprechende Bremsbetätigung am Lenker 114 bremsbar.

Der Antrieb des Fahrrads 2 erfolgt in an sich bekannter Weise durch eine Kurbelanordnung 122 mit Pedalen 124. Eine Fahrrad-Antriebsanordnung 80 umfasst im dargestellten Beispiel eine vordere Kettenblattanordnung 82 mit genau einem vorderen Kettenblatt 84. Dieses ist unmittelbar drehmomentübertragend mit der Kurbelanordnung 122 verbunden. Die vordere Kettenblattanordnung dreht wie die Kurbelanordnung 122 um die gemeinsame Anordnungsachse AQ.

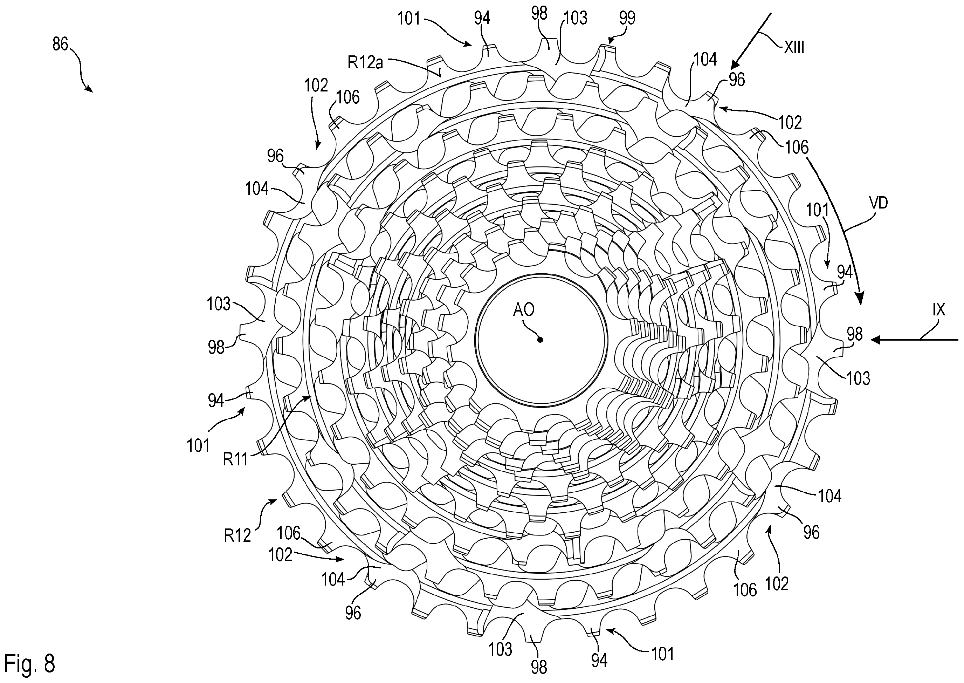

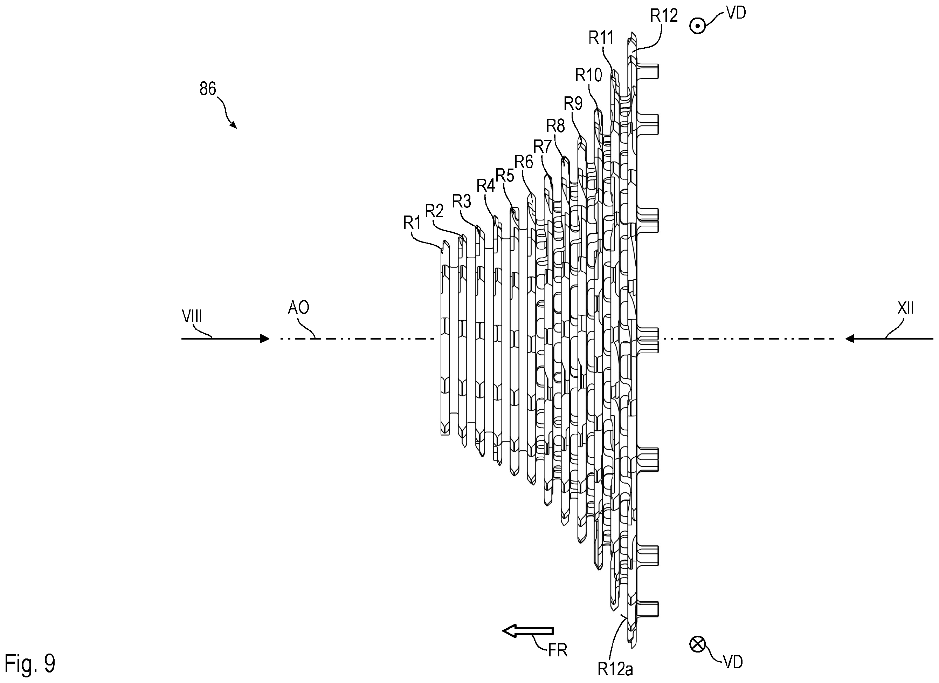

Die Fahrrad-Antriebsanordnung 80 umfasst außerdem eine hintere Fahrrad-Ritzelanordnung 86, welche drehmomentübertragend mit einer Nabe des Hinterrads 9 gekoppelt ist. Die Fahrrad-Ritzelanordnung 86, welche eine Mehrzahl von parallelen, koaxialen und zur gemeinsamen Drehung verbundenen Ritzeln aufweist, ist in detaillierterer Ansicht in den Figuren 8 und 9 dargestellt. Die Fahrrad-Ritzelanordnung 86 dreht wie das Hinterrad 9 um die gemeinsame Anordnungsachse AO. Die Anordnungsachsen AO und AQ sind zueinander parallel.

Eine nachfolgend ausführlich beschriebene Fahrradkette 10, welche ebenfalls Teil der Fahrrad-Antriebsanordnung 80 ist, läuft im betriebsbereiten Zustand geschlossen um die Kettenblattanordnung 82 und um die Fahrrad-Ritzelanordnung 86 um, wobei sie mit dem einzigen vorderen Kettenblatt 84 und mit einem der Ritzel der Fahrrad-Ritzelanordnung 86 in formschlüssigem, kämmendem Eingriff ist. Die Drehmoment von der Kettenblattanordnung 82 zur Fahrrad-Ritzelanordnung 86 übertragende Fahrradkette 10 kann durch eine Kettenradschaltung 91 mit einem Umwerfer 92 zum Eingriff auf unterschiedliche Ritzel der Fahrrad-Ritzelanordnung 86 als der Schalt-Kettenradanordnung der Fahrrad-Antriebsanordnung 80 umgelegt werden. Der hintere Umwerfer 92, welcher im dargestellten Ausführungsbeispiel der einzige Umwerfer 92 des Fahrrads ist, wird in an sich bekannter Weise entweder durch einen Bowdenzug oder durch elektrische Signale aufgrund entsprechender Betätigung zugehöriger Schalter am Lenker 114 längs der Anordnungsachse AO der Ritzel der Fahrrad-Ritzelanordnung 86 verlagert.

In den Figuren 1 bis 4 ist ein gestreckter Abschnitt einer erfindungsgemäßen Ausführungsform einer Fahrradkette der vorliegenden Anmeldung allgemein mit 10 bezeichnet. Ein Pfeil VD gibt an, in welche Richtung sich der jeweils dargestellte Abschnitt der Kette 10 bewegt, wenn die Antriebsanordnung 80 zur Vorwärtsfahrt angetrieben wird.

Die Fahrradkette 10 erstreckt sich längs einer virtuellen Kettenlängsbahn LB. Längs dieser Kettenlängsbahn LB folgen im Wesentlichen identische Kettenglieder 12 aufeinander.

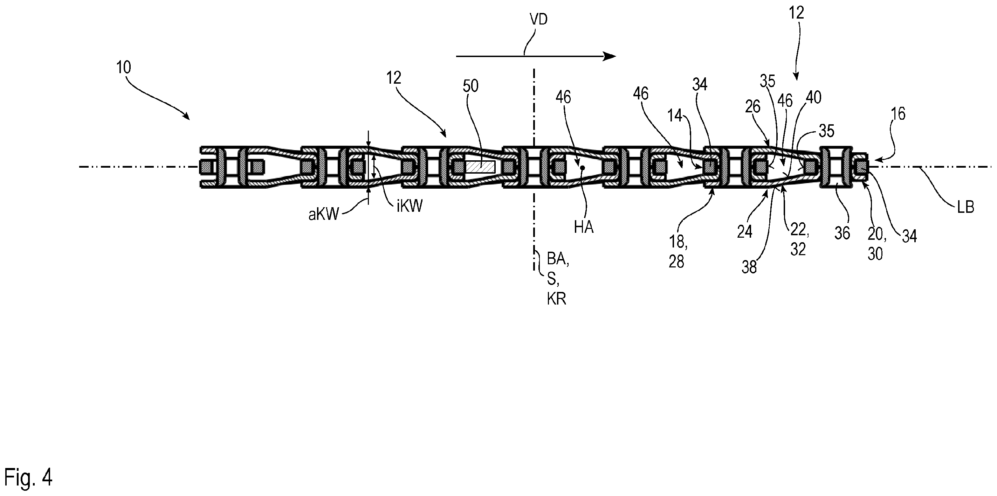

Ein Kettenglied 12 weist als gekröpftes Kettenglied 12 ein breiteres Längsende 14 und ein schmäleres Längsende 16 auf (siehe hierzu das in Figur 1 vorderste Kettenglied 12). Die innere Kettengliedweite iKW und die äußere Kettengliedweite aKW (siehe jeweils Fig. 4), welche längs einer virtuellen Kettenbreitenachse BA zu messen ist, ist am breiteren Längsende 14 größer als am schmäleren Längsende 16. Die zur virtuellen Kettenlängsbahn LB orthogonale virtuelle Kettenbreitenachse BA verläuft parallel bzw. koaxial zu Schwenkachsen S, um welche längs der Kettenlängsbahn LB unmittelbar aufeinanderfolgende Kettenglieder 12 relativ zueinander schwenkbar verbunden sind.

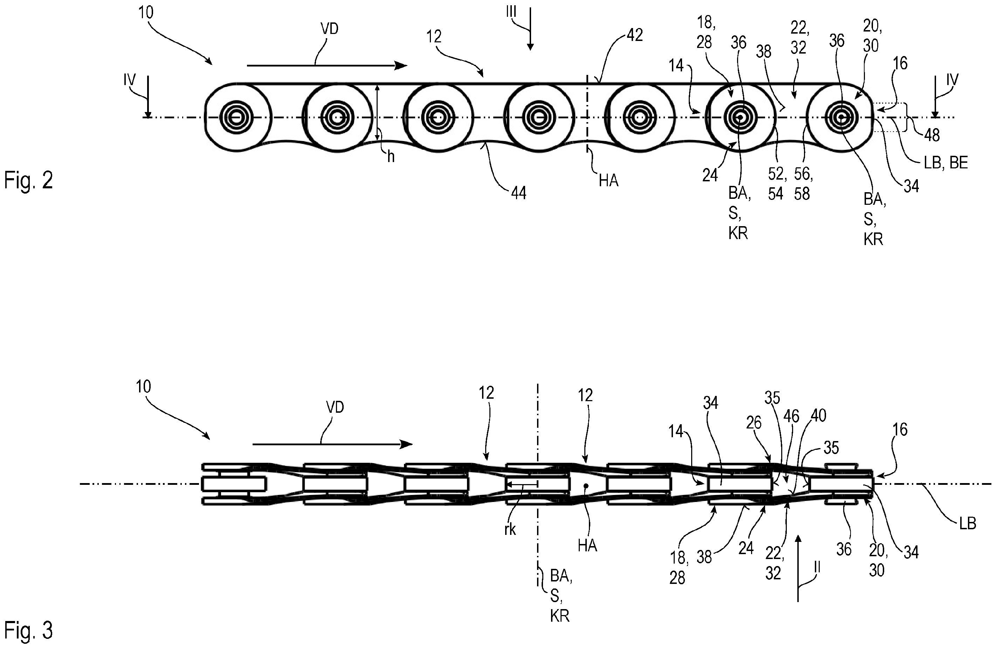

Eine sowohl zur virtuellen Kettenlängsbahn LB als auch zur virtuellen Kettenbreitenachse BA orthogonale virtuelle Kettenhöhenachse HA komplettiert das vorliegend zur Beschreibung der Fahrradkette 10 verwendete kartesische Koordinatensystem. Die Höhenabmessung h der Fahrradkette 10 (s. Fig. 2) ist längs der virtuellen Kettenhöhenachse HA zu messen.

Da die unmittelbar längs der Kettenlängsbahn LB aufeinander folgenden Kettenglieder 12 um Schwenkachsen S relativ zueinander schwenkbar verbunden sind und die Fahrradkette im Betrieb geschlossen um zwei mit Abstand voneinander angeordnete Kettenräder umläuft, kann und wird die Kettenlängsbahn LB im Betrieb der Fahrradkette 10 abschnittsweise gekrümmt verlaufen. Ebenso wird in diesen gekrümmten Abschnitten der Fahrradkette 10 die Kettenhöhenachse HA im Raum lokal unterschiedlich orientiert sein. Die kleinste bestimmungsgemäß als unverformbar anzusehende Einheit der Fahrradkette 10 ist ein Kettenglied 12, sodass es zur Veranschaulichung der räumlich unterschiedlichen Orientierung der Kettenlängsbahn LB und der Kettenhöhenachse HA Sinn macht, jedem Kettenglied 12 eine lokale Kettenlängsbahn LB und eine lokale Kettenhöhenachse HA zuzuordnen, welche lokal der jeweiligen Kettenlängsbahn LB und der Kettenhöhenachse HA der Fahrradkette 10 entspricht. Das verwendete kartesische Koordinatensystem ist daher nicht nur ein Koordinatensystem der Fahrradkette 10, sondern auch ein Koordinatensystem eines jeden Kettenglieds 12.

An das breitere Längsende 14 schließt sich längs der Kettenlängsbahn LB in Richtung zum schmäleren Längsende 16 hin ein breiterer Längsendbereich 18 an. An das schmälere Längsende 16 schließt sich längs der Kettenlängsbahn LB in Richtung zum breiteren Längsende 14 hin ein schmälerer Längsendbereich 20 an. Zwischen dem breiteren Längsendbereich 18 und dem schmäleren Längsendbereich 20 liegt ein Verjüngungsabschnitt 22, in welchem die Breitenabmessung der Fahrradkette 10 bzw. eines Kettenglieds 12 von der breiteren Abmessung des Kettenglieds 12 im breiteren Längsendbereich 18 auf dessen schmälere Abmessung im schmäleren Längsendbereich 20 überführt wird.

Jedes Kettenglied 12 weist eine Kettenlasche 24 und eine von der Kettenlasche 24 gesondert ausgebildete Kettenlasche 26 auf, welche einander längs der Kettenbreitenachse BA gegenüberliegen und welche im Wesentlichen spiegelsymmetrisch bezüglich einer zur Kettenbreitenachse BA orthogonalen Spiegelsymmetrieachse ausgebildet sind. Aufgrund der beschriebenen Spiegelsymmetrie reicht nachfolgend die Beschreibung einer Kettenlasche 24 aus. Die Gestalt der dieser gegenüberliegenden Kettenlasche 26 ergibt sich unter Berücksichtigung der Spiegelsymmetriebedingung aus der beschriebenen Gestalt der Kettenlasche 24.

Die Kettenlasche 24 weist einen ersten Längsendbereich 28 auf, welcher zur Bildung des breiteren Längsendbereichs 18 des Kettenglieds 12 beiträgt. Nur wegen der Zuordnung des ersten Längsendbereichs 28 der Kettenlasche 24 zum breiteren Längsendbereich 18 des Kettenglieds 12 wird der erste Längsendbereich 28 der Kettenlasche 24 nachfolgend auch als "breiterer" Längsendbereich 28 der Kettenlasche 24 bezeichnet.

Die Kettenlasche 24 weist weiter einen zweiten Längsendbereich 30 auf, welcher im vorstehend genannten Sinne als "schmälerer" Längsendbereich 30 zur Bildung des schmäleren Längsendbereichs 20 des Kettenglieds 12 beiträgt.

Die gewählten Bezeichnungen des ersten und des zweiten Längsendbereichs 28 bzw. 30 sagen nichts über die tatsächlichen Breitenabmessungen der Bereiche oder deren Abmessungsverhältnisse untereinander aus.

Längs der Kettenlängsbahn LB liegt zwischen dem breiteren Längsendbereich 28 und dem schmäleren Längsendbereich 30 der Kettenlasche 24 ein bezüglich dieser Längsendbereiche 28 und 30 schrägstehender dritter Längsabschnitt 32 der Kettenlasche 24, welcher im vorstehenden Zuordnungssinn als Verjüngungsabschnitt 32 der Kettenlasche 24 zur Bildung des Verjüngungsabschnitts 22 des Kettenglieds 12 beiträgt.

Im schmäleren Längsendbereich 20 des Kettenglieds 12 ist zwischen den schmäleren Längsendbereichen 30 der Kettenlaschen 24 und 26 eine Kettenrolle 34 aufgenommen. Die Kettenrolle 34 ist um die virtuelle Schwenkachse S relativ zu den Kettenlaschen 24 und 26 drehbar. Die virtuelle Schwenkachse S ist somit auch Kettenrollenachse KR der Kettenrolle 34 eines Kettenglieds 12.

Ein längs der Kettenbreitenachse BA verlaufender Stift 36 verbindet die Kettenlaschen 24 und 26 in ihren schmalen Längsendbereichen 30 miteinander. Die bevorzugt hohlzylindrische Kettenrolle 34 umgibt den Stift 36 geschlossen umlaufend.

Wie bereits in Figur 1 zu erkennen ist, ragt längs der Kettenlängsbahn LB der schmälere Längsendbereich 20 eines Kettenglieds 12 in den breiteren Längsendbereich 18 eines längs der Kettenlängsbahn LB unmittelbar benachbarten Kettenglieds 12 hinein. Der Stift 36 durchsetzt somit nicht nur die schmäleren Längsendbereiche 30 der Kettenlaschen 24 und 26 eines Kettenglieds 12, sondern auch die breiteren Längsendbereiche 28 der Kettenlaschen 24 und 26 des längs der Kettenlängsbahn LB benachbarten Kettenglieds 12, zwischen welchen der einragende schmälere Längsendbereich 20 des erstgenannten Kettenglieds 12 aufgenommen ist. Der Stift 36 schließt im Bereich des breiteren Längsendbereichs 18 bevorzugt bündig mit der jeweiligen Kettenlaschenaußenfläche 38 der Kettenlaschen 24 und 26 ab.

In Figur 1 ist ein Teil der Kettenlascheninnenflächen 40 der Kettenlaschen 24 zu erkennen. Die Kettenlascheninnenflächen 40 der Kettenlaschen 24 und 26 weisen aufeinander zu, die Kettenlaschenaußenflächen 38 dagegen voneinander weg.

In den Figuren 2 bis 4 sind unterschiedliche Ansichten derselben Fahrradkette 10 von Figur 1 gezeigt.

Der besseren Übersichtlichkeit wegen sind in den Figuren 2 bis 4 Merkmale, die für alle Kettenglieder 12 und deren dem Betrachter von Figur 2 zugewandten Kettenlaschen 24 gelten, an unterschiedlichen Kettengliedern 12 dargestellt, um die Beschriftung der Figuren über die Zeichnungsfläche hinweg zu entzerren.

Figur 2 zeigt eine Seitenansicht der Fahrradkette 10 von Figur 1 längs des Pfeils II in Figur 3. Die Blickrichtung verläuft längs der Kettenbreitenachse BA. In der in Figur 2 gezeigten Ausführungsform ist der obere Längsrand 42 der Kettenlaschen 24 und folglich der Kettenglieder 12 als geradliniger Längsrand 42 ausgebildet. Der entgegengesetzte, in Figur 2 untere Längsrand 44 ist dagegen im Bereich des Verjüngungsabschnitts 22 bzw. 32 konkav ausgebildet. Im breiteren Längsendbereich 18 bzw. 28 sowie im schmäleren Längsendbereich 20 bzw. 30 ist der untere Längsrand 44 dagegen konvex ausgebildet. Die Höhenabmessung h einer Kettenlasche 24 und damit eines Kettenglieds 12 variiert somit längs der Längserstreckung von Kettenlasche 24 und Kettenglied 12.

Die Eingriffsseite der Fahrradkette 10, an welcher ein Eintritt und ein Austritt eines Kettenradzahns in einen in den Figuren 3 und 4 gezeigten Zahneingriffsraum 46 eines Kettenglieds 12 erfolgt, ist jene des unteren Längsrandes 44. Die abschnittsweise konkave Ausbildung des unteren Längsrandes 44, welcher bei einer geschlossen umlaufenden Fahrradkette 10 ein radial innerer Längsrand 44 der Fahrradkette 10 ist, erleichtert die Bewegung der Fahrradkette 10 über einen Zahnkopf eines Kettenradzahns hinweg. Diese Bewegung erfolgt beim Schalten der Fahrradkette 10 im Bereich des konkaven Abschnitts des unteren Längsrandes 44.

Der Verjüngungsabschnitt 22 bzw. 32 ist jener Abschnitt des Kettenglieds 12 bzw. der Kettenlasche 24, welcher den Zahneingriffsraum 46 längs der Kettenbreitenachse BA begrenzt. Der Zahneingriffsraum 46 ist längs der Kettenlängsbahn LB durch zwei unmittelbar benachbarte Kettenrollen 34 bzw. durch deren Mantelflächen 35 begrenzt.

Figur 2 zeigt die zur Zeichenebene der Figur 2 orthogonale und mit der Längsbahn LB zusammenfallende Bezugsebene BE, welche durch die virtuellen Schwenkachsen S eines Kettenglieds 12 definiert ist.

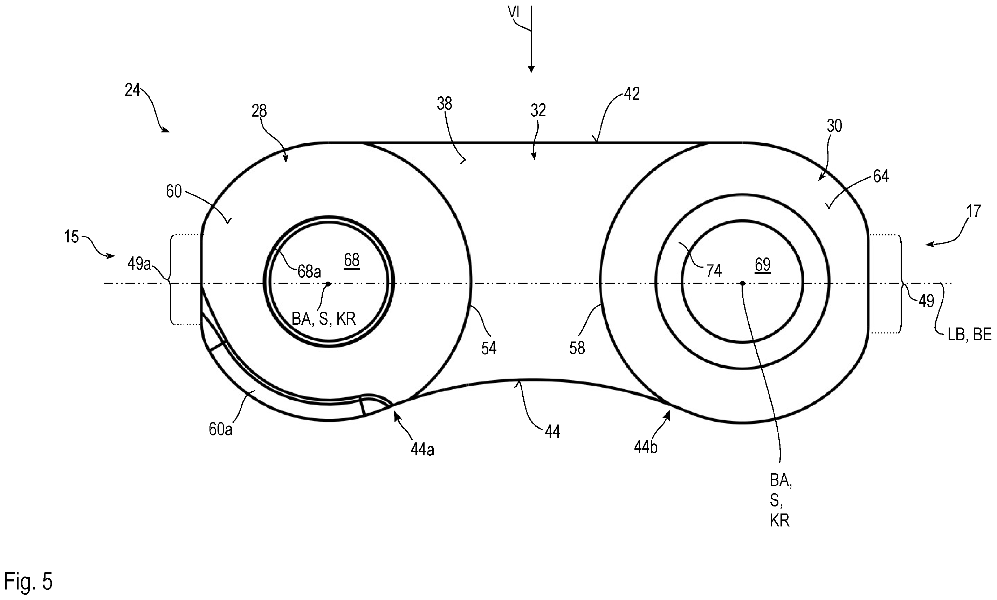

In Figur 2 ist am rechten Ende des dargestellten Abschnitts der Fahrradkette 10 das schmälere Längsende 16 des Kettenglieds 12 dargestellt. An diesem schmäleren Längsende 16 des Kettenglieds 12 sind die Kettenlaschen 24 und 26 abgeflacht, wie weiter unten im Zusammenhang mit den Figuren 5 bis 7 näher beschrieben werden wird. An dem abgeflachten schmäleren Längsende 16 steht die zwischen den Kettenlaschen 24 und 26 in deren schmäleren Längsendbereichen 30 aufgenommene Kettenrolle 34 längs der Kettenlängsbahn LB geringfügig, mit etwa 3 % bis 5 % der radialen Abmessung rk der Kettenrolle 34 bezüglich ihrer Kettenrollenachse KR (s. Fig. 3), über das schmälere Längsende 16 des Kettenglieds 12 vor. Das Vorstehen der Kettenrolle 34 über das schmälere Längsende 16 erfolgt in einem sich längs der Kettenhöhenachse HA erstreckenden Höhenabschnitt 48 des Kettenglieds 12, welcher die Bezugsebene enthält und welche sich bevorzugt symmetrisch um die Bezugsebene erstreckt.

Durch die über das Längsende 16 vorstehende Kettenrolle 34 gelangt ein Kettenradzahn, welcher in den längs der Kettenlängsbahn LB von den Mantelflächen 35 zweier aufeinander folgender Kettenrollen 34 begrenzten Zahneingriffsraum 46 eingreift, nur in Anlageeingriff mit der Kettenrolle 34, nicht dagegen mit einer Kettenlasche 24 oder 26, etwa mit einem Abschnitt des umlaufenden Randes der Kettenlasche 24 oder 26. Dadurch kann in sehr vorteilhafter Weise Kraft zwischen der Fahrradkette 10 und einem Kettenradzahn ausschließlich über die um ihre Kettenrollenachse KR drehbaren Kettenrollen 34 übertragen werden.

In Figur 4 ist grobschematisch und beispielhaft zur Veranschaulichung ein in einen Zahneingriffsraum 46 eingreifender Kettenradzahn 50 dargestellt. Der Kettenradzahn 50 in Figur 4 ist wie die gesamte Fahrradkette 10 in der Bezugsebene BE geschnitten dargestellt.

Der Zahneingriffsraum 46 hat in der Schnittdarstellung von Figur 4 in der Bezugsebene BE eine trapezförmige Gestalt, welche ermöglicht, die Fahrradkette 10 relativ zum eingreifenden Zahn 50 um eine zu ihrer Kettenhöhenachse HA parallele Drehachse zu drehen. Diese Drehung gestattet, die Kette relativ zu parallelen Kettenradebenen zweier koaxialer Kettenräder schräg zu stellen, sodass die schräggestellte Fahrradkette 10 den Abstand zwischen den beiden parallelen Kettenradebenen und folglich zwischen den beiden koaxialen Kettenrädern überbrücken und von einem der parallelen Kettenräder auf das jeweils andere umgelegt werden kann. Aufgrund der trapezförmigen Gestalt des Zahneingriffsraums 46 wenigstens in der Bezugsebene BE verringert sich die lichte innere Kettengliedweite iKW längs der Kettenlängsbahn LB vom breiteren Längsendbereich 18 zum schmäleren Längsendbereich 20 hin. Die Abnahme der lichten inneren Kettengliedweite iKW ist bevorzugt linear, stetig und kontinuierlich.

Die Eingriffssituation in Figur 4 ist eine Eingriffssituation, bei welcher die in Figur 4 längs der Kettenlängsbahn LB nach rechts bewegte Fahrradkette 10 Kraft auf den Kettenradzahn 50 überträgt. Diese Situation ist eine typische Eingriffssituation, wie sie an Hinterradritzeln auftritt, an die die Fahrradkette 10 Kraft bzw. Drehmoment überträgt.

Wie aus der Schnittdarstellung von Figur 4 hervorgeht, sind die Stifte 36 Hohlstifte bzw. Hülsen 36, deren zentrale Achsen an der fertig montierten Fahrradkette 10 die Schwenkachsen S sind. Deutlich ist in Figur 4 auch zu erkennen, dass die Stifte 36 längs der Kettenbreitenachse BA nicht über die Außenflächen 38 der breiteren Längsendbereiche 18 der Kettenglieder 12 hinaus vorstehen. Dadurch werden die Stifte 36 als mögliches körperliches Hindernis an der Außenseite der Fahrradkette 10 ausgeschlossen.

Ein für die vorliegende Fahrradkette 10 weiterer wichtiger Faktor in der Förderung ihrer Schaltbarkeit zwischen zwei koaxialen Kettenrädern liegt in der Ausgestaltung von Kröpfungsbereichen, welche am vorliegenden Ausführungsbeispiel den Übergang zum einen zwischen dem breiteren Längsendbereich 18 und dem Verjüngungsabschnitt 22 sowie zum anderen zwischen dem Verjüngungsabschnitt 22 und dem schmäleren Längsendbereich 20 eines Kettenglieds 12 bilden.

In der Seitenansicht von Figur 2 ist in der Kettenlaschenaußenfläche 38 ein erster Kröpfungsbereich 52 des Kettenglieds 12 zwischen dem breiteren Längsendbereich 18 und dem Verjüngungsabschnitt 22 des Kettenglieds 12 zu erkennen, welcher auch ein erster Kröpfungsbereich 54 der Kettenlasche 24 zwischen ihrem breiteren Längsendbereich 28 und ihrem Verjüngungsabschnitt 32 ist. Außerdem ist ein zweiter Kröpfungsbereich 56 des Kettenglieds 12 zwischen dem Verjüngungsabschnitt 22 und dem schmäleren Längsendabschnitt 20 des Kettenglieds 12 zu erkennen. Dieser zweite Kröpfungsbereich 56 ist auch ein zweiter Kröpfungsbereich 58 der Kettenlasche 24 zwischen ihrem Verjüngungsabschnitt 32 und ihrem schmäleren Längsendbereich 30.

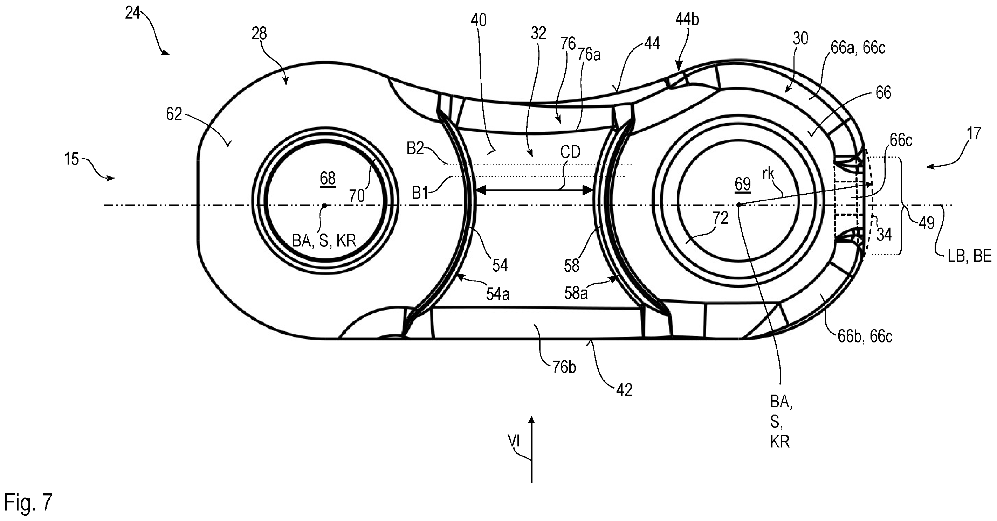

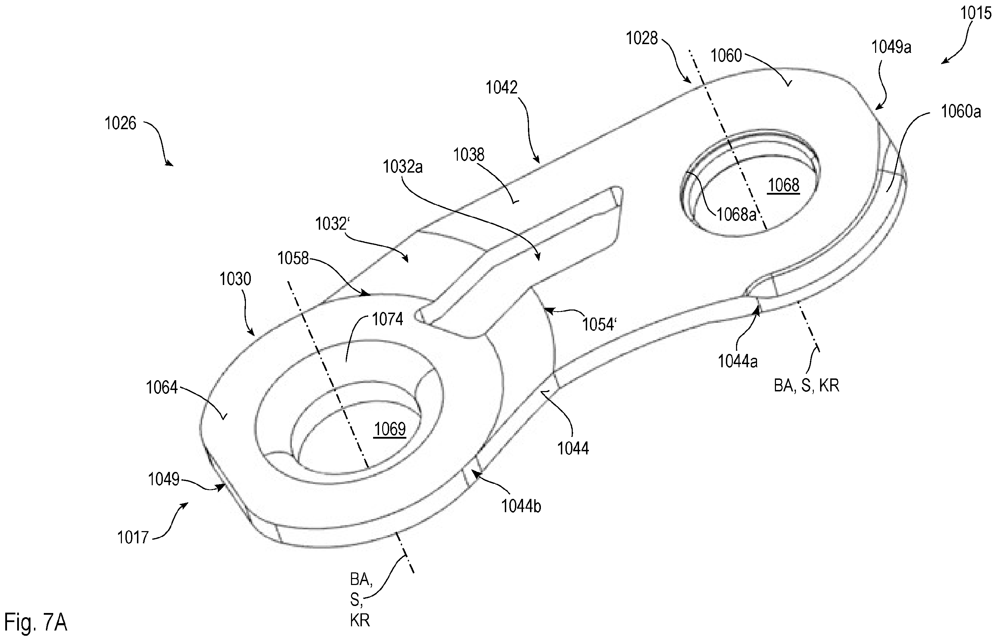

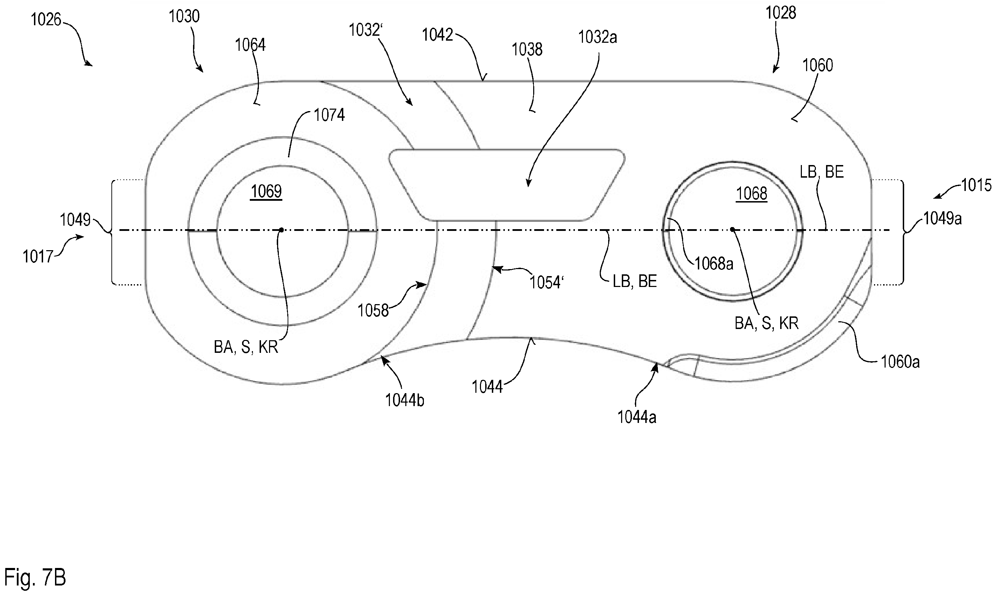

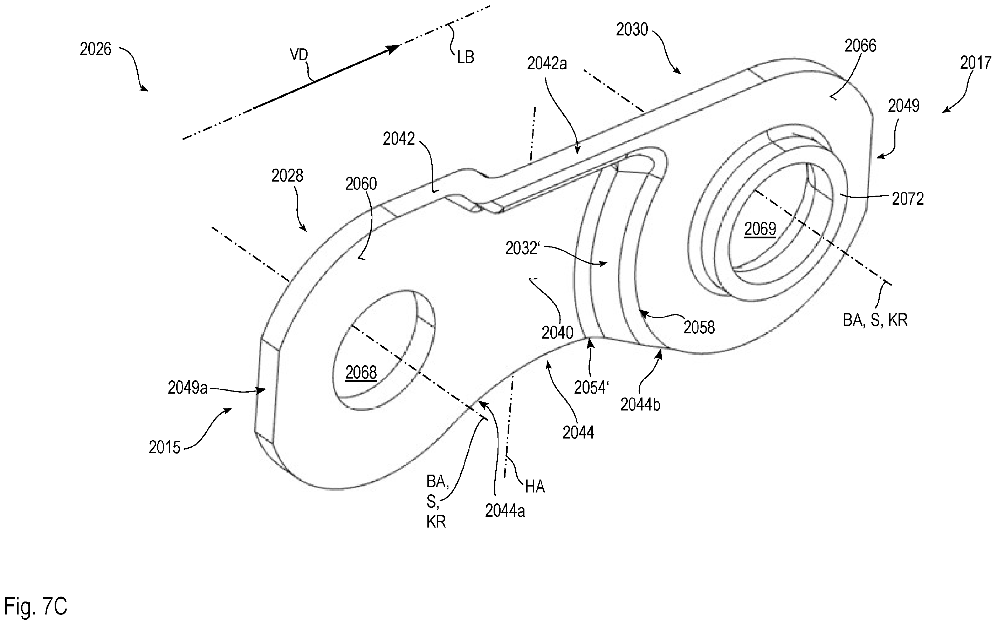

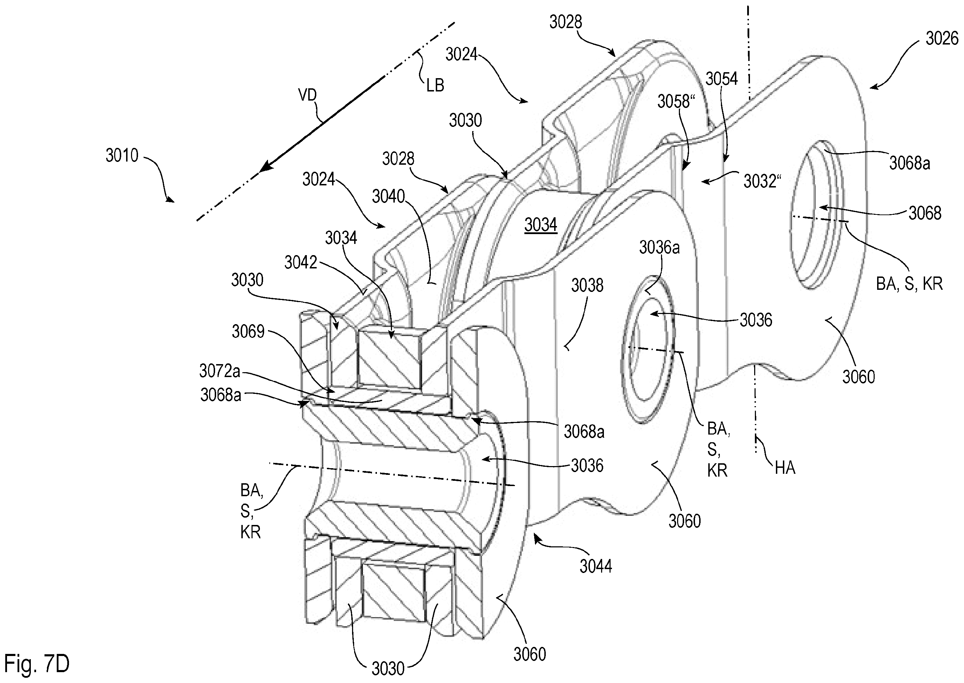

Da die Kröpfungsbereiche 52 und 56 des Kettenglieds 12 aus den Kröpfungsbereichen 54 und 58 der Kettenlaschen 24 und 26 resultieren, werden die Kröpfungsbereiche nachfolgend als Kröpfungsbereiche 54 und 58 der Kettenlasche 24 näher beschrieben werden. Hierzu sind am besten die Darstellungen der Kettenlasche 24 in den Figuren 5 bis 7 geeignet. In den Figuren 5 bis 7 sind ein zur Bildung des breiteren Längsendes 14 des Kettenglieds 12 beitragende erstes Längsende der Kettenlasche 24 mit dem Bezugszeichen 15 und ein zur Bildung des schmäleren Längsendes 16 des Kettenglieds 12 beitragendes zweites Längsende der Kettenlasche 24 mit dem Bezugszeichen 17 gekennzeichnet. Nur wegen der genannten Zuordnung sind das erste Längsende 15 nachfolgend auch als breiteres Längsende 15 bezeichnet und das zweite Längsende 17 als schmäleres Längsende 17. Der zur Bildung des Höhenabschnitts 48 des Kettenglieds 12 beitragende abgeflachte Höhenabschnitt der Kettenlasche 24 am schmalen Längsende 17 ist mit Bezugszeichen 49 versehen. In dem abgeflachten Höhenabschnitt 49 ist der Rand der Kettenlasche 24 weniger stark gekrümmt als in benachbarten Randabschnitten, bevorzugt ungekrümmt bzw. eben, ausgebildet. Am Höhenabschnitt 49 in Fig. 7 ist strichliniert der Verlauf der Kettenrolle 34 und ihr Radius rk angedeutet.

Der Vollständigkeit halber sei darauf hingewiesen, dass der Rand der Kettenlasche 24 auch am breiteren Längsende 15 einen Höhenabschnitt mit einer im Vergleich zu benachbarten Randabschnitten weniger stark gekrümmten, bevorzugt ungekrümmten, Abflachung aufweist.

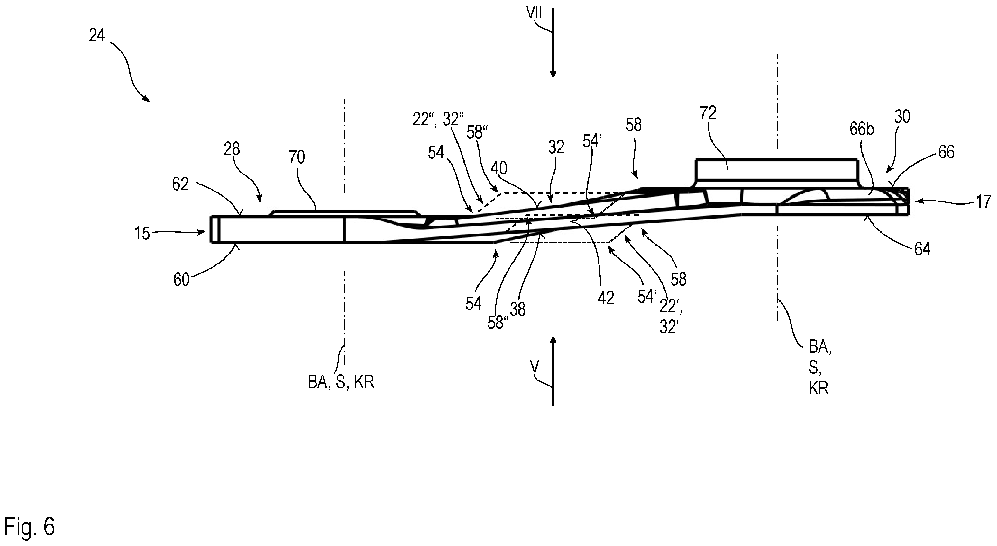

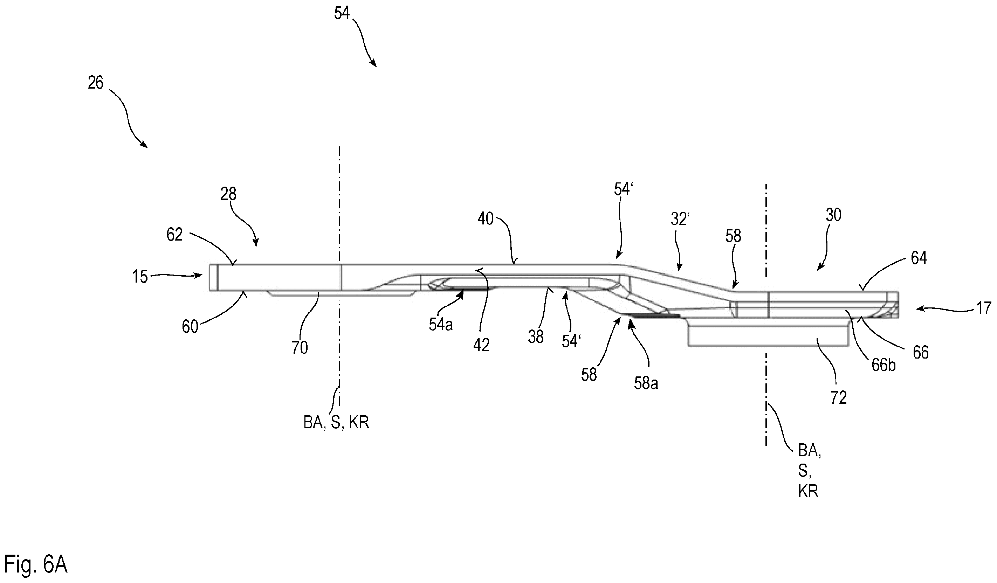

In der Kettenlaschenaußenfläche 38 stellt der erste Kröpfungsbereich 54 eine konvexe Krümmung der Kettenlaschenaußenfläche 38 dar und der zweite Kröpfungsbereich 58 eine konkave Krümmung desselben. In der Kettenlascheninnenfläche 40 ist es umgekehrt (s. Fig. 6). Dort bildet der erste Kröpfungsbereich 54 eine konkave Krümmung der Kettenlascheninnenfläche 40 und der zweite Kröpfungsbereich 58 eine konvexe Krümmung derselben. Daher führen die beiden Kröpfungsbereiche 54 und 58 längs der Kettenlängsbahn LB aufeinanderfolgend zu einer gekröpften Ausbildung der Kettenlasche 24.

Beide Kröpfungsbereiche 54 und 58 weisen im dargestellten Ausführungsbeispiel einen teilkreisförmigen Verlauf um den jeweils an den Kröpfungsbereich anschließenden Längsendbereich auf (s. Fig. 5 und 7). Der breitere Längsendbereich 28 weist in der Kettenlaschenaußenfläche 38 eine im Wesentlichen ebene ringförmige Fläche 60 auf, welche um die den breiteren Längsendbereich 28 durchsetzende virtuelle Schwenkachse S geschlossen umläuft. An die ebene ringförmige Fläche 60 schließt sich in Fig. 5 zum unteren Kettenlaschen-Längsrand 44 eine Fase 60a an, welche bis zum unteren Kettenlaschen-Längsrand 44 reicht. Die Fase 60a verläuft aus einem dem abgeflachten Höhenabschnitt 49 entgegengesetzten abgeflachten Höhenabschnitt 49a am breiteren Längsende 15 und verläuft längs des konvex gekrümmten Randes der Kettenlasche 24 bis kurz vor den oder bis an den dem breiteren Längsende 15 nähergelegenen Wendepunkt 44a des unteren Kettenlaschen-Längsrandes 44, wo sich dessen Krümmung von konvex in konkav ändert. Die Fase 60a läuft im dargestellten Ausführungsbeispiel um mehr als ein Viertel, jedoch um weniger als ein Drittel, eines vollen Umlaufs um die den breiteren Längsendbereich 28 durchsetzende Kettenrollenachse KR um.

Die Fase 60a kann in einer Schnittebene, welche die eine Öffnung 68 im breiteren Längsendbereich 28 zentral durchsetzende Kettenrollenachse KR enthält, einen geraden oder einen gewölbten Verlauf haben. Im Falle eines gewölbten Verlaufs ist dieser bevorzugt bei Draufsicht auf die Kettenlaschenaußenfläche 38 konvex gekrümmt.

Die Öffnung 68 ist auf der Kettenlaschenaußenfläche 38 von einer umlaufenden Einsenkung 68a umgeben. Die Einsenkung 68 dient dazu, Material am Längsende eines Stifts 36 aufzunehmen. Der Stift 36 kann an seinen beiden Längsenden radial in eine jeweilige Einsenkung 68a im jeweiligen breiteren Längsendbereich 28 der Kettenlaschen 24 eines Kettenglieds 12 hinein plastisch verformend aufgeweitet werden. Dadurch kann ein Stift die beiden breiteren Längsendbereiche 28 der Kettenlaschen 24 eines Kettenglieds 12 und die von diesen beiden breiteren Längsendbereichen 28 eingefassten schmäleren Längsendbereiche 30 der beiden Kettenlaschen 24 eines dem vorgenannten Kettenglied 12 unmittelbar benachbarten Kettenglieds 12 formschlüssig zwischen sich halten. Außerdem kann durch den mit der Einsenkung 68 bereitgestellten Aufnahmeraum für Material des Stiftes 36 der Stift 36 äußerst vorteilhaft bündig mit den Außenfläche des breiteren Längsendbereichs 18 eines Ketteglieds angeordnet werden, was das Schaltverhalten der Fahrradkette 10 erheblich verbessert, da ihre Außenfläche keine eine Schaltung behindernden Vorsprünge aufweist, welche bei einem Schaltvorgang mit anderen Komponenten, wie etwa einer Kettenführung, einem Kettenrad oder einem Kettenritzel kollidieren könnten.

Ebenso weist der schmälere Längsendbereich 30 in der Kettenlaschenaußenfläche 38 eine im Wesentlichen ebene ringförmige Fläche 64 auf, welche um die den schmäleren Längsendbereich 30 durchsetzende Schwenkachse S geschlossen umläuft.

In der Kettenlascheninnenfläche 40 weist der breitere Längsendbereich 28 eine im Wesentlichen ebene ringförmige Fläche 62 auf, welche um die den breiteren Längsendbereich 28 durchsetzende virtuelle Schwenkachse S geschlossen umläuft. Ebenso weist der schmälere Längsendbereich 30 in der Kettenlascheninnenfläche 40 eine im Wesentlichen ebene ringförmige Fläche 66 auf, welche um die den schmäleren Längsendbereich 30 durchsetzende Schwenkachse S geschlossen umläuft.

Wie in der die Innenseite der Kettenlasche 24 zeigenden Seitenansicht von Fig. 7 dargestellt ist, ist am ersten Kröpfungsbereich 54 der Übergang von der ebenen ringförmigen Fläche 62 zu dem benachbarten Verjüngungsabschnitt 32 durch eine Stufenanordnung 54a mit einer oder mehreren Stufen gebildet. Die Stufenanordnung 54a stuft in Fig. 7 die innere Oberfläche der Kettenlasche 24 in Richtung vom Betrachter der Fig. 7 weg ab. In gleicher Weise ist am zweiten Kröpfungsbereich 58 der Übergang von der ebenen ringförmigen Fläche 66 zu dem benachbarten Verjüngungsabschnitt 32 durch eine Stufenanordnung 58a mit einer oder mehreren Stufen gebildet. Auch die Stufenanordnung 58a stuft in Fig. 7 die innere Oberfläche der Kettenlasche 24 vom Betrachter der Fig. 7 weg ab.

Da, wie Fig. 5 zeigt, an der Kettenlaschenaußenfläche 38 der Übergang von den ringförmigen Flächen 60 und 64 jeweils zum benachbarten Verjüngungsabschnitt 32 ungestuft ausgebildet ist, an der Kettenlascheninnenfläche 40 dagegen schon, ist die Kettenlasche 24 im Verjüngungsabschnitt 32 mit einer geringeren Materialstärke ausgebildet als an den Längsendbereichen 28 und 30, wo die Materialstärke der Kettenlasche 24 durch den Abstand der einander entgegengesetzten ringförmigen Flächen 60 und 62 (am breiteren Längsendbereich 28) bzw. durch die einander entgegengesetzten ringförmigen Flächen 64 und 66 (am schmäleren Längsendbereich 30) definiert ist. Durch eine reduzierte Materialstärke der Kettenlasche 24 im Bereich zwischen den Längsendbereichen 28 und 30 wird ein unter Beteiligung der Kettenlasche 24 gebildeter Zahneingriffsraum 46 längs der virtuellen Kettenbreitenachse BA vergrößert, was den Zahneingriff erleichtert. Im vorliegenden Fall bildet der Verjüngungsabschnitt 32 einen Großteil der Strecke zwischen den beiden virtuellen Kettenrollenachsen KR der Kettenlasche 24, sodass zur Erleichterung eines Zahneingriffs der geneigte Verjüngungsabschnitt 32 dünner ausgebildet ist als die zu den virtuellen Kettenrollenachsen KR orthogonalen Materialbereiche der Kettenlasche 24, welche unmittelbar die Öffnungen 68 und 69 umgeben.

Wie in der Ansicht von Figur 6, in welcher der Betrachter auf den oberen Kettenlaschen-Längsrand 42 blickt, sowie in Figur 7, in welcher der Betrachter auf die Kettenlascheninnenfläche 40 blickt, zu erkennen ist, ist die die Kettenlasche 24 im breiteren Längsende 28 durchsetzende kreisrunde Öffnung 68, welche an der fertig montierten Fahrradkette 10 ein Längsende eines Stifts 36 aufnimmt, auf der Innenseite der Kettenlasche 24 von einem um die kreisrunde Öffnung 68 umlaufenden Wulst 70 umgeben. Der Wulst 70 kragt längs der Kettenbreitenachse BA um weniger als die Hälfte, vorzugsweise um weniger als ein Viertel, des längs der Kettenbreitenachse BA zu messenden Abstands zwischen den ebenen ringförmigen Flächen 60 und 62 aus.

In Figur 6 ist außerdem strichliniert eine zweite Ausführungsform der Kettenlasche 24 und damit der Fahrradkette 10 grobschematisch angedeutet. Der erste Kröpfungsbereich 54' liegt in dieser zweiten Ausführungsform näher bei der den schmäleren Längsendbereich 30 durchsetzenden Kettenrollenachse KR als bei der den breiteren Längsendbereich 28 durchsetzenden Kettenrollenachse KR. Die Lage und Ausgestaltung des zweiten Kröpfungsbereichs 58 ist in dieser zweiten Ausführungsform im Verhältnis zu der zuvor beschriebenen und in Figur 6 mit durchgezogenem Strich dargestellten ersten Ausführungsform unverändert. Der Verjüngungsabschnitt 22' bzw. 32' der zweiten Ausführungsform ist daher längs der Kettenlängsbahn LB kürzer und der die maximale innere Kettengliedweite aufweisende Abschnitt ist längs der Kettenlängsbahn LB länger ausgebildet als die entsprechenden Abschnitte der zuvor beschriebenen ersten Ausführungsform. Da der erste Kröpfungsbereich 54' der zweiten Ausführungsform von der umlaufenden Mantelfläche der im breiteren Längsendbereich aufgenommenen Kettenrolle entfernt gelegen ist und der Verjüngungsabschnitt 22' bzw. 32' der zweiten Ausführungsform eine Einführungsbewegung eines Kettenradzahns in den Zahneingriffsraum 46 kaum unterstützt, kann der erste Kröpfungsbereich 54' geradlinig, etwa parallel zur Kettenhöhenachse HA verlaufen. Der erste Kröpfungsbereich 54' kann daher durch Biegen oder wiederum durch Prägen erzeugt sein.

Weiter ist in Figur 6 strichliniert eine dritte Ausführungsform der Kettenlasche 24 und damit der Fahrradkette 10 grobschematisch angedeutet. Die Lage und Ausgestaltung des ersten Kröpfungsbereichs 54 ist in dieser dritten Ausführungsform im Verhältnis zu der oben beschriebenen und in Figur 6 mit durchgezogenem Strich dargestellten ersten Ausführungsform unverändert. Der zweite Kröpfungsbereich 58" liegt in dieser dritten Ausführungsform näher bei der den breiteren Längsendbereich 28 durchsetzenden Kettenrollenachse KR als bei der den schmäleren Längsendbereich 30 durchsetzenden Kettenrollenachse KR. Der Verjüngungsabschnitt 22" bzw. 32" der dritten Ausführungsform ist daher längs der Kettenlängsbahn LB kürzer und der die maximale innere Kettengliedweite aufweisende Abschnitt ist längs der Kettenlängsbahn LB länger ausgebildet als die entsprechenden Abschnitte der oben beschriebenen ersten Ausführungsform. Da der zweite Kröpfungsbereich 58" der dritten Ausführungsform von der umlaufenden Mantelfläche der im breiteren Längsendbereich 28 aufgenommenen Kettenrolle entfernt gelegen ist und der Verjüngungsabschnitt 22" bzw. 32" der dritten Ausführungsform eine Einführungsbewegung eines Kettenradzahns in den Zahneingriffsraum 46 kaum unterstützt, kann der zweite Kröpfungsbereich 58" geradlinig, etwa parallel zur Kettenhöhenachse HA verlaufen. Der zweite Kröpfungsbereich 58" kann daher durch Biegen oder wiederum durch Prägen erzeugt sein.

Im Falle der lediglich mit unterschiedlicher Strichlinierung angedeuteten zweiten und dritten Ausführungsform ist entweder der zu den Kettenrollenachsen KR orthogonale breitere Längsendbereich 28 längs der Kettenlängsbahn LB länger ausgeführt als der schmälere Längsendbereich 30 oder umgekehrt. Bei der angedeuteten zweiten Ausführungsform ist daher ein zwischen dem Verjüngungsabschnitt 32' und der Öffnung 68 gelegener Abschnitt der Kettenlasche bevorzugt dünner ausgebildet als ein die Öffnung 68 unmittelbar umgebender Kettenlaschenbereich mit den ebenen Flächen 60 und 62. Bei der angedeuteten dritten Ausführungsform ist analog dazu ein zwischen dem Verjüngungsabschnitt 32" und der Öffnung 69 gelegener Abschnitt der Kettenlasche bevorzugt dünner ausgebildet als ein die Öffnung 69 unmittelbar umgebender Kettenlaschenbereich mit den ebenen Flächen 64 und 66. Wiederum soll die dünnere Ausbildung des den Zahneingriffsraum begrenzenden Kettenlaschenbereichs das für einen Zahneingriff in den Zahneingriffsraum bereitstehende Volumen vergrößern und damit den Zahneingriff erleichtern.

Auf der Innenseite der Kettenlasche 24 ragt ein Kragen 72 längs der Kettenbreitenachse BA von der Kettenlasche 24 ab. Dieser Kragen 72, welcher koaxial mit der die Kettenlasche 24 am schmäleren Längsendbereich 30 vollständig durchsetzenden kreisrunden Öffnung 69 ausgebildet ist und diese geschlossen umlaufend umgibt, ragt in der fertig montierten Fahrradkette 10 in die zentrale Ausnehmung der Kettenrolle 34 ein. Der die beiden längs der Kettenbreitenachse BA einander gegenüberliegenden Kettenlaschen 24 und 26 verbindende Stift 36 durchsetzt den Kragen 72.

In Figur 5 ist ein die Öffnung 69 umgebender ringförmiger Bereich 74 gezeigt, welcher radial innen an die ebene ringförmige Fläche 64 anschließt und als etwa eine Viertel-Torusfläche einen Übergang zwischen dem im Wesentlichen ebenen ringförmigen Bereich 64 und einer radial inneren Oberfläche des Kragens 72 bildet.

Die Auskraglänge des Kragens 72 von der ihn umgebenden ebenen ringförmigen Fläche 66 längs der Kettenbreitenachse BA beträgt mehr als das Dreifache, bevorzugt mehr als das Vierfache der Auskraglänge des Wulsts 70 bezüglich der den Wulst 70 umgebenden ebenen ringförmigen Fläche 62. Im fertig montierten Zustand ragt der Wulst 70 in den durch den gekrümmten Bereich 74 freigegebenen Bauraum radial innerhalb der ebenen ringförmigen Fläche 64 ein und trägt zur Definition der Schwenkachse S der unmittelbar längs der Kettenlängsbahn LB aufeinanderfolgenden Kettenlaschen 24 auf der einen Seite und 26 auf der anderen Seite bei.

Zentrum des oben genannten bevorzugten teilkreisförmigen Verlaufs des ersten Kröpfungsbereichs 54 und des zweiten Kröpfungsbereichs 58 sind die jeweils nächst gelegenen Schwenkachsen S, welche auch Zentrum der sie jeweils umgebenden Öffnung 68 bzw. 69 sind. Der teilkreisförmige erste Kröpfungsbereich 54 ist dabei vor allem in der Kettenlascheninnenfläche 40, vorliegend auch in der Kettenlaschenaußenfläche 38, konzentrisch mit der Öffnung 68 ausgebildet, die er radial außen längs eines Abschnitts umgibt. Der teilkreisförmige zweite Kröpfungsbereich 58 ist vor allem in der Kettenlascheninnenfläche 40, vorliegend auch in der Kettenlaschenaußenfläche 38, konzentrisch mit der Öffnung 69 ausgebildet, die er längs eines Abschnitts radial außen umgibt.

Die teilkreisförmige Ausbildung der Kröpfungsbereiche 54 und 58 in der Kettenlascheninnenfläche ist besonders vorteilhaft, da die Abschnitte der Kröpfungsbereiche 54 und 58 in der Kettenlascheninnenfläche 40 ausgehend vom Kettenlaschen-Längsrand 44 auf der Eingriffsseite der Kettenlasche 24 in Richtung zur Bezugsebene BE hin eine vorteilhafte Einführhilfe für einen durch die Kettenlasche 24 begrenzten Zahneingriffsraum bilden.

In Figur 6A ist eine weitere mögliche Ausgestaltung einer Kettenlasche der oben genannten zweiten Ausführungsform mit näher zum schmäleren Längsendbereich 30 hin versetzten ersten Kröpfungsbereich 54' gezeigt. Die Perspektive auf die Kettenlasche 26 in Fig. 6A entspricht jener von Fig. 6. Allerdings ist in Fig. 6A eine einer Kettenlasche 24 in Richtung der virtuellen Kettenbreitenachse BA gegenüberliegende Kettenlasche 26 dargestellt. Eine zur Kettenlasche 26 von Fig. 6A passende Kettenlasche 24 ist spiegelsymmetrisch zu der Kettenlasche 26 von Fig. 6A ausgebildet, und zwar bezüglich einer Spiegelsymmetrieachse, welche orthogonal zur virtuellen Kettenbreitenachse BA und orthogonal zur Zeichenebene von Fig. 6A orientiert ist. Gut ist auch in Fig. 6A zu erkennen, dass die längs den virtuellen Kettenbreitenachsen BA bzw. längs den Kettenrollenachsen KR zu messende Dicke der Kettenlasche 26 im Bereich zwischen dem geneigten Verjüngungsbereich 32' und den die Öffnung 68 umgebenden ebenen Ringflächen 60 und 62 geringer ist als im unmittelbar die Öffnungen 68 und 69 umgebenden Bereich der Kettenlasche. Dadurch steht einem zwischen den Kettenrollenachsen KR in einen durch die Kettenlasche 26 von Fig. 6A und ihre spiegelbildlich ausgestaltete Kettenlasche 24 gebildeten Zahneingriffsraum 46 eingreifenden Zahn ein größeres Eingriffsvolumen zur Verfügung als ohne diese dünnere Ausbildung. Der Zahneingriff in den Zahneingriffsraum 46 wird dadurch erleichtert.

Wie in Figur 7 dargestellt ist, nimmt der Abstand CD, welchen der erste und der zweite Kröpfungsbereich 54 bzw. 58 voneinander längs der Kettenlängsbahn LB haben, ausgehend von der Bezugsebene BE zum Längsrand 44 an der Eingriffsseite eines Kettenglieds 12 bzw. der Kettenlaschen 24 und 26 kontinuierlich zu. So nimmt der Abstand CD in zur Bezugsebene BE parallelen Betrachtungsebenen B1 und B2 mit wachsendem Abstand von der Bezugsebene BE zu. Dies gilt in der dargestellten Ausführungsform auf beiden Seiten der Bezugsebene BE. Aufgrund der bezüglich der Bezugsebene BE asymmetrischen Ausgestaltung der Kettenlasche 24 ist jedoch nur der Verlauf der Kröpfungsbereiche 54 und 58 auf der den konkaven Abschnitt des Kettenlaschen-Längsrandes 44 aufweisenden Seite der Bezugsebene BE als Einführhilfe relevant, da nur von der Seite des Kettenlaschen-Längsrands 44 ausgehend ein Kettenradzahn in einen durch die Kettenlasche 24 begrenzten Zahneingriffsraum 46 eingeführt und aus diesem wieder abgezogen wird.

Die Ausbildung des zweiten Kröpfungsbereichs 58 auch in der Kettenlaschenaußenfläche 38 in teilkreisförmiger Gestalt mit der Schwenkachse S als Zentrum ist vorteilhaft, da die von dem gekrümmten zweiten Kröpfungsbereich 58 umgebene ebene ringförmige Fläche 64 am schmäleren Längsende 30 der Kettenlasche 24 an der fertig montierten Fahrradkette 10 mit der ebenen ringförmigen Fläche 62 in der Kettenlascheninnenfläche 38 am breiteren Längsende 28 einer anderen Kettenlasche 24 in Gegenüberstellung angeordnet ist und diese beiden einander gegenüberliegenden Flächen 64 und 62 um eine dann gemeinsame Schwenkachse S verschwenken können sollen. Hierfür ist eine um die dann gemeinsame Schwenkachse S koaxiale ebene Ringfläche vorteilhaft.

Der Längsabstand CD zwischen dem ersten und dem zweiten Kröpfungsbereich 54 bzw. 58 ist in der Bezugsebene minimal und entspricht dort im dargestellten Ausführungsbeispiel etwa dem Radius rk einer Kettenrolle 34.

Wie in Figur 7 gezeigt ist, weist die Kettenlasche 24 in ihrer Kettenlascheninnenfläche 40 ausgehend von ihrem abschnittsweise konkaven Kettenlaschen-Längsrand 44 eine Fase 76 auf, mit welcher eine auf der Eingriffsseite in den Zahneingriffsraum 46 hineinführende Eintrittsöffnung eines Kettenglieds 12 vergrößert wird. Die Fase 76 in Figur 7 ist derart geneigt oder/und gekrümmt ausgebildet, dass sich ihre Oberfläche von ihrer näher bei der Bezugsebene liegenden Randlinie 76a ausgehend in Richtung zum Kettenlaschen-Längsrand 44 hin vom Betrachter der Figur 7 entfernt. Auch dies schafft eine Einführhilfe für einen vom Kettenlaschen-Längsrand 44 her in den Zahneingriffsraum 46 eintretenden Zahn, diesmal jedoch eine Einführhilfe durch Verringerung der lichten inneren Kettengliedweite iKW bei Annäherung an die Bezugsebene BE. Die gekrümmten Kröpfungsbereiche 54 und 58 leisten demgegenüber eine Einführhilfe durch Verringerung der lichten Weite des Zahneingriffsraums 46 längs der Kettenlängsbahn LB. Zwischen den Kettenlaschen 24 und 26 wird der Zahneingriffsraum 46 längs der Kettenlängsbahn LB im Wesentlichen durch die Mantelflächen 35 der Kettenrollen 34 bestimmt. Dadurch, dass die gekrümmten Kröpfungsbereiche 54 und 58 dem Verlauf der Mantelfläche 35 der ihnen jeweils nächstgelegenen Kettenrolle 34 folgen bzw. mit dieser bündig verlaufen, kann die Krümmung der Mantelflächen 35 der Kettenrollen bis zum Kettenlaschen-Längsrand 44 ausgenutzt werden. Ein aus dem Stand der Technik bekannter geradliniger, längs der Kettenhöhenachse H verlaufender Kröpfungsbereich, wie er durch einfaches Biegen einer Kettenlasche 24 oder 26 um eine zur Kettenhöhenachse HA parallele Biegeachse erhalten wird, würde gerade in dem für einen Schaltvorgang wichtigen Eintrittsbereich nahe der Eintrittsöffnung die lichte innere Kettengliedweite iKW verkleinern.

Zu diesem Zweck ist auch vorteilhaft der Kettenlaschen-Längsrand 44 am schmäleren Längsendbereich 30 der Kettenlasche 24 der Mantelfläche 35 der dem schmäleren Längsendbereich 30 unmittelbar benachbarten Kettenrolle 34 folgend, bevorzugt bündig mit der Mantelfläche 35 ausgebildet, sodass auch der in den breiteren Längsendbereich 18 eines anderen Kettenglieds 12 einragende schmälere Längsendbereich 20 eines längs der Kettenlängsbahn LB unmittelbar benachbarten Kettenglieds 12 den Eintrittsbereich des Kettenglieds 12 in den Zahneingriffsbereich 46 hinein nicht unnötig mit seinen Kettenlaschen belegt und damit verringert.

An der Kettenlascheninnenfläche 40 der Kettenlasche 24 sind im Bereich der ringförmigen Fläche 66 zwei Fasen 66a und 66b ausgebildet, welche sich von der ringförmigen Fläche 66 zum jeweiligen Rand der Kettenlasche 24 hin erstrecken.

Die Fase 66a verläuft am unteren Kettenlaschen-Längsrand 44 etwa von dem im schmäleren Längsende 17 näheren Wendepunkt 44b, an welchem der untere Kettenlaschen-Längsrand 44 seine Krümmung zwischen konkav und konvex ändert bis in den abgeflachten Höhenabschnitt 49 hinein. Die Fase 66a endet in der dargestellten Ausführungsform unterhalb der Bezugsebene BE.

Die Fase 66b verläuft ausgehend von dem abgeflachten Höhenabschnitt 49, beginnend oberhalb der Bezugsebene BE, bis in den geraden Abschnitt des oberen Kettenlaschen-Längsrandes 42, wo sich die Fase 66b als Fase 76b bis in den Bereich der ringförmigen Fläche 62 hinein fortsetzt und schließlich ausläuft.

Die Fasen 66a und 66b können in einer die die Öffnung 69 zentral durchsetzende Kettenrollenachse KR enthaltenden Schnittebene einen geraden oder einen gewölbten Verlauf haben. Im Falle eines gewölbten Verlaufs ist dieser bevorzugt bei Draufsicht auf die Kettenlascheninnenseite 40 konvex gekrümmt. Ebenso kann die Fase 76b in einem zur Kettenlängsbahn LB orthogonalen Schnittebene einen geraden oder einen gewölbten Verlauf haben. Wiederum ist im Falle eines gewölbten Verlaufs die Fase 76b bei Betrachtung der Kettenlascheninnenseite 40 bevorzugt konvex gekrümmt.

Durch die beschriebenen Fasen 66a und 66b erhält die Fahrradkette 10 als Ganzes eine größere Tordierbarkeit um eine parallel zu ihrer Kettenlängsbahn LB verlaufende Torsionsachse. Auch die Biegsamkeit der Fahrradkette 10 um parallel zu ihrer Kettenhöhenachse HA verlaufende Biegeachse kann im Vergleich zu einer Fahrradkette ohne derartige Fasen erhöht sein, was ein Umlegen der Kette von einem Kettenritzel auf ein anderes koaxiales Kettenritzel erhöht und somit die Schaltbarkeit der Kette verbessert.

Zwischen den beiden Fasen 66a und 66b verläuft im Bereich des abgeflachten Höhenabschnitts 49 ein Abschnitt der ebenen ringförmigen Fläche 66 bis zum schmäleren Längsende 17 der Kettenlasche 24 bzw. des mit der Kettenlasche 24 gebildeten Kettenglieds 12. Abweichend hiervon kann auch dieser Abschnitt im abgeflachten Höhenabschnitt 49 angefast sein, sodass eine Fase, sie sei vorliegend als Fase 66c bezeichnet, von der Fase 76 bis zur Fase 76b im Verjüngungsabschnitt 32 durchgehend um die Öffnung 69 umläuft. Dieser durchgehend umlaufend angefaste Bereich ist in Fig. 7 ergänzend strichliniert angedeutet.

Durch eine durchgehende Fase 66c wird die Auslenkbarkeit der Fahrradkette 10 aus ihrem Verlauf längs der Kettenlängsbahn LB um eine zur Kettenlängsbahn LB orthogonale bzw. zur virtuellen Kettenhöhenachse HA parallele Biegeachse weiter vergrößert, was die Schaltbarkeit der Kette weiter verbessert. Die Auslenkbarkeit der Fahrradkette 10 um eine zur virtuellen Kettenhöhenachse HA parallele Biegeachse schafft eine Bewegungsraum für einen hinteren Umwerfer, die an einem vorderen Kettenblatt unverändert umlaufende Fahrradkette 10 trotz ihrer im Grunde steifen und starren Kettenglieder 12 im Bereich einer hinteren Ritzelanordnung parallel zur virtuellen Kettenbreitenachse BA zu bewegen und somit zwischen benachbarten koaxialen Ritzeln umzulegen.

In Figur 7A ist eine vierte Ausführungsform einer Kettenlasche, in konkreter beispielhafter Gestalt einer Kettenlasche 26 entsprechend, perspektivisch mit überwiegendem Blick auf ihre Kettenlaschenaußenseite gezeigt. Mit den vorhergehend erläuterten Bauteilen und Bauteilabschnitten der ersten bis dritten Ausführungsform einer Kettenlasche gleiche und funktionsgleiche Bauteile und Bauteilabschnitte sind in Fig. 7A mit gleichen Bezugszeichen versehen, jedoch erhöht um die Zahl 1000. Die Kettenlasche 1026 der Fig. 7A wird nachfolgend nur insofern erläutert werden, als sie sich von den zuvor beschriebenen Kettenlaschen 24 und 26 unterscheidet, auf deren Beschreibung ansonsten auch zur Erläuterung der Fig. 7A verwiesen wird. Fig. 7B zeigt die Kettenlasche 1026 von Fig. 7A in Seitenansicht mit Blick auf die Kettenlaschenaußenfläche 1038. Hinsichtlich der Lage ihrer Kröpfungsbereiche ist die Kettenlasche 1026 wie die oben beschriebene zweite Ausführungsform ausgebildet. Dies ist jedoch nur beispielhaft. Sie könnte hinsichtlich der Lage ihrer Kröpfungsbereiche alternativ wie die obige erste oder dritte Ausführungsform ausgestaltet sein.

Die Kettenlasche 1026 der vierten Ausführungsform weist zur Gewichtseinsparung eine Ausnehmung 1032a auf, welche die Kettenlasche 1026 in Dickenrichtung vollständig durchsetzt und welche umlaufend von Material der Kettenlasche 26 umgeben ist.

Wie insbesondere Fig. 7B zeigt, hat die Ausnehmung 1032a eine grob trapezförmige Gestalt mit abgerundeten Ecken, wobei die längere der beiden parallelen Trapezseiten näher bei einem Längsrand der Kettenlasche 1026, hier: näher bei dem geradlinigen Längsrand 1042, gelegen ist und vorzugsweise parallel zu dem geradlinigen Längsrand 1042 verläuft und wobei die zur längeren Trapezseite parallele kürzere Trapezseite der Ausnehmung 1032a näher bei der Höhenmitte, also etwa bei der die Kettenrollenachsen KR enthaltenden Bezugsebene BE gelegen ist und vorzugsweise parallel zu dieser verläuft.

Bevorzugt ist die trapezförmige Ausnehmung 1032a bezüglich einer in Richtung der virtuellen Kettenhöhenachse verlaufenden und zur virtuellen Kettenbreitenachse parallelen Symmetrieebene spiegelsymmetrisch ausgebildet.

Bevorzugt sind die zwischen der längeren und der kürzeren der beiden parallelen Trapezseiten verlaufenden schrägen Trapezseiten an jedem Längsende der trapezförmigen Ausnehmung 1032a gleich weit von der ihr nächstgelegenen Öffnung 1068 bzw. 1069 entfernt. Die beiden parallelen Trapezseiten der Ausnehmung 1032a sind bevorzugt länger als die sie verbindenden geneigten Seiten. Der Neigungssinn der geneigten Seiten entspricht grob dem Krümmungssinn des einer geneigten Seite nächstgelegenen Abschnitts der Begrenzungswand einer der geneigten Seite nächstgelegenen Öffnung 1068 bzw. 1069.

Um die Kettenlasche 1026 durch die Ausnehmung 1032a nicht zu sehr strukturell zu schwächen, liegt die Ausnehmung 1032a bevorzugt vollständig zwischen der Bezugsebene BE und dem geradlinigen Längsrand 1024, wobei noch stärker bevorzugt der Abstand der Ausnehmung 1032a vom geradlinigen Längsrand 1042 größer ist als von der Bezugsebene BE.

Die Ausnehmung 1032a kann beispielsweise durch Ausstanzen eines entsprechenden Flächenbereichs in der Kettenlasche 1026 gebildet sein. Die Ausnehmung 1032a durchsetzt im dargestellten Ausführungsbeispiel beide Kröpfungsbereiche 1054 und 1058. Dies wäre bevorzugt auch dann der Fall, wenn die Kettenlasche 1026 hinsichtlich der Lage der Kröpfungsbereiche 1054 und 1058 gemäß der ersten oder der dritten Ausführungsform ausgebildet wäre.

In Fig. 7C ist eine fünfte Ausführungsform einer erfindungsgemäßen Kettenlasche 26 dargestellt. Mit den vorhergehend erläuterten Bauteilen und Bauteilabschnitten der ersten bis vierten Ausführungsform einer Kettenlasche gleiche und funktionsgleiche Bauteile und Bauteilabschnitte sind in Fig. 7C mit gleichen Bezugszeichen versehen, jedoch im Zahlenraum 2000 bis 2999. Die Kettenlasche 2026 der Fig. 7C wird nachfolgend nur insofern erläutert werden, als sie sich von den zuvor beschriebenen Kettenlaschen 24 und 26 bzw. 1026 unterscheidet, auf deren Beschreibung ansonsten auch zur Erläuterung von Fig. 7C verwiesen wird. Fig. 7C zeigt die Kettenlasche 2026 in perspektivischer Ansicht mit Blick überwiegend auf die Kettenlascheninnenseite 2040. Hinsichtlich der Lage ihrer Kröpfungsbereiche ist die Kettenlasche 2026 wie die oben beschriebene zweite Ausführungsform ausgebildet. Dies ist jedoch nur beispielhaft. Sie könnte hinsichtlich der Lage ihrer Kröpfungsbereiche alternativ wie die obige erste oder dritte Ausführungsform ausgestaltet sein.

Zur Versteifung der Kettenlasche 2026, insbesondere zur Versteifung gegen eine Biegung um eine mittig zwischen den Öffnungen 2068 und 2069 verlaufende und zur virtuellen Kettenbreitenachse BA orthogonale, besonders bevorzugt zur virtuellen Kettenhöhenachse HA parallele, Biegeachse, weist die Kettenlasche 2062 eine Verstärkungsrippe 2042a auf. Die Verstärkungsrippe 2042a verläuft unmittelbar an dem geradlinigen Rand 2042 der Kettenlasche 2026. Zwar könnte die Verstärkungsrippe 2042a mit Abstand vom geradlinigen Rand 2042 verlaufen, jedoch ist eine Ausbildung unmittelbar am Rand 2042 bevorzugt, um einem vom gegenüberliegenden Rand 2044 ausgehend in einen unter Beteiligung der Kettenlasche 2026 gebildeten Zahneingriffsraum 2046 einfahrenden Zahn ausreichend Aufnahmeraum bereitzustellen.

Die Verstärkungsrippe 2042a ist im dargestellten Ausführungsbeispiel parallel zur Kettenlängsbahn LB. Sie wird bevorzugt durch Umformen eines Kettenlaschenrohlings zur Kettenlasche gebildet, kann jedoch abweichend hiervon auch durch einen Materialauftrag gebildet sein.

Die Verstärkungsrippe 2042a erstreckt sich längs der virtuellen Kettenhöhenachse HA bevorzugt über nicht mehr als 10 % der größten Abmessungen der Kettenlasche 2026 längs der virtuellen Kettenhöhenachse HA. Eine die ringförmige Fläche 2066 längs der virtuellen Kettenbreitenachse BA zur gegenüberliegenden Kettenlasche 2024 (nicht dargestellt) weisende Oberfläche der Verstärkungsrippe 2042a, welche trotz ihrer geringen Abmessung längs der virtuellen Kettenhöhenachse HA einen Teil der Kettenlascheninnenseite 2040 bildet, verläuft bevorzugt stufenlos und sprungfrei bündig mit der ringförmigen Fläche 2066, welche den Kragen 2072 geschlossen umlaufend umgibt. Bevorzugt bilden die längs der virtuellen Kettenbreitenachse weisende Oberfläche der Verstärkungsrippe 2042a und die ringförmige Fläche 2066 eine gemeinsame ebene und zur virtuellen Kettenbreitenachse BA orthogonale Oberfläche.

Die Verstärkungsrippe 2042a verläuft daher ausgehend vom schmäleren Längsendbereich 2030 hin zum breiteren Längsendbereich, wo sie jedoch so frühzeitig endet, dass eine Kollision mit einem im Bereich der Öffnung 2068 aufgenommenen schmäleren Längsendbereich einer längs der Kettenlängsbahn folgenden Kettenlasche und gegebenenfalls mit einer um die Öffnung 2068 aufgenommenen Kettenrolle sicher vermieden ist. Die Kettenlasche 2026 kann eine gewichtseinsparende Ausnehmung 2032a aufweisen, wie sie in der vorhergehenden vierten Ausführungsform dargestellt und erläutert wurde.

In Fig. 7D ist eine weitere erfindungsgemäße Ausführungsform der Fahrradkette gezeigt. Gleiche Bauteile und Bauteilabschnitte wie in den vorhergehenden Ausführungsformen sind in der Ausführungsform der Fig. 7D mit gleichen Bezugszeichen bezeichnet, jedoch im Zahlenraum 3000 bis 3999. Die Ausführungsform der Fig. 7D wird nachfolgend nur insofern erläutert werden, als sie sich von der zuvor beschriebenen Fahrradkette 10 und von den zuvor beschriebenen Kettenlaschen 24 und 26 bzw. 1026 und 2026 unterscheidet, auf deren Beschreibung ansonsten auch zur Erläuterung von Fig. 7D verwiesen wird.

Die Kettenlaschen 3024 und 3026 in Fig. 7D entsprechen hinsichtlich der Lage ihrer Kröpfungsbereiche 3054 und 3058 der oben beschriebenen dritten Ausführungsform mit einem näher bei der Öffnung 3068 als bei der Öffnung 3069 gelegenen zweiten Kröpfungsbereich 3058". Dies ist jedoch nur beispielhaft. Ebenso könnten die Kettenlaschen 3024 und 3026 hinsichtlich der Lage ihrer Kröpfungsbereiche gemäß der ersten oder gemäß der zweiten Ausführungsform ausgebildet sein.

Die Fahrradkette 3010 von Fig. 7D ist nicht nur perspektivisch dargestellt, sondern auch mit einer Querschnittansicht in einer eine Kettenrollenachse KR enthaltenden und zur virtuellen Kettenhöhenachse HA parallelen Schnittebene.

Wie oben bereits ausgeführt wurde, sind die einender längs der virtuellen Kettenbreitenachse BA gegenüberliegende Kettenlaschen verbindenden Stifte 3036 als Hohlstifte ausgebildet. Gut zu erkennen ist in der Schnittansicht von Fig. 7D, wie der Stift 3036 an seinen beiden Längsenden zur Bildung eines Formschlusses in den ausgenommenen Ringraum der Einsenkung 3068a an der Kettenlaschenaußenfläche 3038 des breiteren Längsendbereichs 3028 eingeformt wurde. Somit bildet jedes Längsende des hohlen Stifts 3036 einen Nietkopf, wobei die beiden Nietköpfe eines Stifts 3036 formschlüssig die zwischen sich angeordneten Kettenlaschen 3024 und 3026 sowie die ebenfalls dazwischen angeordnete Kettenrolle 3034 halten. Eine Stirnfläche 3036a des hohlen Stifts 3036 ist dabei im Wesentlichen bündig mit der ringförmigen Fläche 3060 auf der Kettenlaschenaußenseite 3038 der breiteren Längsendbereiche 3028 der einander gegenüberliegenden Kettenlaschen 3024 3026. Zumindest steht der Stift 3036 axial nicht über die ringförmigen Flächen 3060 der durch ihn verbundenen breiteren Längsendbereiche 3028 vor.

Im Gegensatz zu den zuvor diskutierten Ausführungsformen weisen die Kettenlaschen 3024 und 3026 in ihren schmäleren Längsendbereichen 3030 keinen vorstehenden Kragen auf. Stattdessen ist in die miteinander fluchtenden Öffnungen 3069 eines Kettenglieds eine Hülse 3072a eingefügt und mit den schmäleren Längsendbereichen 3030 der das Kettenglied bildenden Kettenlaschen 3024 und 3026 durch Presssitz verbunden.

Der die Öffnungen 3068 auf der Kettenlascheninnenseite 3040 umgebende Wulst 3070, welcher in Fig. 7D nicht erkennbar ist, dessen Lage jedoch im Vergleich mit Fig. 7 ermittelbar ist, kann einer im Wesentlichen komplementär ausgebildeten negativkonischen Fläche an den Längsenden der Hülse 3072a gegenüberliegen, die so gemeinsam eine Art Gleitführung für eine Schwenkbewegung der breiteren Längsendabschnitte 3028 eines Kettenglieds relativ zu den zwischen diesen angeordneten schmäleren Längsendabschnitten 3030 des unmittelbar längs der Kettenlängsbahn LB benachbarten weiteren Kettenglieds bilden und für eine Zentrierung der Öffnungen 3068 der breiteren Längsendabschnitte 3028 relativ zu den Öffnungen 3069 der zwischen ihnen angeordneten schmäleren Längsendabschnitte 3030 sorgen.

Im Falle der Ausführungsform von Fig. 7D bilden die koaxial angeordneten Bauteile: Hülse 3072a und Stift 3036 ein Schwenkgelenk, welches die Schwenkachse S für jede Rolle 3034 eines Kettenglieds definiert. Die Rolle 3034 kann frei um die Hülse 3072a drehen.

In Figur 8 ist die hintere Fahrrad-Ritzelanordnung 86 als eine Schalt-Kettenradanordnung bei Betrachtung längs der orthogonal zur Zeichenebene von Figur 8 verlaufenden Anordnungsachse AO der Fahrrad-Ritzelanordnung 86 entsprechend dem Pfeil VIII in Figur 9 dargestellt. Im Betrieb dreht die Fahrrad-Ritzelanordnung 86 um die Anordnungsachse AO. Die Fahrrad-Ritzelanordnung 86 ist eine 12-fach-Ritzelanordnung, von welcher die Paarung des zweitgrößten Ritzels R11 mit 28 Zähnen und des größten Ritzels R12 mit 32 Zähnen nachfolgend zur Erläuterung der in der Beschreibungseinleitung dargelegten ersten und zweiten Schaltvorgänge herangezogen wird.

Die Vorwärtsfahrt-Drehrichtung der Fahrrad-Ritzelanordnung 86, in welcher die Fahrrad-Ritzelanordnung 86 um die Anordnungsachse dreht, wenn ein die Fahrrad-Ritzelanordnung 86 tragendes Fahrrad durch die Fahrradkette 10 zur Vorwärtsfahrt angetrieben wird, ist in den Figuren 8 bis 12 durch den Pfeil VD angezeigt.

Der Vollständigkeit halber sei im Zusammenhang mit der Seitenansicht von Figur 9, bei welcher die Anordnungsachse AO parallel zur Zeichenebene von Figur 9 verläuft, der Aufbau der Fahrrad-Ritzelanordnung 86 erläutert. Die Fahrrad-Ritzelanordnung 86 mit 12 bezüglich der Anordnungsachse AO koaxialen Ritzeln weist ausgehend vom größten Ritzel R12 mit 32 Zähnen in der Folgerichtung FR folgend die weiteren Ritzel R11 mit 28 Zähnen, R10 mit 24 Zähnen, R9 mit 21 Zähnen, R8 mit 19 Zähnen, R7 mit 17 Zähnen, R6 mit 15 Zähnen, R5 mit 14 Zähnen, R4 mit 13 Zähnen, R3 mit 12 Zähnen, R2 mit 11 Zähnen und R1 mit 10 Zähnen auf.

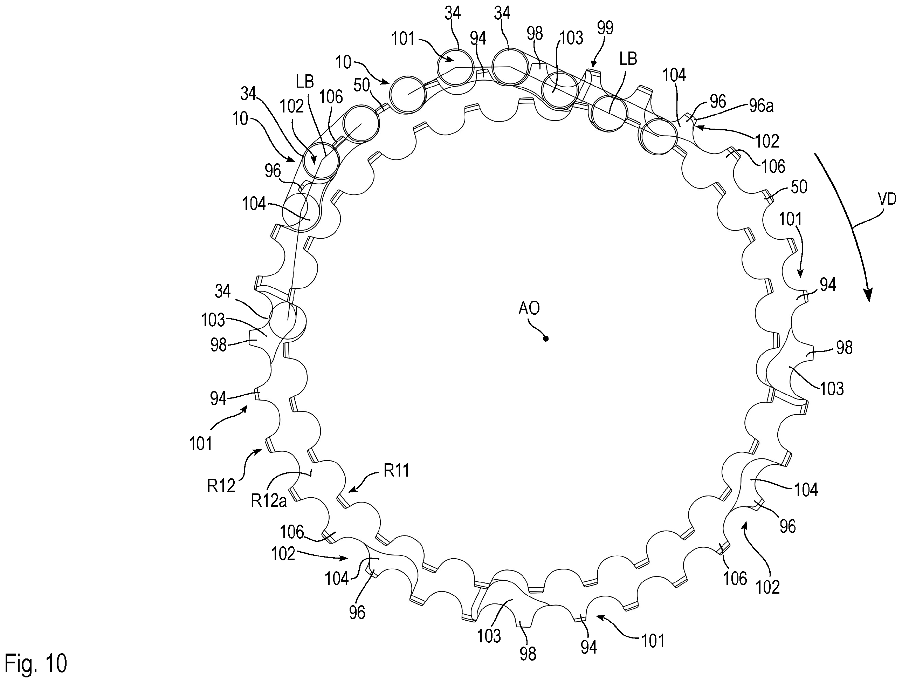

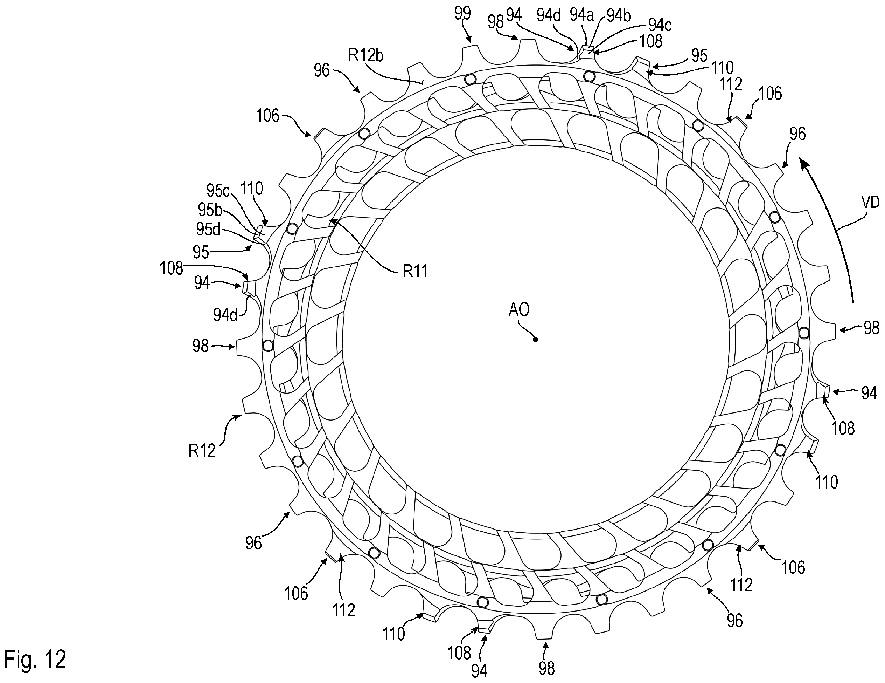

In den Figuren 10 und 12 sind nur die beiden größten Ritzel R12 und R11 zur Veranschaulichung eines ersten Schaltvorgangs vom kleineren Ritzel R11 zum unmittelbar benachbarten größeren Ritzel R12 und eines zweiten Schaltvorgangs vom größeren Ritzel R12 zum unmittelbar benachbarten kleineren Ritzel R11 sowie zur Darstellung der hierfür gewählten konstruktiven Ausgestaltung der Ritzel R11 und R12 dargestellt.

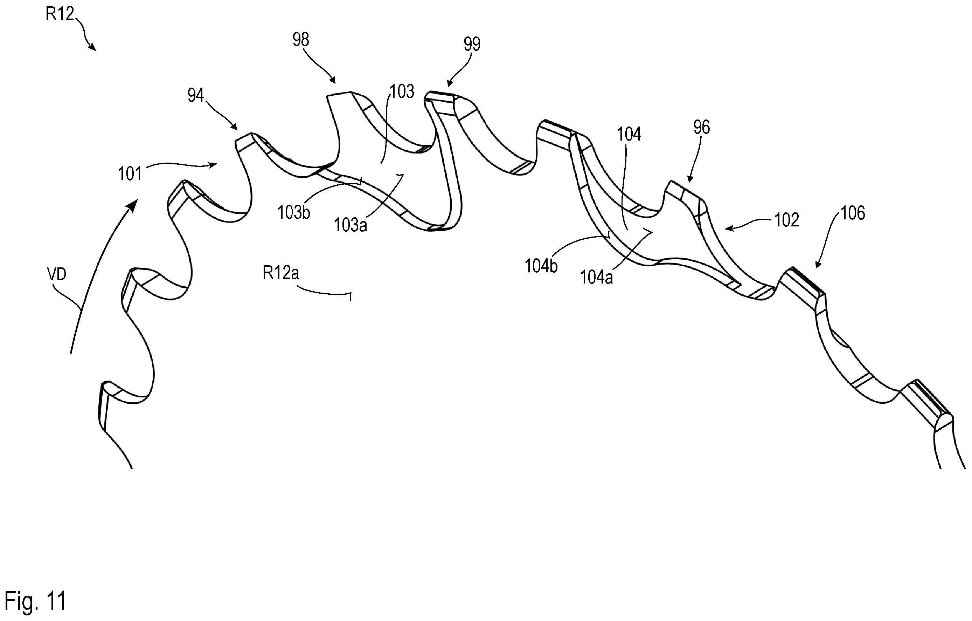

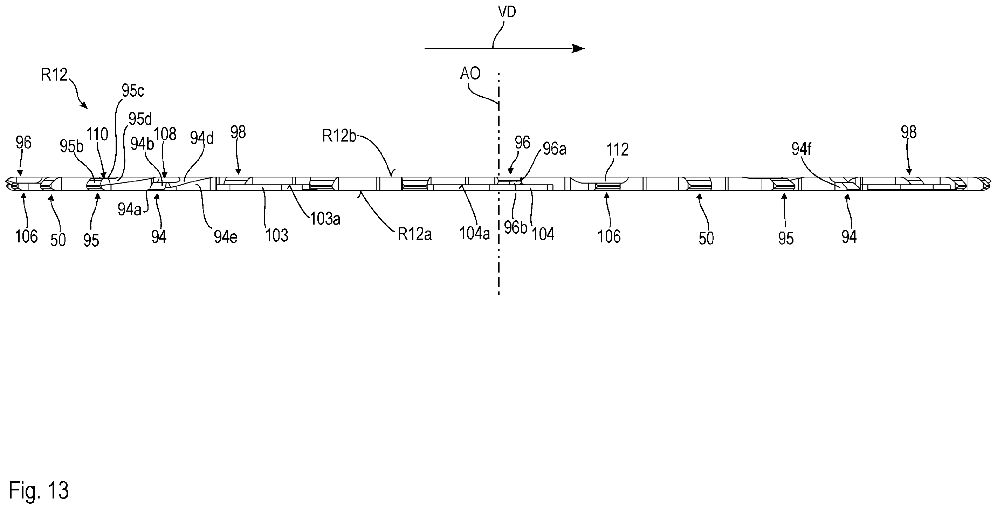

In den Figuren 11 und 13 ist jeweils nur das größte Ritzel R12 dargestellt.

Die nachfolgende Beschreibung der Ritzel R11 und R12 bezieht sich auf alle Figuren 8 bis 13, in denen diese Ritzel dargestellt sind.

Am größten Ritzel R12 sind erste Schaltgassen 101 für einen ersten Schaltvorgang, bei welchem die Kette 10 vom kleineren Ritzel R11 als dem Start-Kettenrad auf das größere Ritzel R12 als dem Ziel-Kettenrad umgelegt wird, vorrangig durch, vorzugsweise ebene, Vorbereitungs-Ausnehmungen 103 auf der dem Start-Kettenrad R11 zugewandten Seite R12a des Ziel-Kettenrads R12 zu erkennen. Zweite Schaltgassen 102 für einen zweiten Schaltvorgang, bei welchem die Kette 10 im Vergleich zum ersten Schaltvorgang in entgegengesetzter Richtung vom größeren Ritzel R12 als dem Start-Kettenrad auf das kleinere Ritzel R11 als dem Ziel-Kettenrad umgelegt wird, sind vorrangig durch, vorzugsweise ebene, Weichen-Ausnehmungen 104 auf der dem Ziel-Kettenrad R11 zugewandten Seite R12a des Start-Kettenrads R11 zu erkennen. Da der Zähnezahlunterschied zwischen dem größten Ritzel R12 und dem zweitgrößten Ritzel R11 vier Zähne beträgt (32 Zähne minus 28 Zähne), können an dem größeren Ritzel R12 maximal vier erste Schaltgassen 101 und vier zweite Schaltgassen 102 ausgebildet werden. Eine möglichst große Anzahl an Schaltgassen erhöht den Schaltkomfort für den Radfahrer, da dieser bei Betätigung der Kettenschaltung 91 an der Fahrrad-Ritzelanordnung 86 maximal das Erreichen des Ketteneingriffs des Start-Kettenrads im Bereich der nächsten Schaltgasse abwarten muss. Aus diesem Grunde ist an der Fahrrad-Ritzelanordnung 86 an jedem Ritzel R12 bis R2 die jeweils maximale Anzahl an ersten oder/und zweiten Schaltgassen 101 bzw. 102 ausgebildet. Da die ersten und die zweiten Schaltgassen 101 bzw. 102 stets an dem größeren von zwei in Folgerichtung FR unmittelbar benachbarten Ritzeln ausgebildet sind und dem Ritzel R1 kein kleineres Ritzel benachbart ist, sind am Ritzel R1 keine Schaltgassen ausgebildet.

Die Vorbereitungs-Ausnehmungen 103 eilen in Vorwärtsfahrt-Drehrichtung VD einem Fangzahn 94 unmittelbar voraus, welcher bei einem ersten Schaltvorgang als erster Zahn des Ziel-Kettenrads R12 in einen Zahneingriffsraum 46 eines Kettenglieds 12 der Fahrradkette 10 eingreift.

Die Weichen-Ausnehmungen 104 der zweiten Schaltgassen 102 befinden sich unmittelbar an der Umfangsposition eines Weichenzahns 96, welcher bei einem zweiten Schaltvorgang vom Ritzel R12 als dem Start-Kettenrad zu dem Ritzel R11 als dem Ziel-Kettenrad als erster Zahn des Ritzels R12 nicht mehr in einen Zahneingriffsraum 46 eines Kettenglieds 12 der Fahrradkette 10 eingreift. Die Weichen-Ausnehmung 104 versetzt den Weichenzahn 96 effektiv axial längs der Anordnungsachse AO vom Ziel-Kettenrad weg.

Wie man in Figur 8 erkennen kann, sind die Fangzähne 94 und damit die ersten Schaltgassen 101 in Umfangsrichtung um die Anordnungsachse AO äquidistant verteilt, d. h. ausgehend vom einem ersten Fangzahn 94 ist in Umfangsrichtung jeder weitere achte Zahn erneut ein Fangzahn. Die Teilung der Fangzähne 94 ergibt sich durch die Gesamtzahl der Zähne des Ritzels R12 geteilt durch die Anzahl der ersten Schaltgassen 101.

Ebenso sind die zweiten Schaltgassen 102 in Umfangsrichtung äquidistant um die Anordnungsachse AO verteilt angeordnet. Dies bedeutet erneut, dass ausgehend von einem beliebig gewählten ersten Weichenzahn 96 jeder weitere in Umfangsrichtung achte Zahn ebenfalls ein Weichenzahn 96 ist. Dagegen sind die ersten Schaltgassen 101 und die zweiten Schaltgassen 102 nicht äquidistant voneinander beabstandet.

Die Vorbereitungs-Ausnehmungen 103, welche der Kette 10 im ersten Schaltvorgang eine stärkere axiale, also längs der Anordnungsachse AO, verlaufende Annäherung an das Ritzel R12 ermöglichen, das im ersten Schaltvorgang Ziel-Kettenrad ist, sind an einem Vorbereitungszahn 98 ausgebildet. Der Vorbereitungszahn 98 eilt in Vorwärtsfahrt-Drehrichtung VD dem Fangzahn 94, den er unterstützt, unmittelbar voraus.

Ein dem Weichenzahn 96 in Vorwärtsfahrt-Drehrichtung VD unmittelbar vorauseilender Zahn weist als Unterstützungszahn 106 auf seiner vom Ritzel R11 als dem Ziel-Kettenrad des zweiten Schaltvorgangs abgewandten Seite, die vom Betrachter der Figur 8 abgewandt ist, eine Unterstützungs-Ausnehmung 112 auf, um beim Umlegen der Kette vom Ritzel R12 auf das Ritzel R11 eine axiale Annäherung der Kette 10 an das Ziel-Kettenrad des zweiten Schaltvorgangs zu ermöglichen und damit eine Verschränkung der Fahrradkette 10 beim zweiten Schaltvorgang zu reduzieren.

In Figur 10 ist gut zu erkennen, wie die Kette 10, angedeutet durch ihre Kettenrollen 34 und die die Kettenrollenachsen KR miteinander verbindende Kettenlängsbahn LB, ausgehend vom kleineren Ritzel R11 als dem Start-Kettenrad in einem ersten Schaltvorgang von dem in Figur 10 nicht dargestellten Umwerfer auf das größere Ritzel R12 als das Ziel-Kettenrad umgelegt wird. Die Vorbereitungs-Ausnehmung 103 im Bereich des Vorbereitungszahns 98 ermöglicht der Kette 10, sich axial weiter als nur bis zur ungestörten Außenfläche R12a des Ritzels R12 an das Ritzel R12 anzunähern. Das während des ersten Schaltvorgangs im Bereich der Vorbereitungs-Ausnehmung 103 gelegene Kettenglied liegt axial seitlich am Vorbereitungszahn 98 an. Der Fangzahn 94 ist der erste Zahn in der Schaltgasse 101 des größeren Ritzels R12, welcher in einen Zahnzwischenraum eines Kettenglieds 12 der Kette 10 eingreift. Alle entgegen der Vorwärtsfahrt-Drehrichtung VD auf den Fangzahn 94 folgenden Zähne greifen dann ebenfalls in Zahnzwischenräume von Kettengliedern der Kette 10 ein.

In Figur 13 ist links von der Mitte des dargestellten Umfangs des Ritzels R12 die Vorbereitungs-Ausnehmung 103 mit ihrer vorzugsweise ebenen zum kleineren Ritzel R11 hinweisenden Ausnehmungsfläche 103a dargestellt. Zu erkennen ist, wie der im dargestellten Ausführungsbeispiel vollständig im Bereich der Vorbereitungs-Ausnehmung 103 gelegene Vorbereitungszahn 98 gegenüber einem herkömmlichen Standardzahn 50 eine geringere axiale Breite aufweist. Die Ausnehmungsfläche 103a kann gegenüber der Anordnungsachse AO geneigt oder orthogonal zu dieser ausgebildet sein. Im Falle einer Neigung nimmt die Tiefe der Ausnehmungsfläche 103a in Umfangsrichtung zum Fangzahn hin vorzugsweise zu, sodass die Neigung der Ausnehmungsfläche 103a qualitativ der Neigung der vom kleineren Ritzel R11 zum größeren Ritzel R12 umgelegten Fahrradkette 10 entspricht.

Der Rand 103b der Vorbereitungs-Ausnehmung 103 verläuft in Umfangsrichtung um die Anordnungsachse AO abhängig vom Umfangsort in unterschiedlicher radialer Entfernung von der Anordnungsachse AO. Der Grundgedanke ist, dass der Rand 103b dem Verlauf der Kette 10 beim ersten Schaltvorgang folgt, sodass es beim ersten Schaltvorgang zu keiner schaltverhindernden Kollision zwischen dem Ritzel R12 und der Kette 10 kommt. Bevorzugt folgt der Rand 103b der Kontur des Kettenlaschen-Längsrands 44 auf der Eingriffsseite der am Vorbereitungszahn 98 anliegenden bzw. in der Vorbereitungs-Ausnehmung 103 angeordneten Kettenlasche der Kette 10, sodass sich die Kette 10 beim ersten Schaltvorgang mit dem Kettenlaschen-Längsrand 44 körperlich auf dem Rand 103b abstützen kann.

Der Rand 103b verläuft ausgehend von dem in der Vorwärtsfahrt-Drehrichtung VD dem Vorbereitungszahn 98 unmittelbar vorauseilenden Zahn 99 zunächst steil sich der Anordnungsachse AO annähernd, erreicht dann im Umfangsbereich des Zahnzwischenraums zwischen dem Vorbereitungszahn 98 und dem unmittelbar vorauseilenden Zahn 99 einen Ort größter Annäherung an die Anordnungsachse AO, sofern in diesem Bereich aufgrund von Leichtbauweise Material des Ritzels R12 vorhanden ist, und steigt von diesem Ort größter Annäherung bei weiterem Voranschreiten entgegen der Vorwärts-Drehrichtung in den Umfangsbereich des Zahnzwischenraums zwischen dem Fangzahn 94 und dem Vorbereitungszahn 98 hinein zu der radialen Grenzfläche dieses Zahnzwischenraums auf.

In Figur 13 und ebenso in Figur 12 ist auf der vom Ziel-Kettenrad R11 abgewandten Seite R12b des Ritzels R12 im Bereich der radial äußeren Hälfte des Fangzahns 94 eine Fang-Ausnehmung 108 ausgebildet. Der Fangzahn 94 weist auf seiner vom Ritzel R11 abgewandten Seite R12b eine ausgehend von seiner Kammlinie 94a nach radial innen verlaufende Fang-Fase 94b auf, welche sowohl in radialer Richtung als auch in axialer Richtung verläuft. Die Fang-Fase 94b begrenzt als Außenflächenabschnitt des Fangzahns 94 einen radial weiter außen gelegenen Bereich der Fang-Ausnehmung 108. An die Fang-Fase 94b schließt sich radial innen, also auf der zur Anordnungsachse AO hinweisenden Seite, ein zweiter Außenflächenabschnitt 94c an, welcher im Vergleich zur Fang-Fase 94b erheblich stärker in radialer Richtung und erheblich weniger stark in axialer Richtung verläuft als die Fang-Fase 94b. Auch der zweite Außenflächenabschnitt 94c begrenzt einen Bereich der Fang-Ausnehmung 108.

Figur 13 zeigt, wie im Vergleich zu einem Standardzahn 50 durch die Fang-Fase 94b und den zweiten Außenflächenabschnitt 94c eine erhebliche Verlagerung der Kammlinie 94a des Fangzahns 94 zum Start-Kettenrad R11 eines ersten Schaltvorgangs hin bewirkt ist. Dies erleichtert eine Einführung des Fangzahns 94 in einen Zahneingriffsraum 46 eines Kettenglieds 12 der Kette 10 beim ersten Schaltvorgang.

In Figur 12 ist außerdem gezeigt, wie ein dem Fangzahn 94 bezüglich der Vorwärtsfahrt-Drehrichtung VD unmittelbar nacheilender Zahn 95 auf der vom Start-Kettenrad R11 abgewandten Seite R12b eine Zusatz-Ausnehmung 110 aufweisen kann, welche hilft, während eines ersten Schaltvorgangs eine Verschränkung der Kette 10 zu reduzieren. Es reicht dann eine geringfügig geringere Schrägstellung der Kette 10 aus, damit der Fangzahn 94 in den Zahneingriffsraum 46 eines Kettenglieds 12 der Kette 10 eingreifen kann, als wenn der dem Fangzahn 94 unmittelbar nacheilende Zahn 95 als Standardzahn 50 ohne Zusatz-Ausnehmung 110 ausgebildet wäre. Aus Gründen einer besseren Übersichtlichkeit ist in Figur 12 die Zusatz-Ausnehmung 110 an einer anderen ersten Schaltgasse als die Fang-Ausnehmung 108 dargestellt. Auch die Zusatz-Ausnehmung 110 kann in einem radial äußeren Bereich durch eine Fase 95b als einem ersten Außenflächenbereich des Zahns 95 und in einem radial inneren Bereich durch einen stärker radial und weniger stark axial als die Fase 95b verlaufenden zweiten Außenflächenbereich 95c begrenzt sein, wobei die Zusatz-Ausnehmung 110 bevorzugt axial weniger tief in den Zahn 95 einragt als die Fang-Ausnehmung 108 in den Fangzahn 94 einragt. Die Zusatz-Ausnehmung 110 erstreckt sich bevorzugt, wie auch die Fang-Ausnehmung 108, in Umfangsrichtung über den gesamten sie tragenden Zahn. Während die Fang-Ausnehmung 108 am Fangzahn 94 auf der in Vorwärtsfahrt-Drehrichtung VD vorauseilenden Umfangsseite geringfügig näher an die Anordnungsachse AO angenähert ausgebildet sein kann als auf der bezüglich der Vorwärtsfahrt-Drehrichtung VD nachlaufenden Umfangsseite, ist dies bevorzugt für die Zusatz-Ausnehmung 110 an dem dem Fangzahn 94 unmittelbar nacheilenden Zahn 95 umgekehrt.

Der Fangzahn 94 erstreckt sich radial weniger weit von der Anordnungsachse AO weg als die übrigen Zähne des Ritzels R12.

Figur 10 zeigt entgegen der Vorwärtsfahrt-Drehrichtung VD vom Kettenverlauf des ersten Schaltvorgangs entfernt einen Verlauf der Kette 10 während eines zweiten Schaltvorgangs, bei welchem die Kette 10 ausgehend vom größeren Ritzel R12 als dem Start-Kettenrad zum kleineren Ritzel R11 als dem Ziel-Kettenrad umgelegt wird. Durch die Weichen-Ausnehmung 104 kann das im Umfangsbereich des Weichenzahns 96 gelegene Kettenglied 12 beim Umlegen der Kette 10 auf das Ritzel R11 axial an dem Weichenzahn 96 auf der dem Ritzel R11 zugewandten Seite R12a vorbeigehen. Alle beim zweiten Schaltvorgang in Vorwärtsfahrt-Drehrichtung VD dem Weichenzahn 96 vorauseilenden Zähne einer Eingriffsstrecke sind im Eingriff mit den Zahneingriffsräumen 46 der Kettenglieder 12 der Kette 10.

Die Weichen-Ausnehmung 104 unterstützt durch ihre Gestalt die radiale Annäherung der Kette 10 an das kleinere Ritzel R11. Die zum kleineren Ritzel R11 hinweisende Ausnehmungsfläche 104a ist bevorzugt eben und kann, qualitativ dem axialen Verlauf der Kette 10 beim zweiten Schaltvorgang folgend, in Umfangsrichtung derart um einen Radiusstrahl als Neigeachse geneigt angeordnet sein, dass sich die Ausnehmungsfläche 104a in Richtung entgegen der Vorwärtsfahrt-Drehrichtung VD dem Ritzel R11 als dem Ziel-Kettenrad des zweiten Schaltvorgangs annähert.

Figur 13 zeigt, wie die Weichen-Ausnehmung 104 einen, verglichen mit Zähnen ohne Ausnehmung, erhöhten axialen Abstand des Weichenzahns 96 vom Ritzel R11 bewirkt. Eine auf der zum Ziel-Kettenrad R11 des zweiten Schaltvorgangs hinweisenden Seite R12a ausgebildete Fase 96b am Zahnkopf des Weichenzahns 96 bewirkt eine noch weitere Verlagerung der Kammlinie 96a des Weichenzahns 96 vom Ziel-Kettenrad R11 weg, was eine axiale Vorbeibewegung der Kette 10 während eines zweiten Schaltvorgangs am Weichenzahn 96 vorbei noch weiter unterstützt.

Für den Rand 104b der Weichen-Ausnehmung 104 gilt qualitativ das oben zum Rand 103b der Vorbereitung-Ausnehmung 103 Gesagte entsprechend: der Rand 104b folgt qualitativ dem Verlauf der Kette 10 beim zweiten Schaltvorgang in der zweiten Schaltgassen 102 und ist bevorzugt der Kontur des Kettenlaschen-Längsrands 44 auf der Eingriffsseite der am Weichenzahn 96 anliegenden bzw. in der Weichen-Ausnehmung 104 angeordneten Kettenlasche folgend ausgebildet, sodass sich die Kettenlasche mit ihrem Kettenlaschen-Längsrand 44 auf der Eingriffsseite körperlich am Rand 104b der Weichen-Ausnehmung 104 abstützen kann.

Der Rand 104b der Weichen-Ausnehmung 104 beginnt im dargestellten Ausführungsbeispiel im Umfangsbereich des der Anordnungsachse AO nächst gelegenen Punktes des dem Weichenzahn 96 in Vorwärtsfahrt-Drehrichtung VD unmittelbar vorauseilenden Zahnzwischenraums und erstreckt sich von dort in Umfangsrichtung entgegen der Vorwärtsfahrt-Drehrichtung VD unter radialer Annäherung an die Anordnungsachse AO. Im Umfangsbereich des der Anordnungsachse AO nächst-gelegenen Punktes des bezüglich der Vorwärtsfahrt-Drehrichtung VD dem Weichenzahn 96 unmittelbar nacheilenden Zahnzwischenraums erreicht die Weichen-Ausnehmung 104 ihre größte Annäherung an die Anordnungsachse AO und steigt dann bei weiterem Fortscheiten entgegen der Vorwärtsfahrt-Drehrichtung VD radial steil im Bereich der nächstgelegenen Flanke des entgegen der Vorwärtsfahrt-Drehrichtung VD unmittelbar folgenden Zahns bis zur Außenfläche des Ritzels R12 an.

In Figur 12 ist zu erkennen, dass auf der dem Ritzel R11 als dem Ziel-Kettenrad des zweiten Schaltvorgangs abgewandten Seite R12b des in Vorwärtsfahrt-Drehrichtung VD dem Weichenzahn 96 unmittelbar vorauseilenden Unterstützungszahns 106 eine Unterstützungs-Ausnehmung 112 ausgebildet ist, welche die axiale Dicke des Unterstützungszahns 106 reduziert und somit eine axiale Annäherung der auf dem Ritzel R12 geführten Kette 10 an das Ritzel R11 als das Ziel-Kettenrad des zweiten Schaltvorgangs ermöglicht. Die Unterstützungs-Ausnehmung 112 reduziert die Verschränkung der Kette 10 beim zweiten Schaltvorgang, da die Schrägstellung der Kette 10 über einen größeren Umfangsbereich hinweg realisiert werden kann, als dies ohne die Unterstützung-Ausnehmung 112 der Fall wäre. Die Unterstützungs-Ausnehmung 112 hat für den zweiten Schaltvorgang im Wesentlichen die gleiche Wirkung wie die Zusatz-Ausnehmung 110 für den ersten Schaltvorgang.

Das vorstehend zu den beiden größten Ritzeln R11 und R12 Gesagte gilt für die weiteren Paarungen axial unmittelbar benachbarter, unterschiedlich großer Ritzel entsprechend. Mit der Abnahme des Zähnezahlunterschieds zwischen dem größeren und dem kleineren Ritzel einer Schaltvorgangs-Paarung nimmt die Anzahl maximal möglicher Schaltgassen ab. Außerdem kann die Größe der beschriebenen Ausnehmungen an den Funktionszähnen erster und zweiter Schaltgassen an kleineren Ritzeln kleiner sein als vorliegend am Ritzel R12 erläutert.

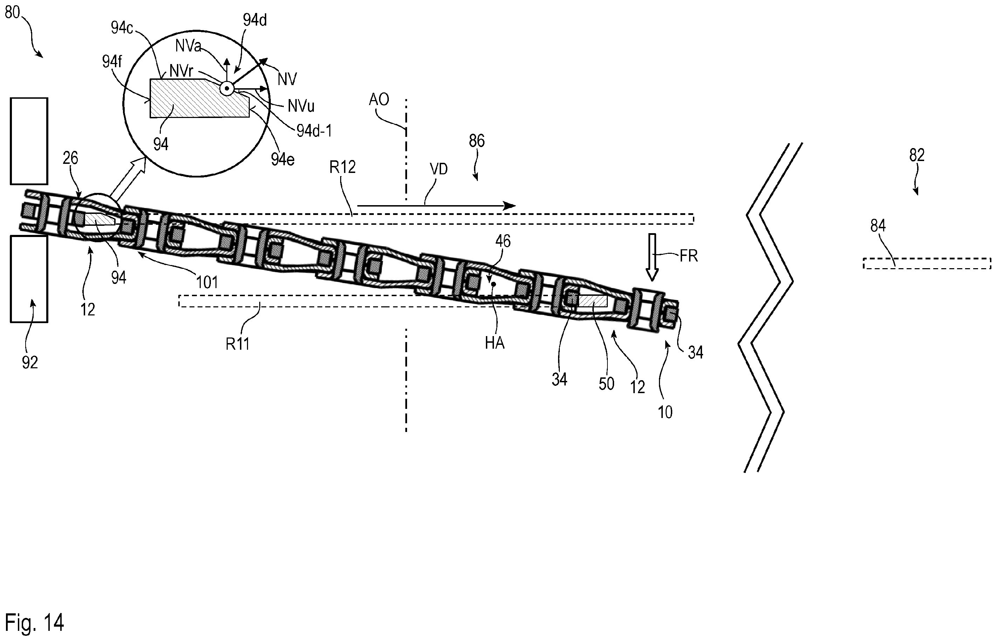

In Figur 14 ist zur weiteren Illustration grobschematisch eine Betriebssituation der Antriebsanordnung 80 während eines ersten Schaltvorgangs dargestellt. Dort ist die Fahrrad-Antriebsanordnung 80 grobschematisch dargestellt, wie sie oben im Zusammenhang mit Figur 15 und mit weiteren Figuren beschrieben wurde. Von der Fahrrad-Ritzelanordnung 86 sind der besseren Übersichtlichkeit wegen nur das zweitgrößte Kettenritzel R11 und das größte Kettenritzel R12 gezeigt, welche um die gemeinsame Anordnungsachse AO rotieren. Die Anordnungsachse AQ der Kettenblattanordnung 82 ist in der Fig. 14 nicht dargestellt. Sie verläuft gewohnt parallel zur Anordnungsachse AO der Fahrrad-Ritzelanordnung 86. Der bereits in Figur 4 angedeutete Kettenradzahn 50 sei ein Standardzahn 50 des kleineren Kettenritzels R11. Der Abstand der Kettenradanordnungen 82 und 86 voneinander ist in Figur 14 stark verkürzt dargestellt.

Die entsprechend der Schnittdarstellung von Figur 4 dargestellte umlaufende Fahrradkette 10 wird in Figur 14 durch den Umwerfer 92 von der sowohl zur Zeichenebene von Figur 14 als auch zur Anordnungsachse AO orthogonalen Ebene des kleineren Kettenritzels R11 als dem Start-Kettenritzel R11, mit welchem die Fahrradkette 10 anfänglich in Eingriff steht, umgelegt auf die sowohl zur Zeichenebene von Figur 14 als auch zur Anordnungsachse AO orthogonalen Ebene des größeren Kettenritzels R12 als dem Ziel-Kettenritzel R12, mit welchem die Fahrradkette 10 nach dem Schaltvorgang in Eingriff stehen soll. Zur Beschreibung der Fahrradkette 10 von Figur 14 wird auf die Beschreibung der Figur 4 und der mit dieser zusammenhängenden Figuren 1 bis 3 verwiesen.

Das Ziel-Kettenritzel R12 weist gemäß obiger Beschreibung in der aktuell aktiven ersten Schaltgasse 101 des Ziel-Kettenritzels R12 genau einen Fangzahn 94 auf. Ein grobschematischer Querschnitt des Fangzahns 94 in einer zu einem Radiusstrahl durch den Fangzahn 94 orthogonalen Schnittebene ist in der in Figur 14 gezeigten Lupenvergrößerung vergrößert dargestellt. Der Fangzahn 94 ist dazu ausgebildet, als erster Kettenradzahn des Ziel-Kettenritzels R12 die zum Ziel-Kettenritzel R12 hin umgelegte Fahrradkette 10 in Eingriff zu nehmen. Die Ausbildung des Fangzahns 94 als Fangzahn beruht unter anderem auf einer Gleit-Fase 94d (siehe auch Fig. 12), welche den Eintritt in einen Zahneingriffsraum 46 erleichtern soll. Die Gleit-Fase 94d ist in dem in Figur 14 abgebildeten Abschnitt zwischen dem vom Start-Kettenritzel R11 wegweisenden zweiten Außenflächenabschnitt 94c und der in Vorwärtsfahrt-Drehrichtung VD vorauseilenden lastfreien Flanke 94e ausgebildet. Die der Flanke 94e in Umfangsrichtung entgegengesetzte Flanke 94f, welche vorliegend lastragend ist und in Vorwärtsfahrt-Drehrichtung VD nachläuft, ist bevorzugt zur Erzielung einer höheren Lasttragfähigkeit breiter ausgebildet als die vorauseilende lastfreie Flanke 94e.

Die Oberfläche 94d-1 der Gleit-Fase 94d ist derart geneigt, dass ihr Normalenvektor NV drei von Null verschiedene kartesische Vektorkomponenten aufweist, von welchen die axiale Vektorkomponente NVa vom Start-Kettenritzel R11 wegweist, die radiale Vektorkomponente NVr von der gemeinsamen Anordnungsachse AO der Fahrrad-Ritzelanordnung 86 wegweist und die in Umfangsrichtung verlaufende Vektorkomponente NVu von der nachlaufenden lasttragenden Flanke 94f wegweist. Die Oberfläche 94d-1 der Gleit-Fase 94d erstreckt sich über eine gewisse radiale Höhe des Fangzahns 94 nach radial außen bis zum Zahnkopf bzw. bis zur Fang-Fase 94b und nach radial innen bevorzugt bis wenigstens in das mittlere Umfangsdrittel des dem Fangzahn unmittelbar vorauseilenden Zahnzwischenraums (s. Fig. 12).

Wie man an der in Figur 14 dargestellten Eingriffssituation des Fangzahns 94 sieht, ermöglicht die Gleit-Fase 94d eine den ersten Schaltvorgang unterstützende Schrägstellung der Fahrradkette 10, so dass diese vom Ritzel R11 zum Ritzel R12 verlaufen und längs der ersten Schaltgasse 101 auf das Ritzel R12 auflaufen kann. Die der Gleit-Fase 94d unmittelbar axial gegenüberliegende Kettenlasche 26 kann während des ersten Schaltvorgangs zur Herstellung eines formschlüssigen Eingriffs des Fangzahns 94 mit einem Zahneingriffsraum 46 an der Gleit-Fase 94d anliegen und entlang derselben radial in Richtung zur Anordnungsachse AO hin gleiten. Ein solcher Gleitanlage-Eingriff muss jedoch nicht bestehen.

Wie Fig. 12 zeigt, kann der dem Fangzahn 94 entgegen der Vorwärtsfahrt-Drehrichtung VD unmittelbar benachbarte Zahn 95 auf seiner vom Start-Ritzel R11 wegweisenden Seite an seiner in der Vorwärtsfahrt-Drehrichtung VD vorauseilenden Flanke eine im Wesentlichen wie die Gleit-Fase 94d ausgestaltete weitere Gleit-Fase 95d aufweisen. Das oben zur Ausgestaltung der Gleit-Fase 94d Gesagte gilt mutatis mutandis auch für die weitere Gleit-Fase 95d des Zahns 95.

In der Ausführungsform der Figur 14 sind die Kettenglieder 12 derart in der Fahrradkette 10 angeordnet, dass bei einer Umlaufbewegung der geschlossen umlaufenden Fahrradkette 10 im Sinne einer Vorwärtsfahrt, das ist in Figur 14 eine Bewegung der Fahrradkette 10 vom linken zum rechten Rand der Figur 14, das schmälere Längsende 20 eines jeden Kettenglieds 12 vorauseilt und das breitere Längsende 18 nachläuft.

## Patentansprüche

1. Fahrradkette (10) mit einer Mehrzahl von längs einer virtuellen Kettenlängsbahn (LB) aufeinander folgenden Kettengliedern (12), wobei längs der Kettenlängsbahn (LB) unmittelbar aufeinander folgende Kettenglieder (12) um zueinander parallele virtuelle Schwenkachsen (S) relativ zueinander schwenkbar sind, wobei die Schwenkachsen (S) längs einer quer zur Kettenlängsbahn (LB) orientierten virtuellen Kettenbreitenachse (BA) verlaufen, wobei die beiden längs der Kettenlängsbahn (LB) mit Abstand voneinander gelegenen Schwenkachsen (S) eines Kettenglieds (12) eine die Schwenkachsen (S) enthaltende virtuelle Bezugsebene (BE) für das Kettenglied (12) definieren, wobei jedes Kettenglied (12) zwei gesondert ausgebildete, einander längs der Kettenbreitenachse (BA) gegenüberliegende flächige Kettenlaschen (24, 26) aufweist, wobei die Kettenlaschen (24, 26) ihre größten Abmessungen längs der Kettenlängsbahn (LB) und längs einer sowohl quer zur Kettenlängsbahn (LB) als auch quer zur Kettenbreitenachse (BA) verlaufenden Kettenhöhenachse (HA) aufweisen, wobei die Kettenlaschen (24, 26) längs der Kettenlängsbahn (LB) derart gekröpft ausgebildet und angeordnet sind, dass jedes Kettenglied (12) ein längs der Kettenbreitenachse (BA) breiteres Längsende (14) mit größerer Gliedbreite (aKW) und ein dem breiteren Längsende (14) längs der Kettenlängsbahn (LB) entgegengesetztes schmäleres Längsende (16) mit geringerer Gliedbreite (aKW) aufweist, wobei zwischen den Kettenlaschen (24, 26) in einem näher bei dem schmäleren Längsende (16) als bei dem breiteren Längsende (14) gelegenen schmäleren Längsendbereich (20) eine Kettenrolle (34) aufgenommen ist, wobei für längs der Kettenlängsbahn (LB) aufeinander folgende Kettenglieder (12) gilt, dass jeweils ein schmälerer Längsendbereich (20) eines Kettenglieds (12) in einen näher bei dem breiteren Längsende (14) als bei dem schmäleren Längsende (16) gelegenen breiteren Längsendbereich (18) eines längs der Kettenlängsbahn (LB) unmittelbar benachbarten Kettenglieds (12) einragt, sodass die Fahrradkette (10) längs der Kettenlängsbahn (LB) aufeinander folgende Kettenrollen (34) aufweist, welche zwischen Kettenlaschen (24, 26) ein und desselben Kettenglieds (12) einmal in dessen schmälerem Längsendbereich (20) und ein weiteres Mal in dessen breiterem Längsendbereich (18) derart angeordnet sind, dass die Kettenlaschen (24, 26) eines Kettenglieds (12) gemeinsam mit den beiden zwischen ihnen angeordneten Kettenrollen (34) einen Zahneingriffsraum (46) zum Eingriff eines Zahns (50, 94) einer Kettenradanordnung (82, 86) einfassen,
**dadurch gekennzeichnet, dass** die Fahrradkette (10) zum Umlegen zwischen zwei längs der Kettenbreitenachse (BA) benachbarten koaxialen Kettenrädern (R11, R12) ausgebildet ist.

2. Fahrradkette (10) nach Anspruch 1,
**dadurch gekennzeichnet, dass** für eine Mehrzahl der Kettenglieder (12) gilt, dass jede der Kettenlaschen (24, 26) eines Kettenglieds (12) einen näher beim breiteren Längsende (18) gelegenen ersten Kröpfungsbereich (54) und einen näher beim schmäleren Längsende (20) gelegenen zweiten Kröpfungsbereich (58) aufweist, wobei eine längs der Kettenbreitenachse (BA) zwischen den Kettenlaschen (24, 26) zu messende lichte innere Kettengliedweite (iKW) bei Fortschreiten längs der Kettenlängsbahn (LB) vom ersten (54) zum zweiten Kröpfungsbereich (58) abnimmt, wobei der Längsabstand (CD) des ersten (54) und des zweiten Kröpfungsbereiches (58) längs der Kettenlängsbahn (LB) voneinander wenigstens in der Kettenlascheninnenfläche (40) einer Kettenlasche (24, 26) sich vom Radius (rk) der Kettenrollen (34) wenigstens in der virtuellen Bezugsebene (BE) um nicht mehr als 15 % bezogen auf den Radius (rk) der Kettenrollen (34) unterscheidet.

3. Fahrradkette (10) nach Anspruch 1 oder 2,
**dadurch gekennzeichnet, dass** der Zahneingriffsraum (46), welcher längs der Kettenbreitenachse (BA) von den Kettenlaschen (24, 26) eines Kettenglieds (12) und längs der Kettenlängsbahn (LB) von den beiden zwischen den Kettenlaschen (24, 26) des Kettenglieds (12) angeordneten Kettenrollen (34) eingefasst ist, in der Bezugsebene (BE) als Schnittebene einen trapezförmigen Querschnitt aufweist.

4. Fahrradkette (10) nach Anspruch 1 oder 2,
**dadurch gekennzeichnet, dass** sowohl der erste Kröpfungsbereich (54) als auch der zweite Kröpfungsbereich (58) eines Kettenglieds (12) wenigstens in der Bezugsebene (BE) näher beim schmälerem Längsendbereich (20) als beim breiterem Längsendbereich (18) des Kettenglieds gelegen sind.

5. Fahrradkette (10) nach einem der vorhergehenden Ansprüche,
**dadurch gekennzeichnet, dass** eine Bauteilanordnung aus den Kettenlaschen (24, 26) eines Kettenglieds (12) und der im schmäleren Längsendbereich (20) angeordneten Kettenrolle (34) des Kettenglieds (12) die jeweils andere Bauteilanordnung aus den Kettenlaschen (24, 26) und der Kettenrolle (34) am schmäleren Längsende (16) längs der Kettenlängsbahn (LB) zumindest in der Bezugsebene (BE) um nicht mehr als 5 % des Radius (rk) der Kettenrolle (34) überragt.

6. Fahrradkette (10) nach einem der einem der Ansprüche 2 bis 5,
**dadurch gekennzeichnet, dass** für die Kettenlaschen (24, 26) wenigstens einer Mehrzahl der Kettenglieder (12) gilt, dass ein längs der Kettenlängsbahn (LB) zu messender Längsabstand (CD) des ersten und des zweiten Kröpfungsbereiches (54, 58) einer Kettenlasche (24, 26) voneinander wenigstens in der Kettenlascheninnenfläche (40) in wenigstens einer zur Bezugsebene (BE) parallelen virtuellen Betrachtungsebene (B1, B2) größer ist als in der Bezugsebene (BE).

7. Fahrradkette (10) nach Anspruch 6,
**dadurch gekennzeichnet, dass** der Längsabstand (CD) des ersten (54) und des zweiten Kröpfungsbereiches (58) voneinander wenigstens in der Kettenlascheninnenfläche (40) in einer Mehrzahl von zur Bezugsebene (BE) parallelen virtuellen Betrachtungsebenen (B1, B2) größer ist als in der Bezugsebene (BE), wobei der Längsabstand (CD) mit zunehmender Entfernung der Betrachtungsebenen (B1, B2) von der Bezugsebene (BE) größer wird.

8. Fahrradkette (10) nach Anspruch 6 oder 7,
**dadurch gekennzeichnet, dass** wenigstens ein Kröpfungsbereich aus erstem (54) und zweitem Kröpfungsbereich (58) wenigstens in einer Kettenlascheninnenfläche (40) einer Kettenlasche (24, 26) wenigstens auf dem auf einer Seite der Bezugsebene (BE) gelegenen Kettenlaschenabschnitt wenigstens abschnittsweise gekrümmt ausgebildet ist.

9. Fahrradkette (10) nach Anspruch 8,
**dadurch gekennzeichnet, dass** beide Kröpfungsbereiche (54, 58) aus erstem (54) und zweitem Kröpfungsbereich (58) wenigstens in der Kettenlascheninnenfläche (40) wenigstens auf demselben Kettenlaschenabschnitt zwischen Bezugsebene (BE) und einem Rand (42, 44) des Kettengliedes (24, 26) wenigstens abschnittsweise gekrümmt ausgebildet sind.

10. Fahrradkette (10) nach Anspruch 8 oder 9,
**dadurch gekennzeichnet, dass** wenigstens ein abschnittsweise gekrümmter Kröpfungsbereich (54, 58) aus erstem (54) und zweitem Kröpfungsbereich (58) wenigstens in der Kettenlascheninnenfläche (40) von der Kettenrollen-Drehachse (KR) der dem abschnittsweise gekrümmten Kröpfungsbereich (54, 58) nähergelegenen Kettenrolle (34) aus betrachtet konkav gekrümmt ist und von der Kettenrollen-Drehachse (KR) der dem abschnittsweise gekrümmten Kröpfungsbereich (54, 58) ferner gelegenen Kettenrolle (34) aus betrachtet konvex gekrümmt ist.

11. Fahrradkette (10) nach einem der Ansprüche 8 bis 10,
**dadurch gekennzeichnet, dass** wenigstens ein Kröpfungsbereich (54, 58) aus erstem (54) und zweitem Kröpfungsbereich (58) wenigstens in der Kettenlascheninnenfläche (40) wenigstens abschnittsweise konzentrisch mit der dem jeweiligen Kröpfungsbereich (54, 58) nächstgelegenen Kettenrolle (34) ausgebildet ist.

12. Fahrradkette (10) nach einem der vorhergehenden Ansprüche,
**dadurch gekennzeichnet, dass** für eine Mehrzahl der Kettenglieder (12) gilt, dass jede der Kettenlaschen (24, 26) eines Kettenglieds (12) auf ihrer zur Kettenrolle (34) hinweisenden Seite einen im Erstreckungsbereich der Kettenrolle (24) gelegenen ebenen Flächenabschnitt (62, 66) in dem breiteren Längsendbereich (18) oder/und in dem schmäleren Längsendbereich (20) aufweist.

13. Fahrradkette (10) nach Anspruch 12,
**dadurch gekennzeichnet, dass** der erste Kröpfungsbereich (54) den ebenen Flächenabschnitt (62) im breiteren Längsendbereich (18) wenigstens abschnittsweise begrenzt oder/und dass der zweite Kröpfungsbereich (58) den ebenen Flächenabschnitt (66) im schmäleren Längsendbereich (20) wenigstens abschnittsweise begrenzt.

14. Fahrradkette (10) nach einem der vorhergehenden Ansprüche,
**dadurch gekennzeichnet, dass** für eine Mehrzahl der Kettenglieder (12) gilt, dass ein Stift (36) die breiteren Längsendbereiche (28) einander längs der Kettenbreitenachse (BA) gegenüberliegender Kettenlaschen (24, 26) des jeweiligen Kettenglieds (12) miteinander verbindet, wobei der Stift (36) im breiteren Längsendbereich (18) des jeweiligen Kettenglieds nicht gegenüber der jeweiligen Kettenlaschenaußenfläche (38) der einander gegenüberliegenden Kettenlaschen (24, 26) vorsteht.

15. Fahrrad-Antriebsanordnung (80), umfassend als Kettenradanordnungen (82, 86) eine Kettenblattanordnung (82) und eine mit Abstand davon angeordnete Fahrrad-Ritzelanordnung (86), wobei die Kettenblattanordnung (82) und die Fahrrad-Ritzelanordnung (86) jeweils um zueinander parallele Anordnungsachsen (AO, AQ) drehbar sind, und wobei die Fahrrad-Antriebsanordnung (80) eine Fahrradkette (10) gemäß einem der vorhergehenden Ansprüche umfasst, welche geschlossen um die Anordnungsachsen (AO, AQ) umläuft und zur Übertragung von Drehmoment von der Kettenblattanordnung (82) zur Fahrrad-Ritzelanordnung (86) sich mit jeder dieser Kettenradanordnungen (82, 86) in formschlüssigem Eingriff befindet,
**dadurch gekennzeichnet, dass** wenigstens eine Kettenradanordnung (82, 86) aus der Kettenblattanordnung (82) und der Fahrrad-Ritzelanordnung (86 als eine Schalt-Kettenradanordnung (86) wenigstens zwei koaxiale Kettenräder (R11, R12) mit unterschiedlichen Kettenrad-Zähnezahlen aufweist, wobei die Fahrrad-Antriebsanordnung (80) einen zumindest auch längs der parallelen Anordnungsachsen (AO, AQ) verlagerbaren Umwerfer (92) aufweist, welcher von der Fahrradkette (12) durchlaufen wird und welcher dazu ausgebildet ist, durch Verlagerung längs der Anordnungsachse (AO) der Schalt-Kettenradanordnung (86) die Fahrradkette von einem (R11) der wenigstens zwei koaxialen Kettenräder (R11, R12), mit welchem die Fahrradkette (10) in Eingriff ist, auf wenigstens ein anderes (R12) der wenigstens zwei koaxialen Kettenräder (R11, R12) umzulegen, um das andere Kettenrad (R12) in Eingriff mit der Fahrradkette (10) zu bringen.

16. Fahrrad-Antriebsanordnung (80) nach Anspruch 15,
**dadurch gekennzeichnet, dass** die koaxialen Kettenräder (R11, R12) der Schalt-Kettenradanordnung (86) in einer Folgerichtung (FR) mit absteigenden Kettenrad-Zähnezahlen angeordnet sind, wobei zur Ausführung eines ersten Schaltvorgangs von einem Start-Kettenrad (R11) mit niedrigerer Zähnezahl zu einem entgegen der Folgerichtung (FR) benachbarten Ziel-Kettenrad (R12) mit höherer Zähnezahl an dem Ziel-Kettenrad (R12) wenigstens ein Zahn (94) abweichend von einer übereinstimmenden Zahngestalt einer Mehrzahl von Zähnen (50) des Ziel-Kettenrads (R12) als Fangzahn (94) für einen ersten Schaltvorgang ausgebildet ist.

17. Fahrrad-Antriebsanordnung (80) nach Anspruch 16,
**dadurch gekennzeichnet, dass** ein Umlegen der Fahrradkette (10) vom Start-Kettenrad (R11) mit niedriger Kettenrad-Zähnezahl auf das benachbarte Ziel-Kettenrad (R12) mit höherer Kettenrad-Zähnezahl nur längs einer ersten Schaltgasse (101) erfolgt, wobei die Anzahl an ersten Schaltgassen (101) am Ziel-Kettenrad (R12) kleiner oder gleich der Zähnezahldifferenz zwischen Start-Kettenrad (R11) und Ziel-Kettenrad (R12) ist.

18. Fahrrad-Antriebsanordnung (80) nach Anspruch 17,
**dadurch gekennzeichnet, dass** jede erste Schaltgasse (101) genau einen Fangzahn (94) aufweist.

19. Fahrrad-Antriebsanordnung (80) nach einem der Ansprüche 15 bis 18, **dadurch gekennzeichnet, dass** der Fangzahn (94) auf seiner vom Start-Kettenrad (R11) wegweisenden Zahnseite eine Fase (96) aufweist, welche derart geneigt ausgebildet ist, dass deren Normalenvektor (NV) eine Umfangs-Vektorkomponente (NVu) in Richtung von der Lastflanke (94f) des Zahns (94) weg, eine axiale Vektorkomponente (NVa) parallel zur Anordnungsachse (AO) der Schalt-Kettenradanordnung (86) in Richtung vom Start-Kettenrad (R11) weg und eine radiale Vektorkomponente (NVr) in Richtung von der Anordnungsachse (AO) der Schalt-Kettenradanordnung (86) weg aufweist.

20. Fahrrad-Antriebsanordnung (80) nach einem der Ansprüche 15 bis 19, **dadurch gekennzeichnet, dass** die koaxialen Kettenräder (R11, R12) der Schalt-Kettenradanordnung (86) in einer Folgerichtung (FR) mit absteigenden Kettenrad-Zähnezahlen angeordnet sind, wobei zur Ausführung eines zweiten Schaltvorgangs von einem Start-Kettenrad (R12) mit höherer Zähnezahl zu einem in Folgerichtung (FR) benachbarten Ziel-Kettenrad (R11) mit niedrigerer Zähnezahl an dem Start-Kettenrad (R12) wenigstens ein Zahn (96) abweichend von einer übereinstimmenden Zahngestalt einer Mehrzahl von Zähnen (50) des Start-Kettenrads (R12) als Weichenzahn (96) für den zweiten Schaltvorgang ausgebildet ist.

21. Fahrrad-Antriebsanordnung (80) nach Anspruch 20,
**dadurch gekennzeichnet, dass** ein Umlegen der Fahrradkette (10) vom Start-Kettenrad (R12) mit höherer Kettenrad-Zähnezahl auf das benachbarte Ziel-Kettenrad (R11) mit niedrigerer Kettenrad-Zähnezahl nur längs einer zweiten Schaltgasse (102) erfolgt, wobei die Anzahl an zweiten Schaltgassen (102) am Start-Kettenrad (R12) kleiner oder gleich der Zähnezahldifferenz zwischen Start-Kettenrad (R11) und Ziel-Kettenrad (R12) ist.

22. Fahrrad-Antriebsanordnung (80) nach Anspruch 21,
**dadurch gekennzeichnet, dass** jede zweite Schaltgasse (102) genau einen Weichenzahn (96) aufweist.

23. Fahrrad-Antriebsanordnung (80) nach einem der Ansprüche 15 bis 22, **dadurch gekennzeichnet, dass** bei Bewegung der Fahrradkette (10) in einem zur Vorwärtsfahrt antreibenden Umlaufsinn das schmälere Längsende (20) eines Kettenglieds (12) vorauseilt und das breitere Längsende (18) nachläuft.
